# EUROPEAN PATENT SPECIFICATION

(11) **EP 1 102 539 B1**
(45) Date of publication and mention of the grant of the patent: **07.04.2004**
(21) Application number: 99934956.6
(22) Date of filing: 23.07.1999
(51) Int. Cl.: A01N 63/04, C12N 1/14, C07H 21/04

(54) **PROTECTION OF PLANTS USING RHIZOCTONIA**
PFLANZENSCHUTZ DURCH RHIZOCTONIA
PROTECTION DE VEGETAUX AU MOYEN DE RHIZOCTONIA

(30) Priority: 24.07.1998 GB 9816265
(43) Date of publication of application: 30.05.2001
(73) Proprietor: Instituto Tecnico Agronomico Provincial, S.A., 02080 Albacete (ES); Ruffles, Graham Keith, London WC2A 3LS (GB)
(72) Inventor: RUBIO SUSAN, Victor, E-28008 Madrid (ES); SALAZAR TORRES, Oscar, E-28047 Madrid (ES); JULIAN ESQUIVIAS, Maria, E-28100 Alcobendas (ES); GONZALES GARCIA, Vicente, E-28022 Madrid (ES); GOMEZ-ACEBO GULLON, Eduardo, E-28224 Pozuelo (ES); MUNOZ GOMEZ, Ramona, E-02200 Casas Ibanez (ES); LOPEZ CORCOLES, Horacio, E-02006 Albacete (ES)
(74) Representative: Ruffles, Graham Keith
(86) International application number: PCT/GB1999/002406
(87) International publication number: WO 2000/004779

(56) References cited:
- M. BOYSEN, M. BORJA, C. DEL MORAL, O. SALAZAR & V. RUBIO: "Identification at strain level of Rhizoctonia solani AG4 isolates by direct sequence of asymmetric PCR products of the ITS regions." CURR. GENET., vol. 29, 1996, pages 174-181, XP002124045 cited in the application
- S. KUNINAGA, T. NATSUAKI, T. TAKEUCHI & R. YOKOSAWA: "Sequence variation of the rDNA ITS regions within and between anastomosis groups in Rhizoctonia solani." CURR. GENET., vol. 32, 1997, pages 237-243, XP002124046 cited in the application
- J. KEIJER, P. M. HOUTERMAN, A. M. DULLEMANS & M. G. KORSMAN: "Heterogeneity in electrophoretic karyotype within and between anastomosis groups of Rhizoctonia solani." MYCOL. RES., vol. 100, no. 7, 1996, pages 789-797, XP002124047 cited in the application
- Z. L. LIU, L. L. DOMIER & J. B. SINCLAIR: "Polymorphism of genes coding for nuclear 18S rRNA indicates genetic distinctiveness of AG 10 from other groups in the Rhizoctonia solani species complex." APPL. ENVIRONM. MICROBIOL., vol. 61, no. 7, 1995, pages 2659-2664, XP002124048
- Z. L. LIU & J. B. SINCLAIR: "Genetic diversity of Rhizoctonia solani AG 2." PHYTOPATHOLOGY, vol. 82, no. 7, 1992, pages 778-787, XP002124049
- B. SNEH: "Use of non-pathogenic or hypovirulent fungal strains to protect plants against closely related fungal pathogens." BIOTECH. ADV., vol. 16, no. 1, 1998, pages 1-32, XP004099135 cited in the application
- L. J. HERR: "Biological control of Rhizoctonia solani by binucleate Rhizoctonia spp. and hypovirulent R. solani agents." CROP PROT., vol. 14, no. 3, 1995, pages 179-186, XP002124050 cited in the application
- GONZALEZ V. ET AL: 'Ceratobasidium Albasitensis' PERSOONIA vol. 17, no. 4, 2002, pages 601 - 614

## Description

The present invention describes a new group of binucleate *Rhizoctonia* suited for use in plant protection.

### Background Of The Invention

The complex of species *Rhizoctonia* represent ubiquitous and variable fungi that inhabit soil. Presently there are about 120 species or varieties. A major taxonomic feature is the presence of either multinucleate or binucleate cells in young vegetative hyphae. The multinucleate *Rhizoctonia solani* presents the teleomorph *Thanatephorus cucumeris.* while the binucleate *Rhizoctonia* species include strains presenting a *Ceratobasidium* species teleomorph. Many different types of plant pathogenic *Rhizocronia* cause economically significant diseases on most of the important crops worldwide.

Thus, *Rhizoctonia* diseases in field, vegetable, ornamental. nursery and greenhouse crops cause large losses to growers, which result in increased costs to consumers. Strains of *Rhizortonia solani* Kühn, and certain other *Rhizoctonia* species are capable of attacking a wide range of hosts, causing seed decay. damping-off of seedlings, stem cankers, root rots. fruit decays and foliage diseases. Moreover, *Rhizoctonia solani* occurs worldwide in most cultivated soils and is indigenous in many uncultivated areas.

At present, *Rhizoctonia* diseases on some hosts are only treatable with fungicides. For small acreages of high valuable crops, such as greenhouse and nursery crops, pathogen eradication by heat treatment or chemical fumigation is useful, but re-infestation often presents renewed problems prior to harvest. Fungicides pose risk to health, water quality and other aspects of the environment. Additionally some fungicides vary in effectiveness among and within anastomosis groups (AG) of *Rhizoctonia solani,* suggesting that their extensive use could result in development of resistance as occurs within other plant pathogen populations.

Despite research on biological control dating back to the early 1930s. reliable. economical biocontrol of diseases caused by *Rhizoctonia solani* are not generally available on a commercial scale. New approaches for detection and use of novel agents and development of broadly applicable biological control management systems are needed. specially for field crops. During the past 10 years, new sources of agents from within the diverse groups of binucleate *Rhizoctonia* spp. and hypovirulent *Rhizoctonia solani* isolates have been demonstrated to be effective in biocontrol of a range of host *- Rhizoctonia solani* disease combinations. Tested collections of binucleate *Rhizoctonia* spp. and hypovirulent *Rhizoctonia solani* differ markedly in effectiveness as biocontrol agents for diseases caused by *Rhizoctonia solani*.

In the book *Rhizoctonia* Species: Taxonomy. Molecular Biology. Ecology. Pathology and Disease Control, edited by Sneh, Jabaji-Hare and Dijst, published by Kluwer Academic Publishers, Dordrecht in 1996, there is a Chapter VI.B.4 by B. Sneh on Nonpathogenic Isolates of *Rhizoctonia* (np-R) spp. and Their Role in Biological Control, with a survey of the literature at that time. A subsequent review by B. Sneh is in Biotechnology Advances. 16: 1-32 (1998), on Use of Non-pathogenic or Hypovirulent Fungal Strains to Protect Plants against Closely Related Fungal Pathogens.

The use of non-pathogenic *Rhizoctonia* strains as biocontrol agents of crop plant diseases has a great potential to increase crop yields but there are some problems in identifying candidate strains. Indeed, more generally the classification of *Rhizoctonia* is replete with difficulties.

Various methods have been employed to classify isolates of *Rhizoctonia*, relying for example on their ecology, enzymology, host range specificity, morphology and hyphal anastomosis. The morphological characteristics of anamorph and teleomorph of binucleate species are very similar, and reliable identification is often difficult.

The identification at strain level of *Rhizoctonia solani* AG4 isolates by direct sequence of asymmetric products of the ITS regions is reported in Curr Genet (1996): 29: 174 to 181. The relatedness of nine isolates of *Rhizoctonia solani*, belonging to anastomosis group (AG) 4, and one isolate of AG1, was determined by comparative sequence analysis based on direct sequencing of PCR-amplified ribosomal DNA [the internal transcribed spacer (ITS) region and the 5.8s ribosomal DNA]. The 5.8s ribosomal DNA was completely conserved, but both ITS regions showed variation among strains. AG1 was an outgroup based on anastomosis ability and RFLP analyses. Phylogenetic analyses based on the ITS sequences suggested that the analyzed AG4 strains can be divided into three groups that correlated with habitat and virulence.

Sequence variation of the rDNA ITS regions within and between anastomosis groups in *Rhizoctonia solani* is described in Curr Genet (1997) 32: 237 to 243. The authors report that sequence analysis of the rDNA region containing the internal transcribed spacer (ITS) regions and the 5.8s rDNA coding sequence was used to evaluate the genetic diversity of 45 isolates. They report that their results suggest that such sequence analysis may be a valuable tool for identifying AG subgroups of biological significance.

In *Rhizoctonia solani* AG3, the ITS sequences are almost identical in more than 30 isolates we have studied. Therefore such ITS sequence are not suitable for identification in this situation.

Until now there was only one molecular work dealing with binucleate *Rhizoctonia*, the work described by Cubeta *et al*. In this work. in which restriction analysis of the amplified 25 S ribosomal gene was performed to differentiate among anastomosis groups of binucleate *Rhizoctonia*, it was not possible to differentiate between many of the AGs. For instance, AG C, AG F, AG H, AG I and AG J are grouped together and cannot be differentiated, and the same is true for AG A, AG Bo, AG L, AG O, AG K and AG E. When this methodology of rDNA-RFLP was applied to R. *solani*, a considerable molecular variation among and within anastomosis and intraspecific groups was found.

There is a need for a procedure to select isolates or cultures of *Rhizoctonia* which can protect plants against pathogenic fungi.

### Summary Of The Invention

The present invention provides for the protection of plants against pathogenic fungi by the use of binucleate *Rhizocronia* selected through the molecular detection of certain ITS ribosomal sequences, the protective strains being members of a phylogenetically differentiated cluster.

Thus, the present invention describes a new group of binucleate *Rhizoctonia* able to protect different kind of plants, like tomatoes, wheat, rape, alfalfa, sugar beet. carrot. garlic. onions. grass, pine trees, and others, from infections produced by different pathogenic fungi among them *Fusarium*, *Penicillium* and pathogenic *Rhizoctonia*, and the appropriated methodology for the molecular identification of the new group, its detection based on probes specially designed and its practical application for the protection of crops. More generally, the present invention is of use for protection in a field crop, water bed crop. container-grown crop, vegetable or fruit crop, ornamental crop, nursery crop, garden crop. forest crop, or greenhouse crop.

Thus the present invention uses the ITS data, especially the ITS1 data. to distinguish isolates and in particular to identify pathogenic and protective isolates for each plant belonging to the binucleate group.

The invention also provides specific PCR primers for the ITS molecular analysis of pathogenic and protective strains of *Rhizoctonia*, and which serve to characterise *Rhizoctonia* strains in accordance with this invention.

### Preferred Embodiments

In the present invention, the ITS sequence is employed as a marker to distinguish strains and correspondingly classify the pathogenicity of isolates of *Rhizoctonia*. The ITS information enables phylogenetic location of protective isolates, and design of specific primers for the identification of new isolates. In particular, strains of this invention include those obtained by PCR using primers to at least one of the, following sequences SEQ ID NO: 7 to SEQ ID NO: 14.

Particularly preferred strains include those with homology to one or more of SEQ ID NO: 7 to SEQ ID NO: 14. Strict homology with these sequences is not ordinarily necessary, and variation by substitution, insertion and/or deletion of say 1, 2 or 3 bases is permitted.

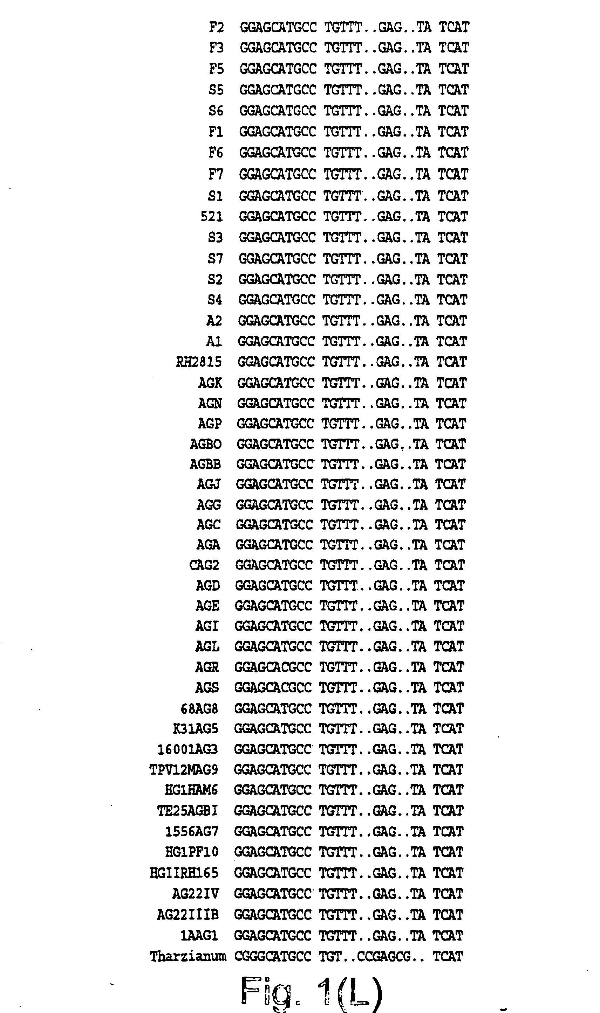

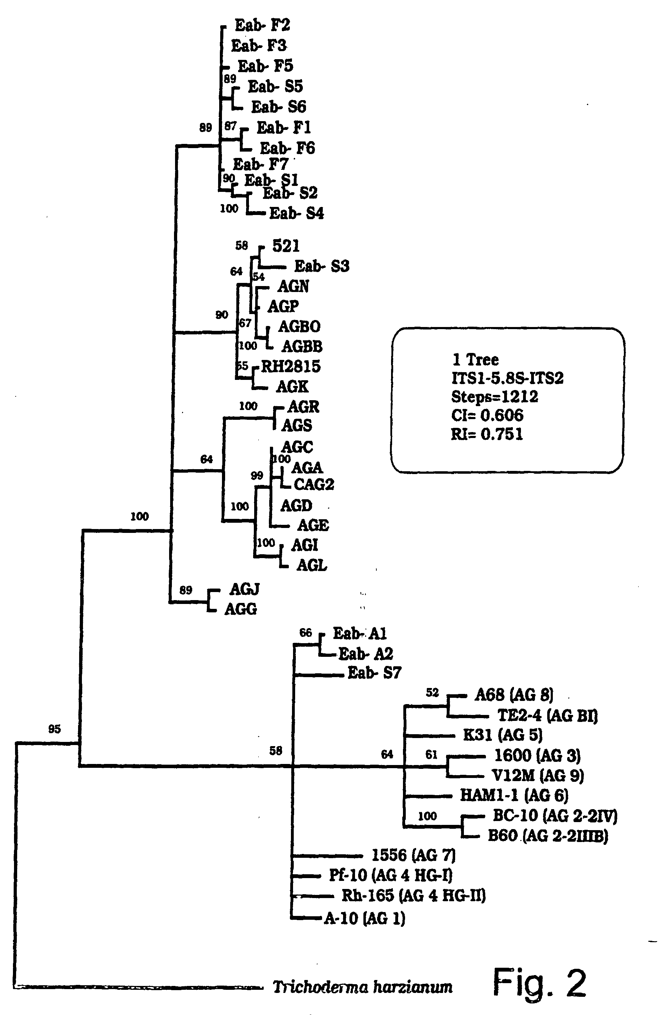

Suitable isolated strains of this invention include the deposited strains *Rhizoctonia* sp. CECT 20320, *Rhizoctonia* sp. CECT 20321, *Rhizoctonia* sp. CECT 20322, *Rhizoctonia* sp. CECT 20323, and *Rhizoctonia* sp. CECT 20324. Other suitable strains include strains which cluster with these deposited strains. when using the methodology herein. More generally, preferred isolates are those which cluster with the isolates of this invention within the clusters shown in Figure 2.

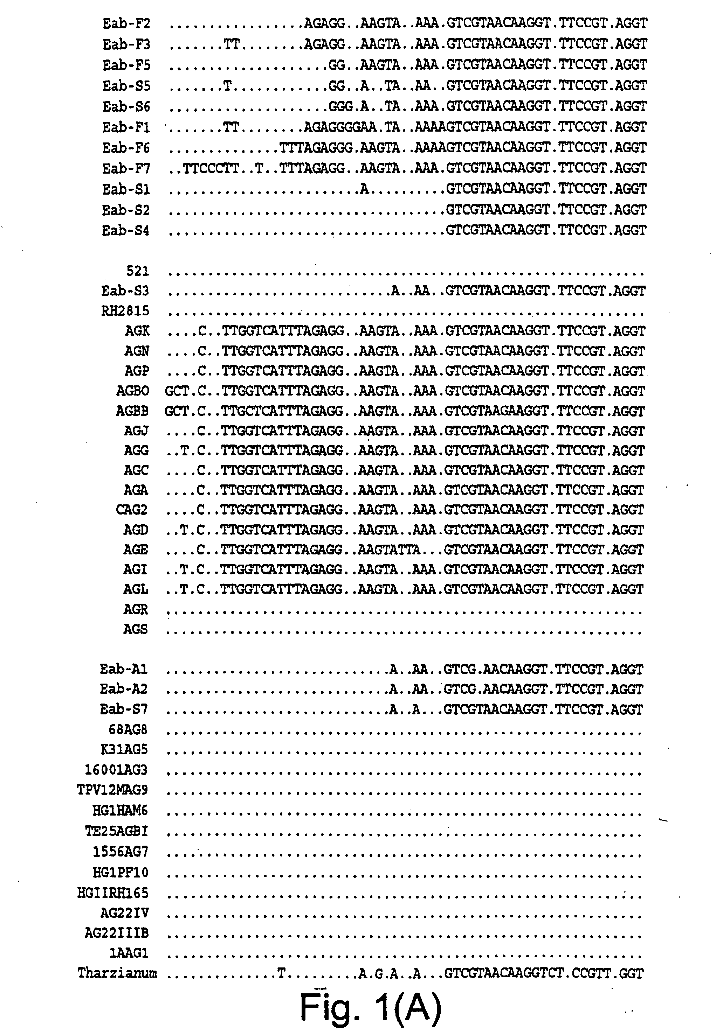

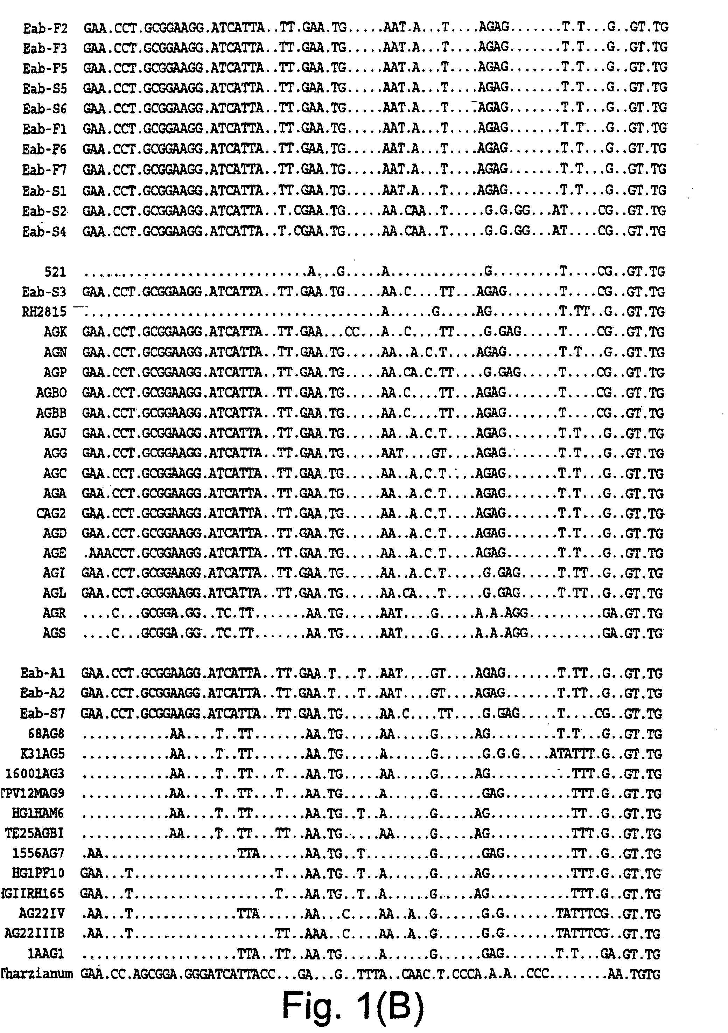

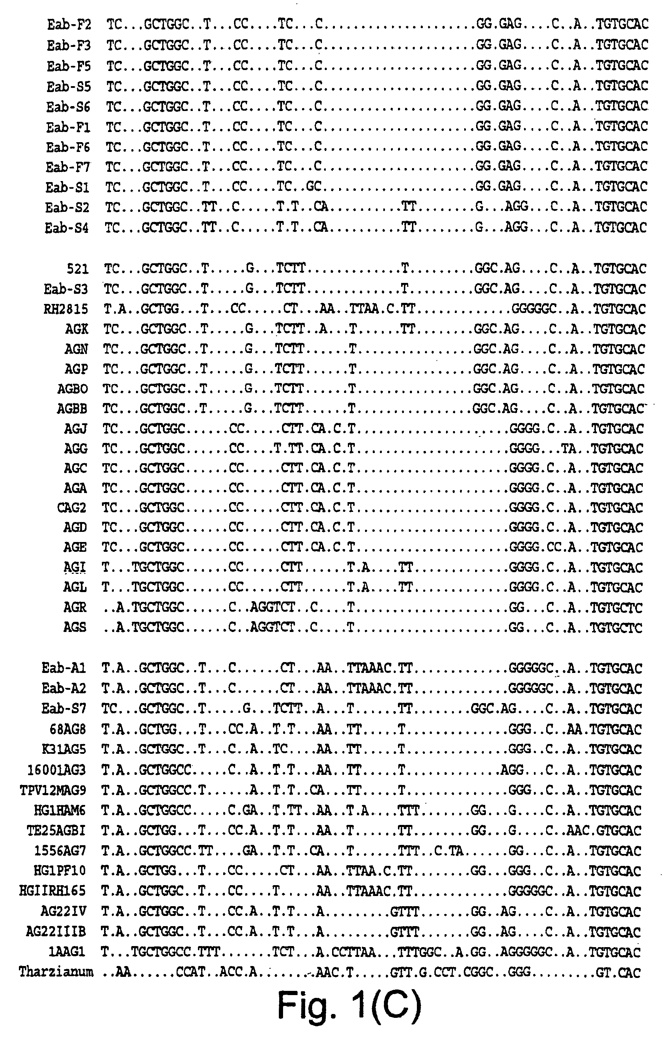

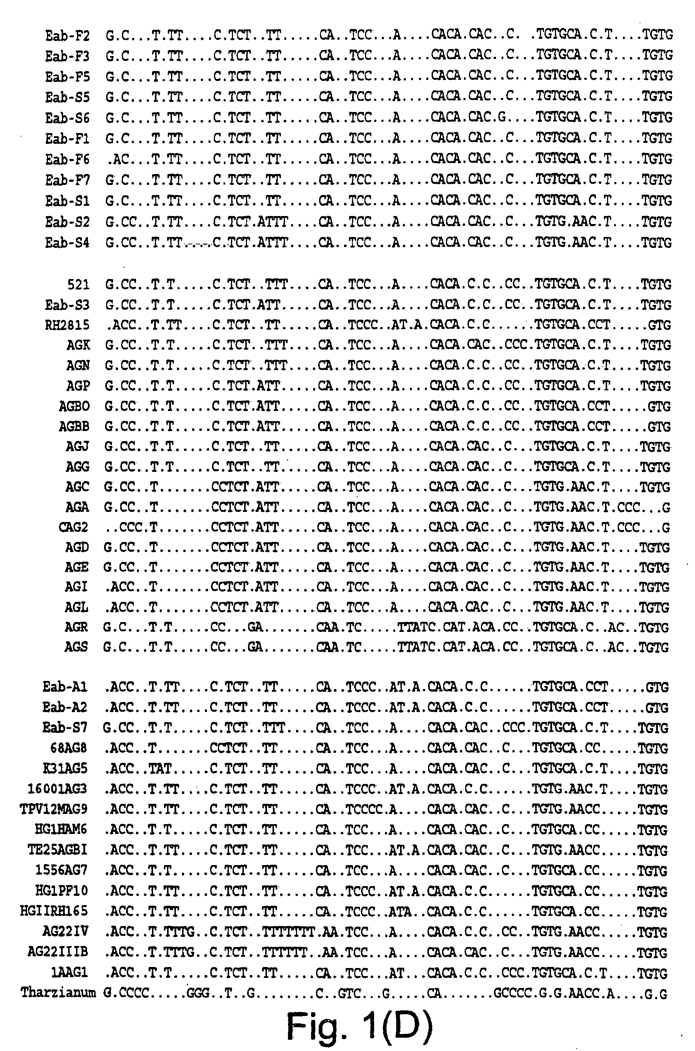

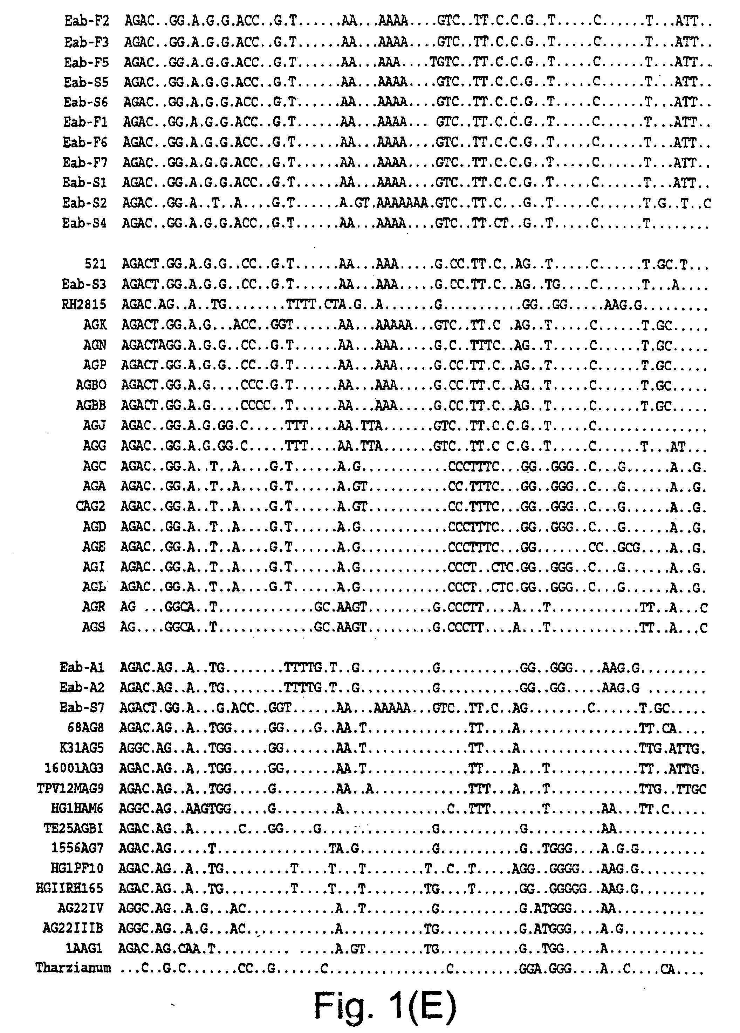

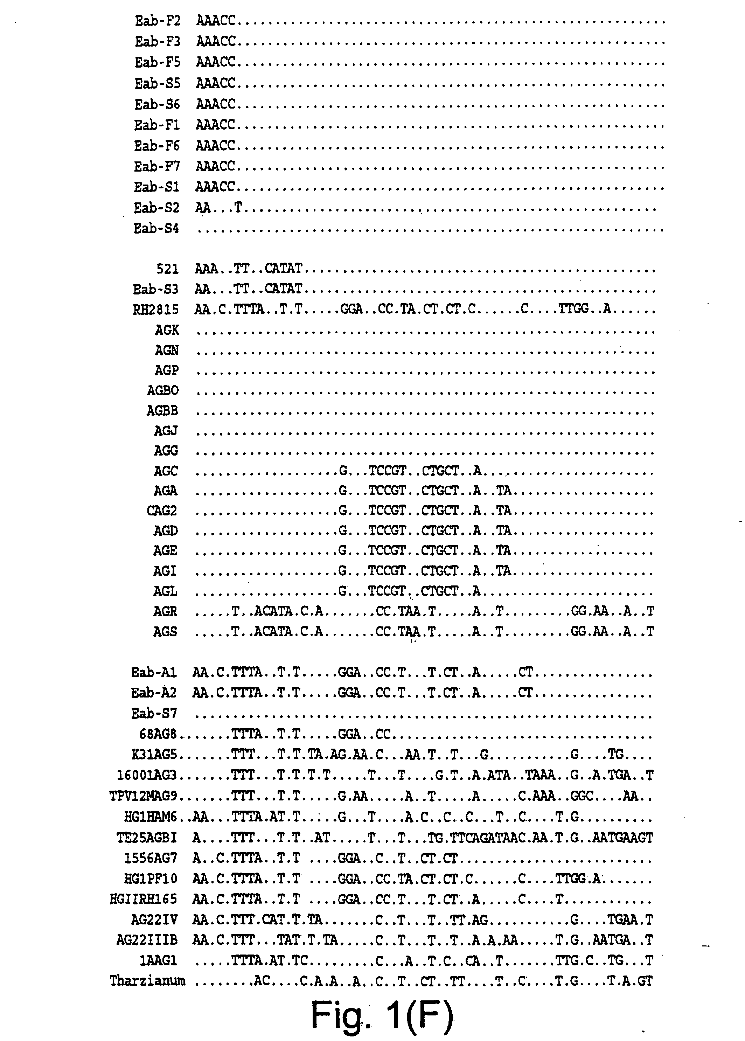

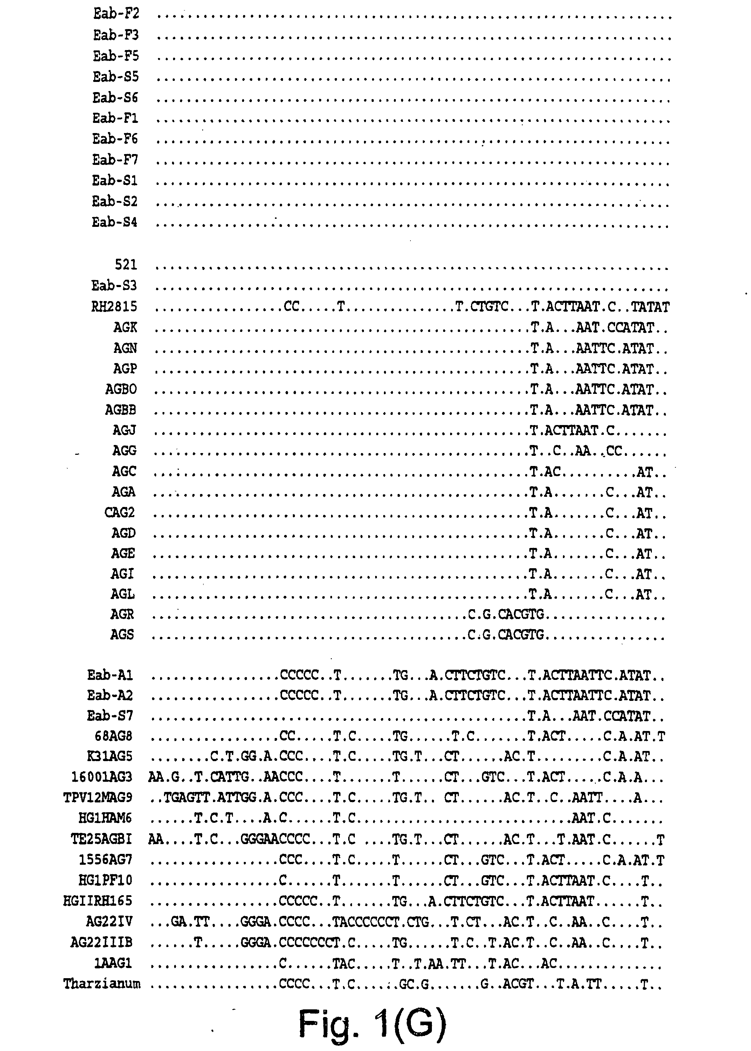

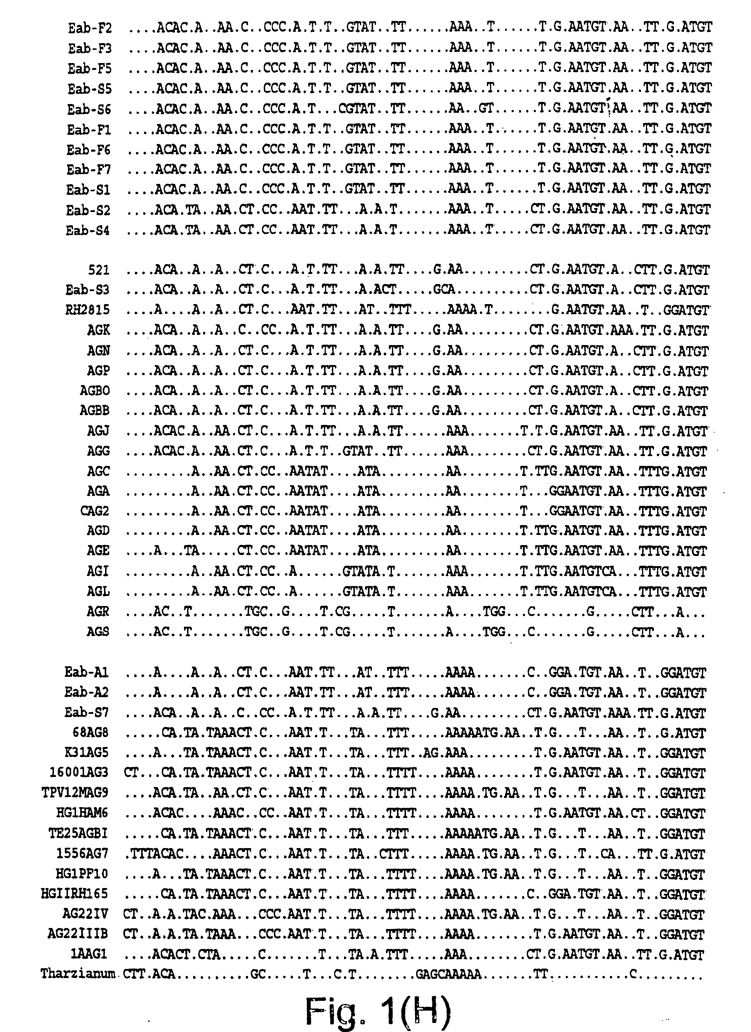

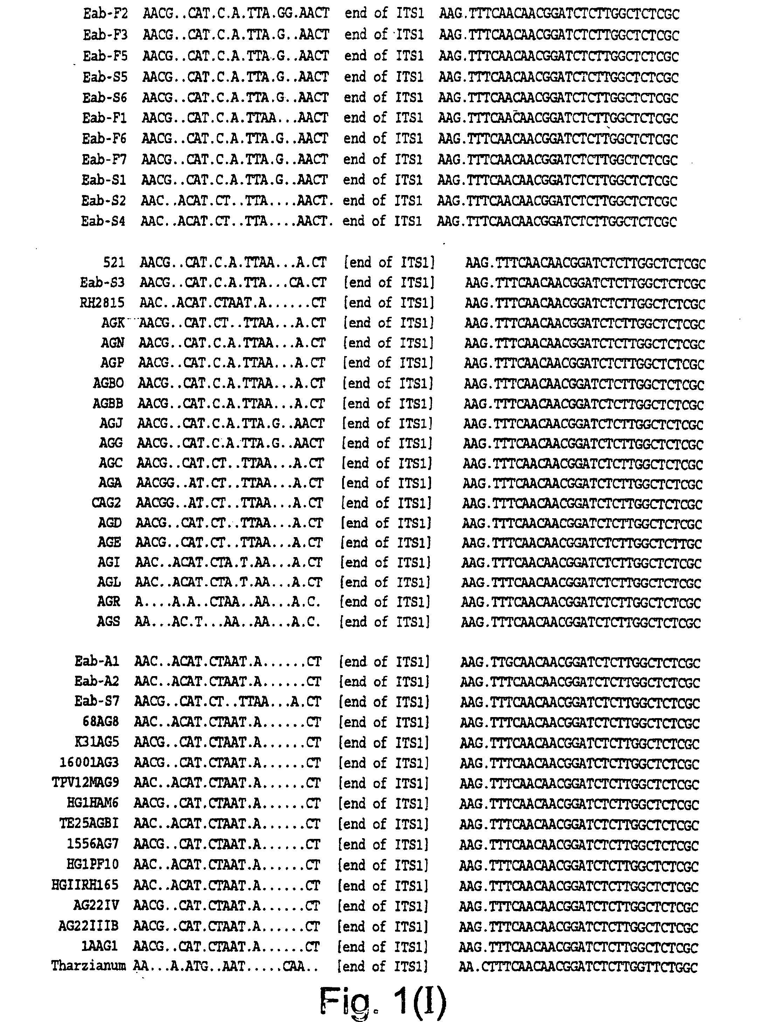

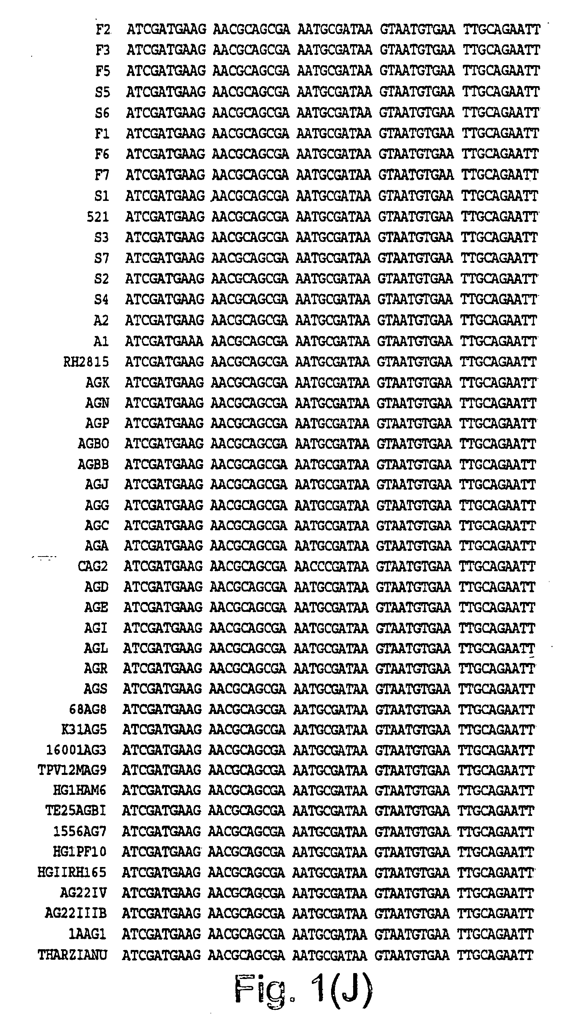

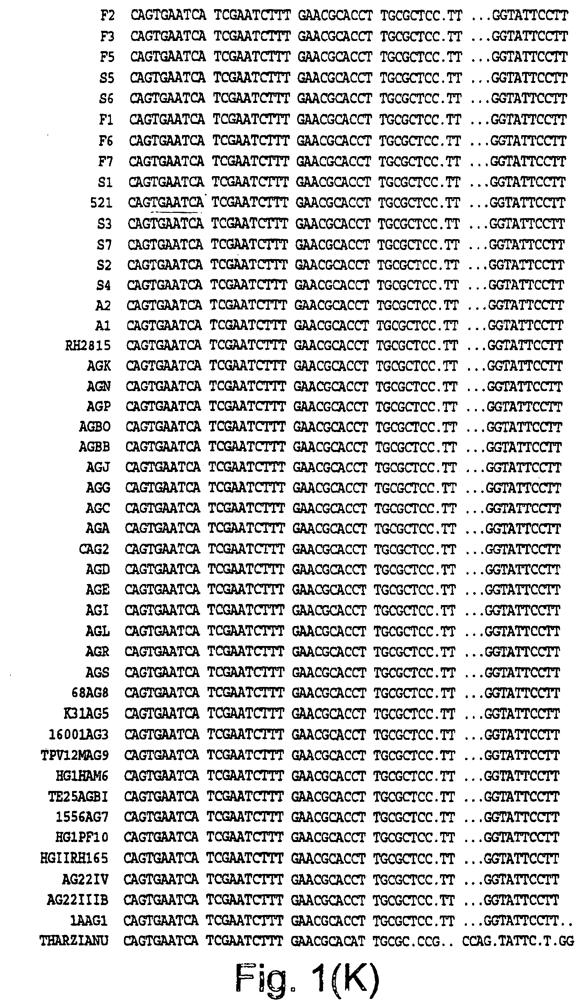

Isolated strains of this invention obtained by us have the ITS1 sequences included in Figure 1, as follows: ID SEQ:NO 15 to ID SEQ:ID 28.

The present invention extends to any strains which have such an ITS1 sequence or at least 90% homology with such a sequence. At least 95% homology is preferred. Moreover, the invention includes strains which include fragments of any one of the sequences SEQ ID NO: 15 to 28. Such fragments may comprise at least 25 or more nucleic acids, and may be fragments having at least 90%, more preferably at least 95 or 100% homology. More generally, the present invention employs such fragments as signature sequences to identify the strains of the present invention. By their nature, signature sequences serve to uniquely identify the strains of this invention. Further preferred strains include those which have such an ITS2 sequence similar to that in the isolates of this invention, or at least 90% homology with such a sequence. At least 95% homology is preferred.

The protective strain can be utilised in a form of powder obtained after fermentation of the micro-organisms with subsequent drying of the filtered broth, applied to the seed before seeding or applied to the soil before seeding or both, and will preclude the growth of the pathogen *Rhizoctonia* protecting the plant from the infection. Thus, for example, harvested mycelium from a protective isolate in accordance with this invention can be applied direct to seeds, bulbs or other germinatable form. or applied to the soil or other growth medium, pre- or post-emergence. Suitable dosing levels may be found by experiment, and will vary depending on the mode of administration and the crop to be protected. among other factors. Guidance is to be found in the examples of this invention when taken with the accompanying figures. The present invention further provides concentrates of the mycelium ready for admixing with diluent to form a mix suited for application. The concentrates can be liquid or solid, and suitably contain up to 75% mycelium. typically 10 to 50% mycelium. The strains of this invention are primarily intended for large scale agricultural use. but may also be employed by smaller enterprises and by the public.

Examples of crops which might be protected by the present invention include tomato. pepper. cucumber, lettuce, radish. parsley and other herbs. bean. potato. sugar beet, carrot. garlic, onions, grass, wheat, rape, alfalfa. pine and other trees. as well as flowers.

### Summary Of Figures

Figure 1. Sequence data for isolates of this invention, aligned with other isolates for comparison. The sequence extends beyond the end of the ITS1 region to the 5.8s region.
Figure 2. Phylogenetic tree generated from a branch and bound algorithm in PAUP 3.1.1, using CLUSTALW for alignment. The tree was rooted with the ITS sequence of a Trichoderma harzianum isolate. The numbers above intemodes indicate the percentage corresponding to the frequency for which a given branch appeared in a 1000 bootstrap replicates. Horizontal lengths represent genetic distances.

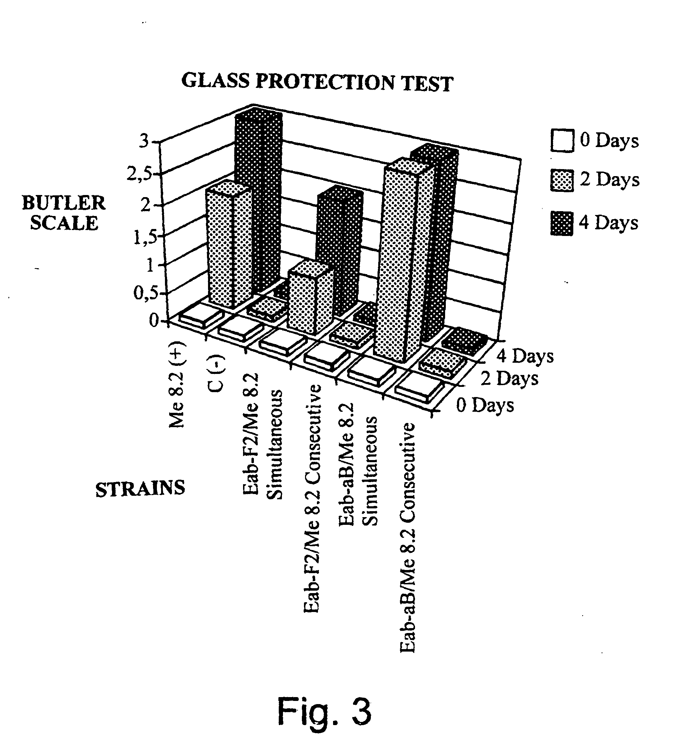

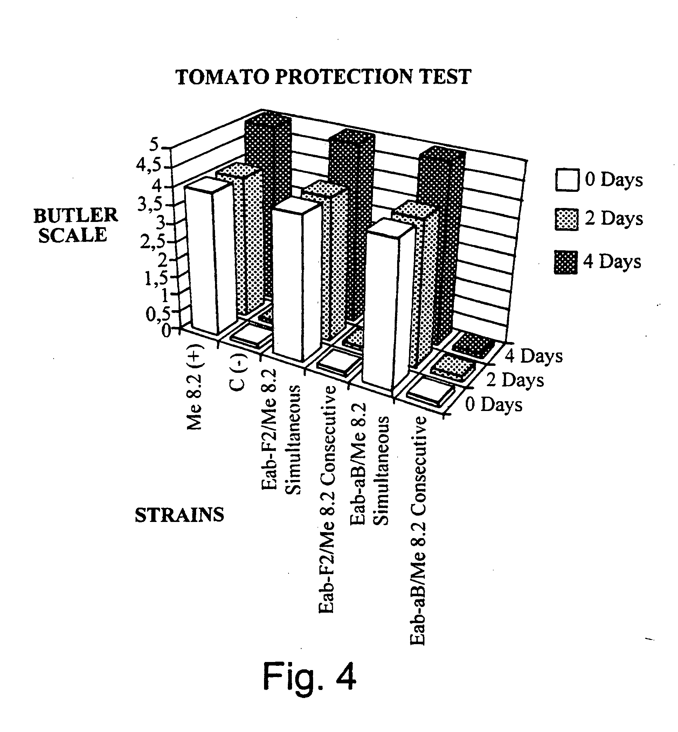

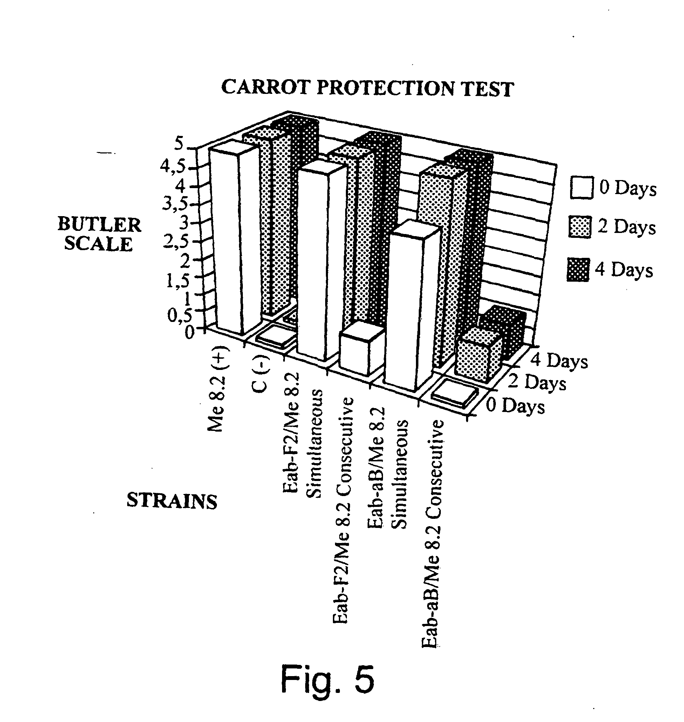

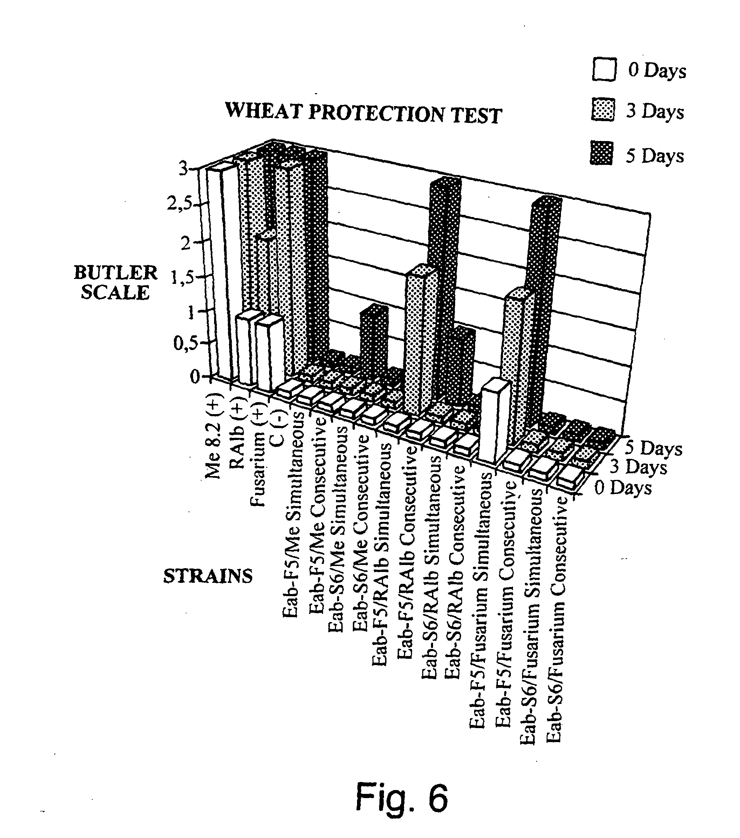

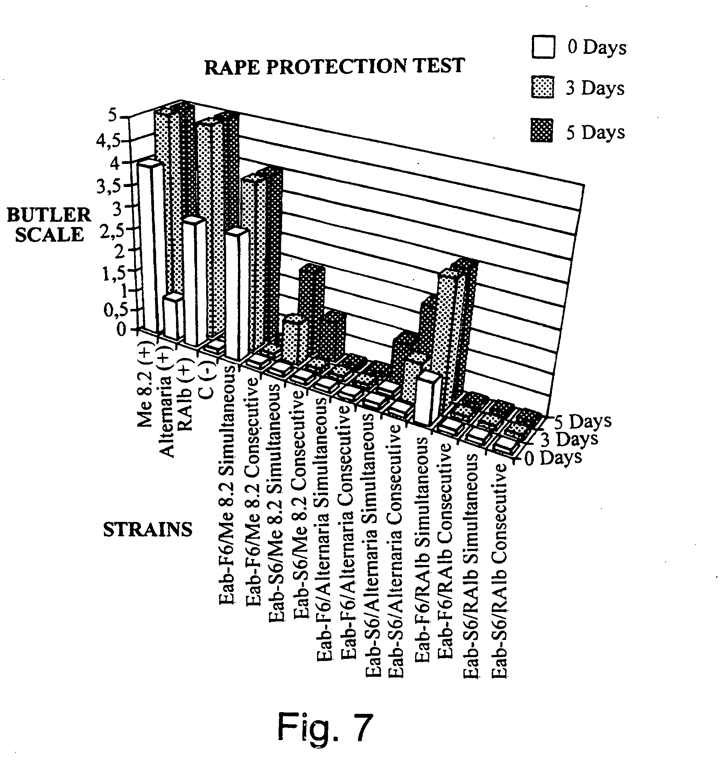

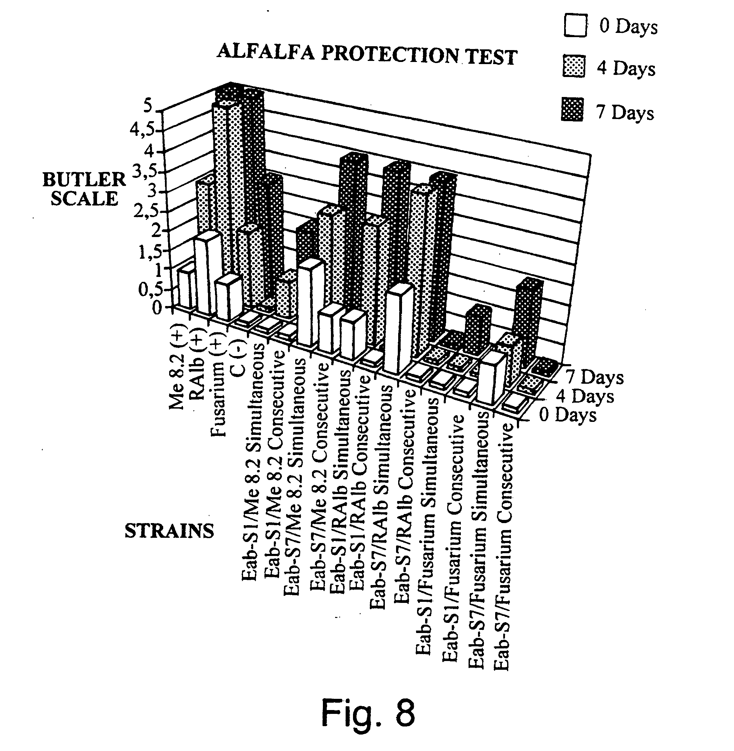

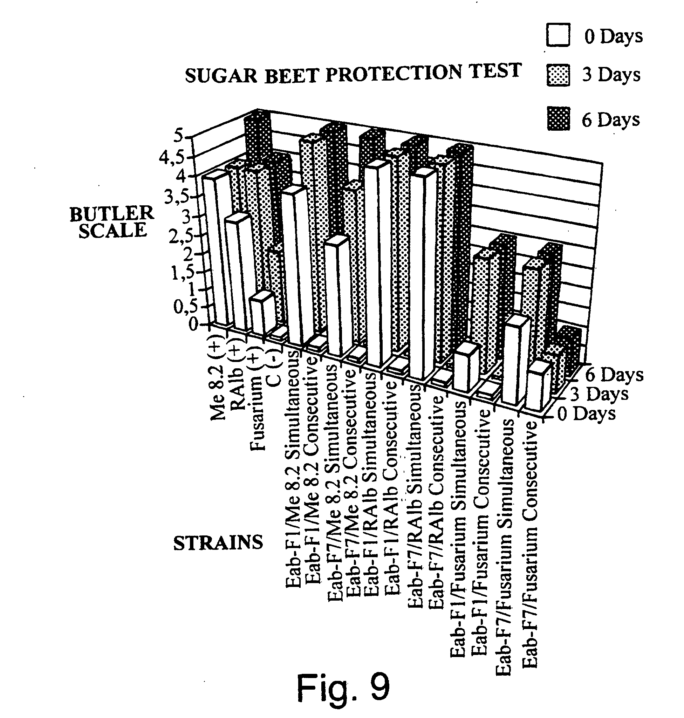

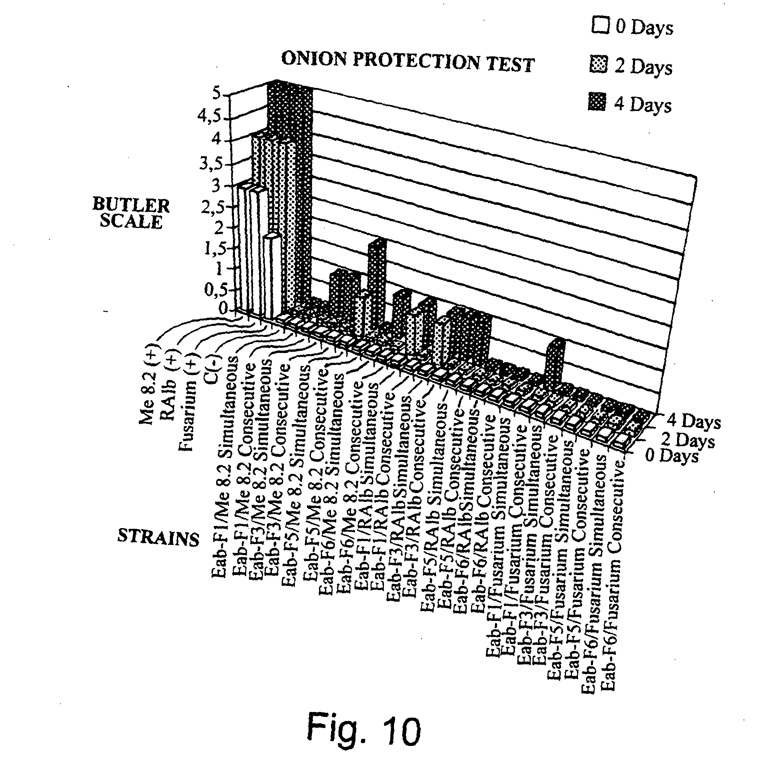

Figures 3 to 10. The results for experiments in the protection of grass. tomato, carrot, wheat, rape, alfalfa, sugar beet and onion are plotted as histograms. The protective effect is expressed as a coefficient on the Butler scale.

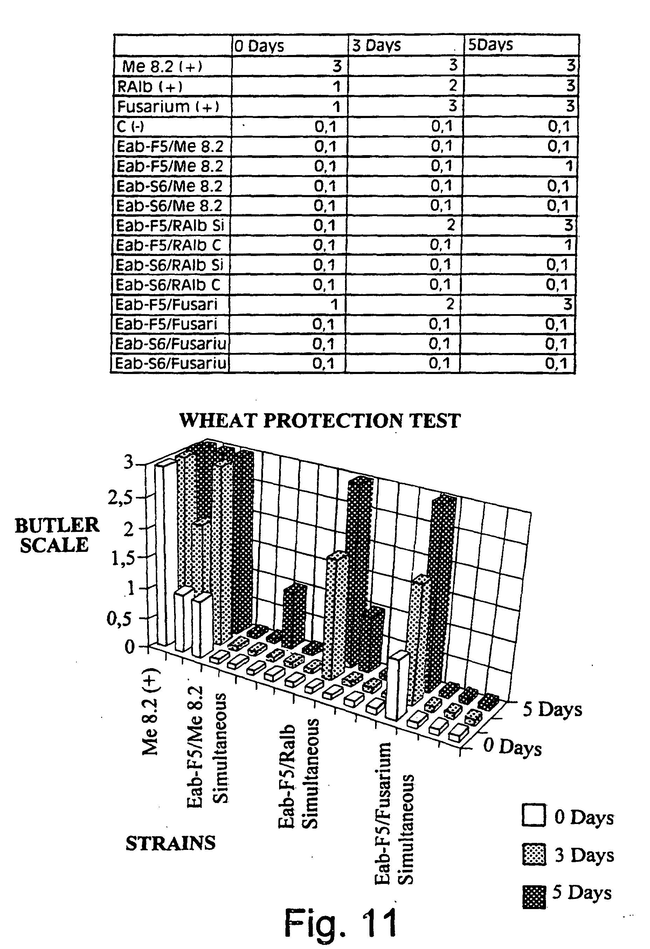

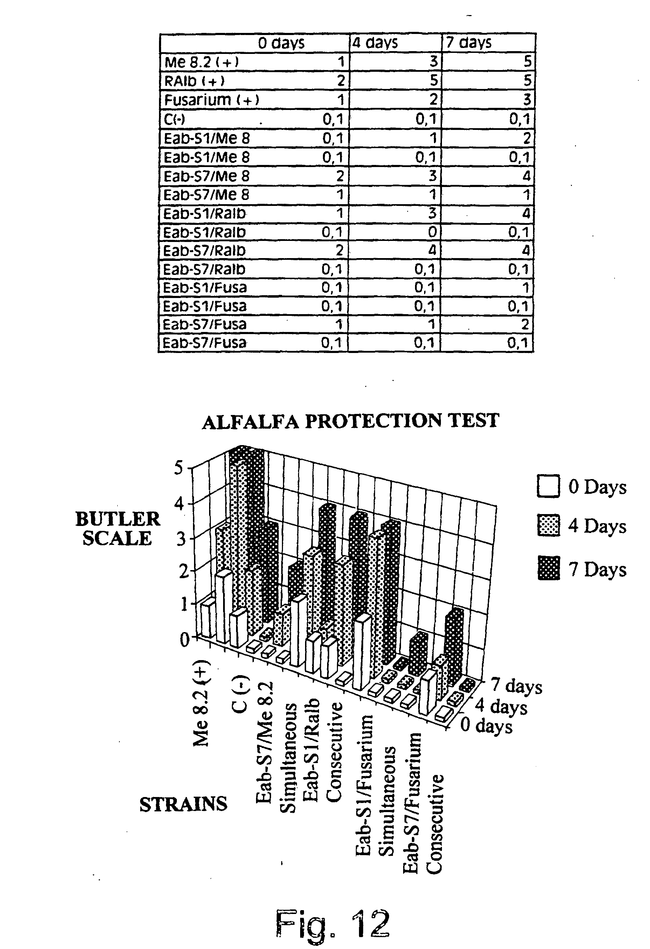

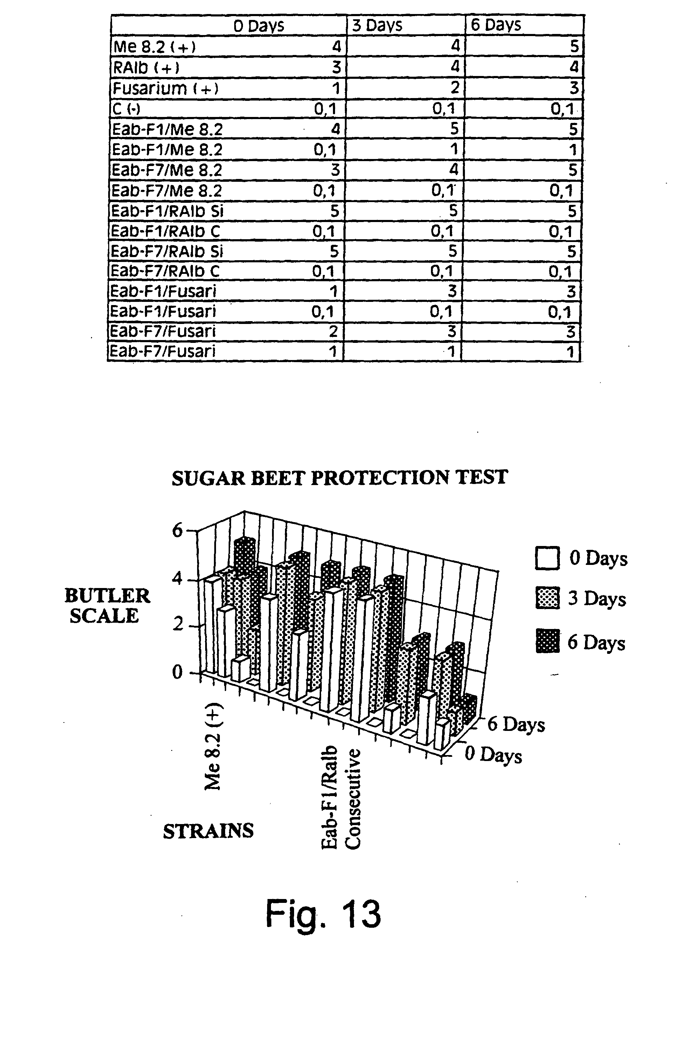

Figures 11 to 13. The results for the wheat, alfalfa and sugar beet tests, plotted as histograms.

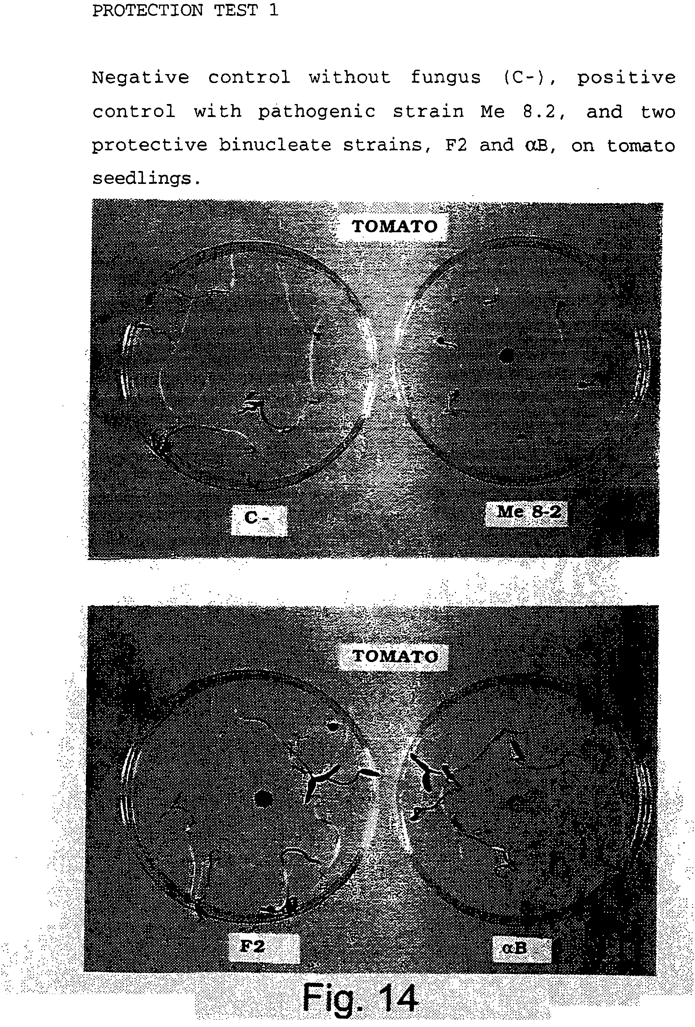

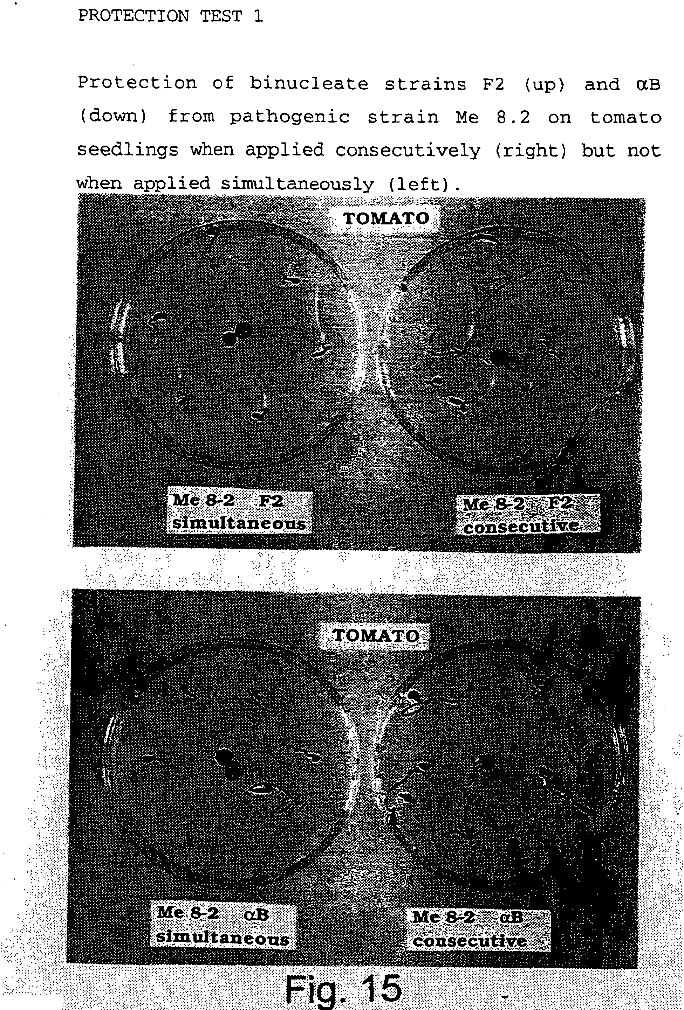

Figures 14 and 15. Protection test 1.

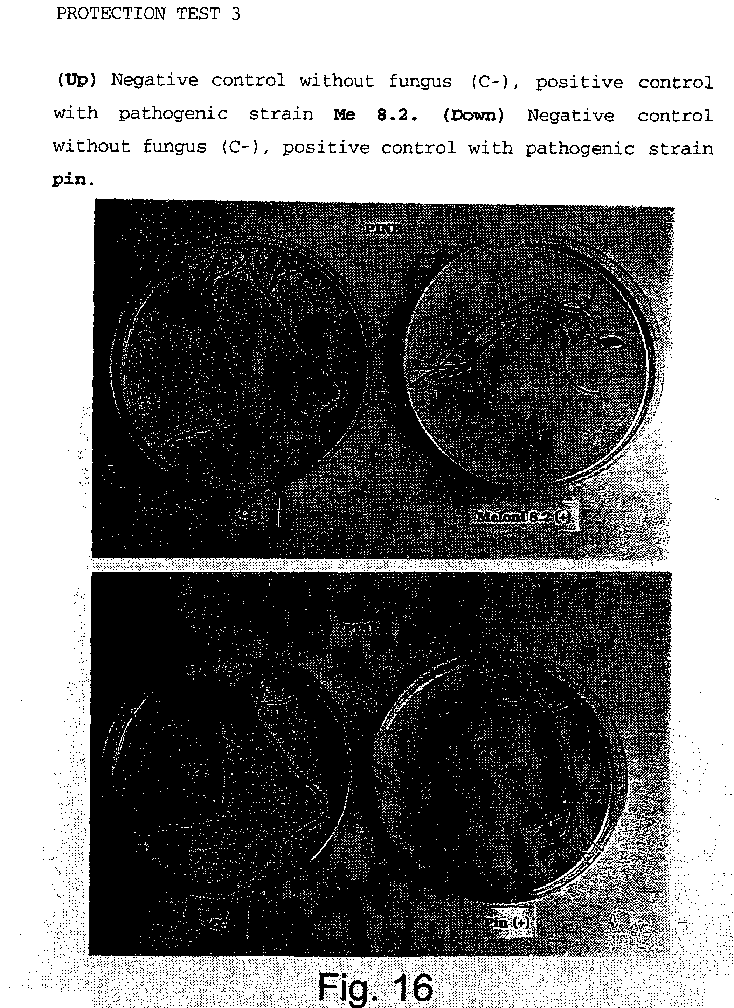

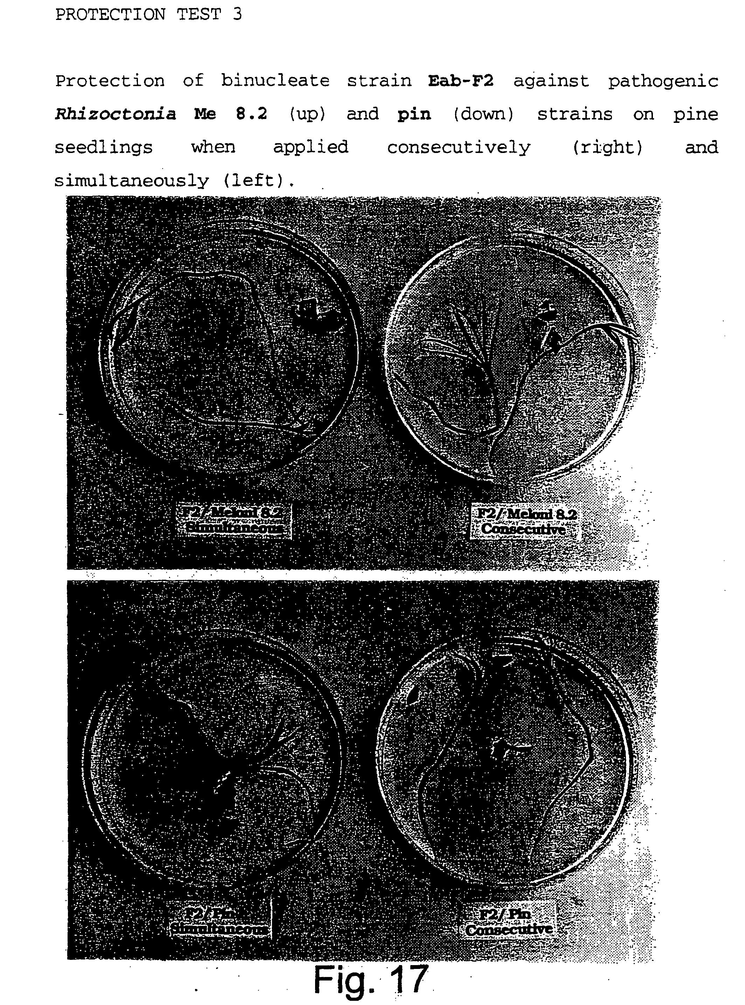

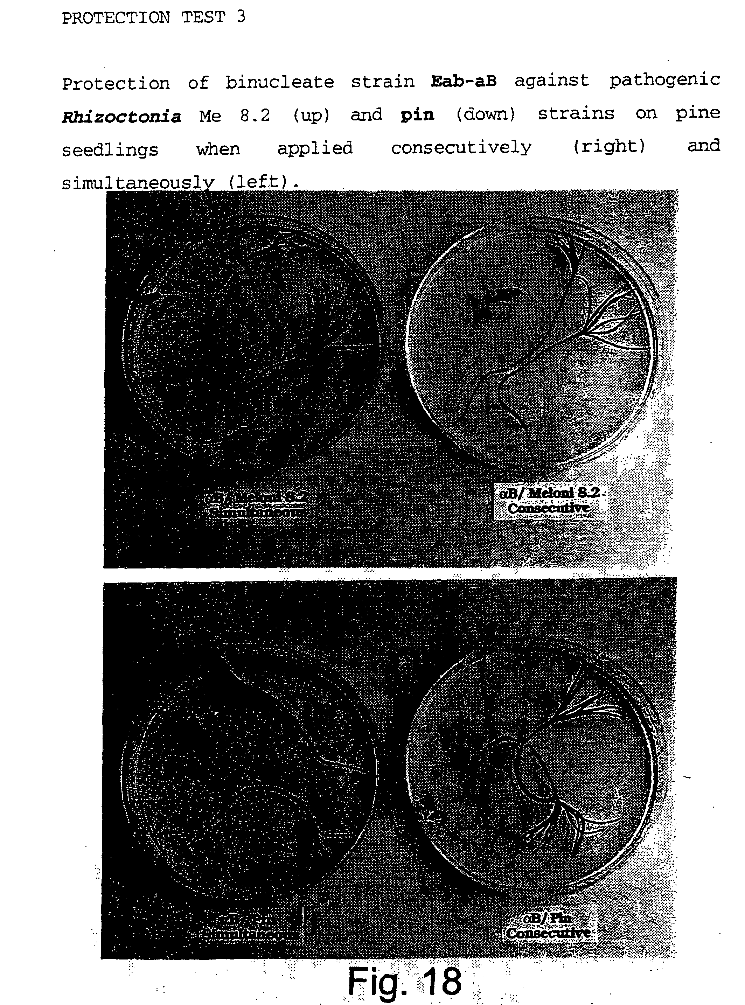

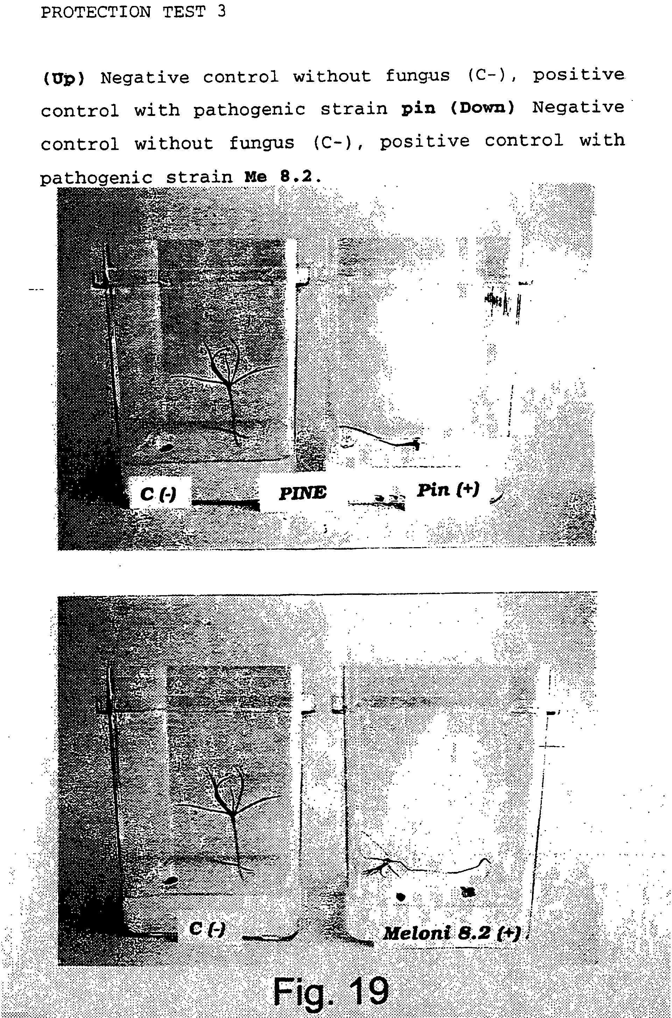

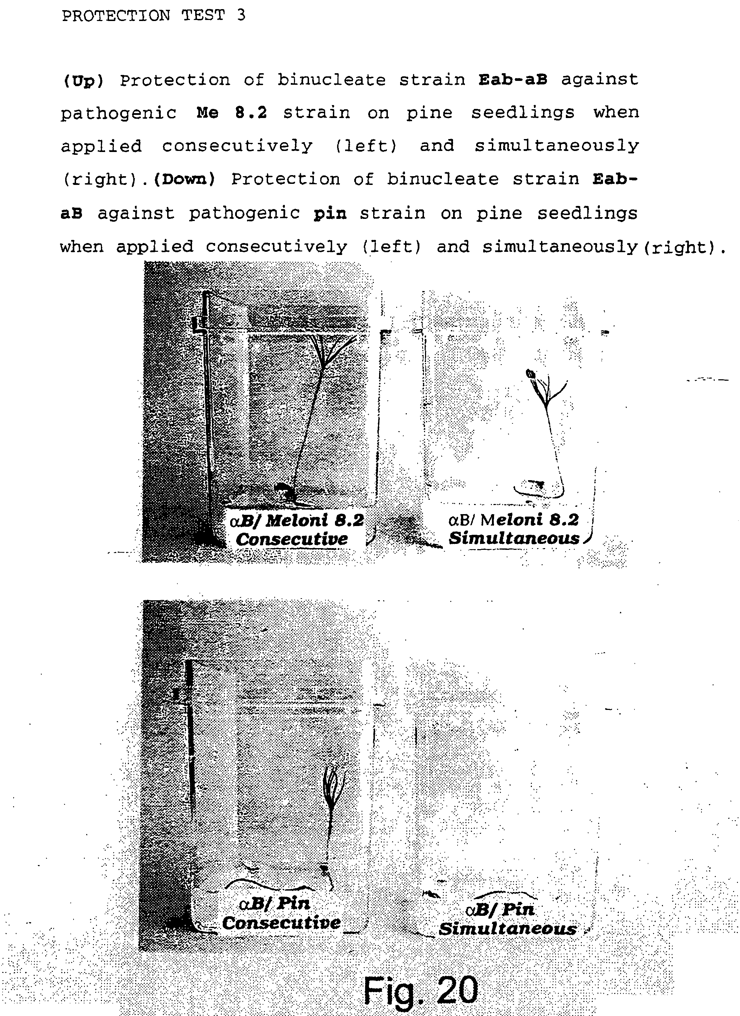

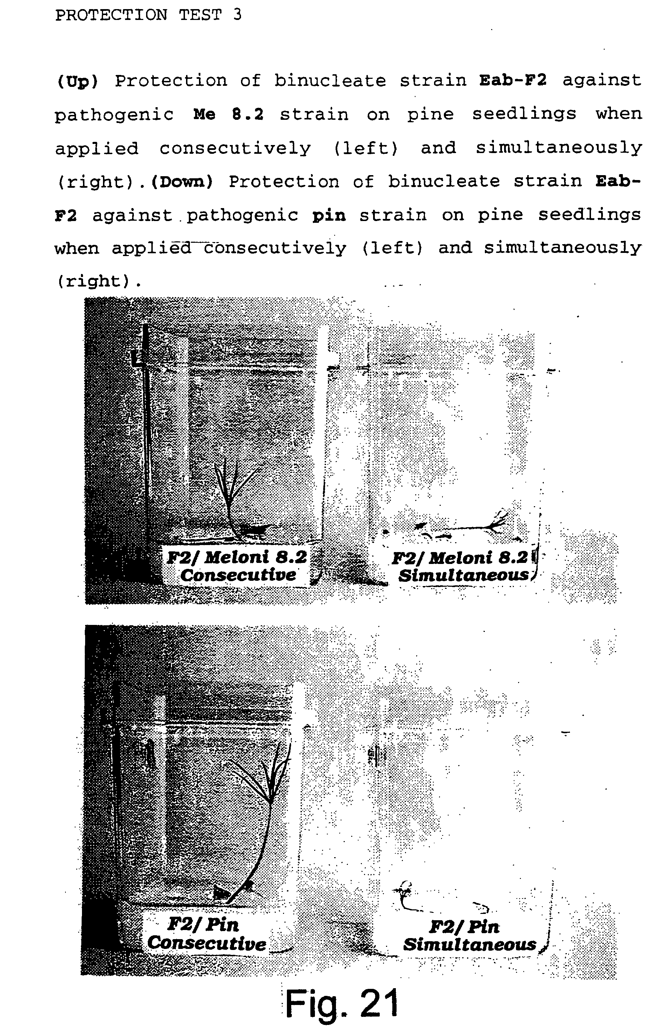

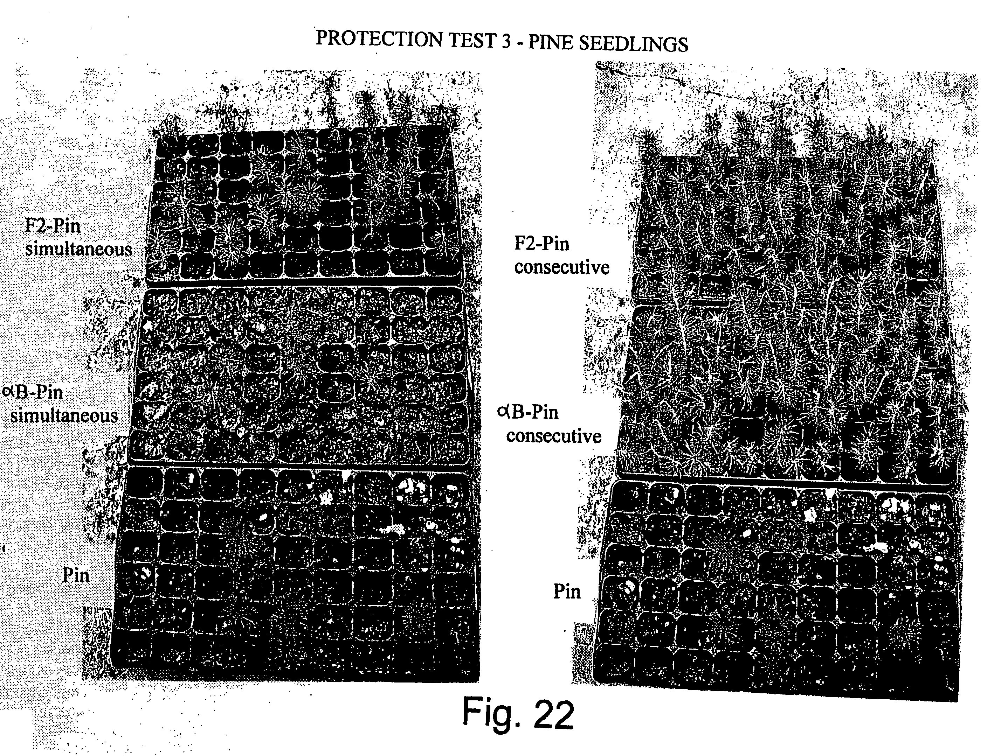

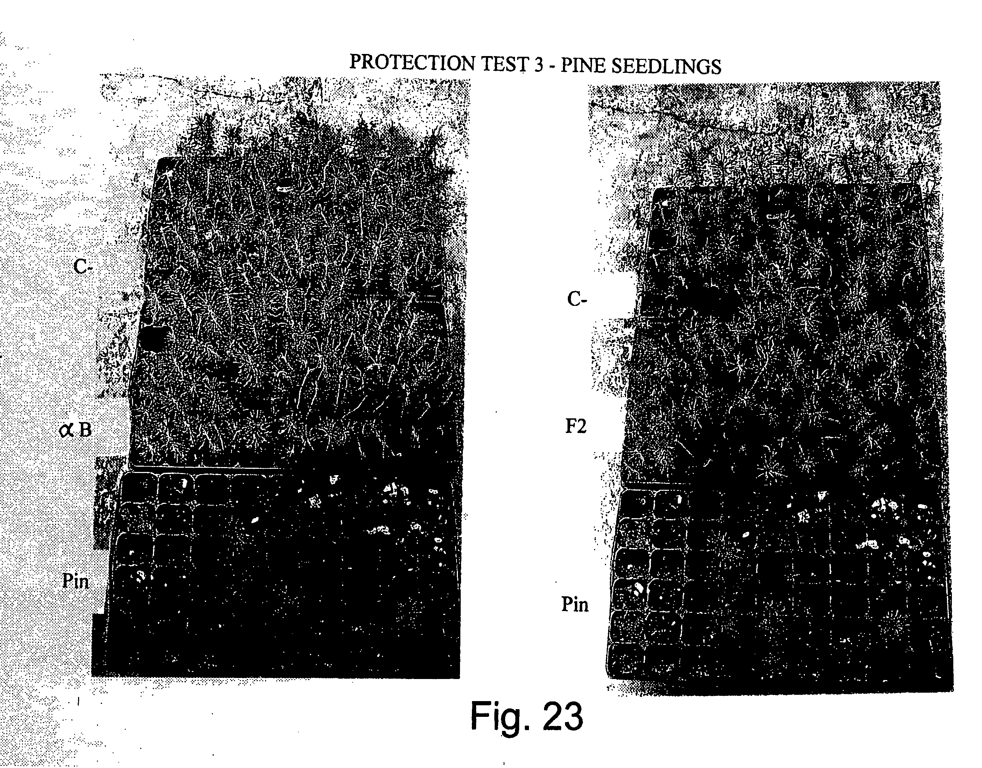

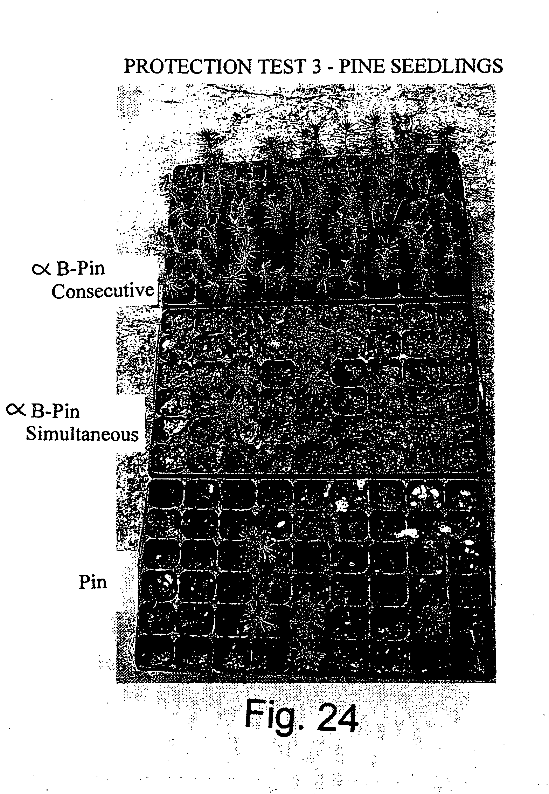

Figures 16 to 24. Protection test 3.

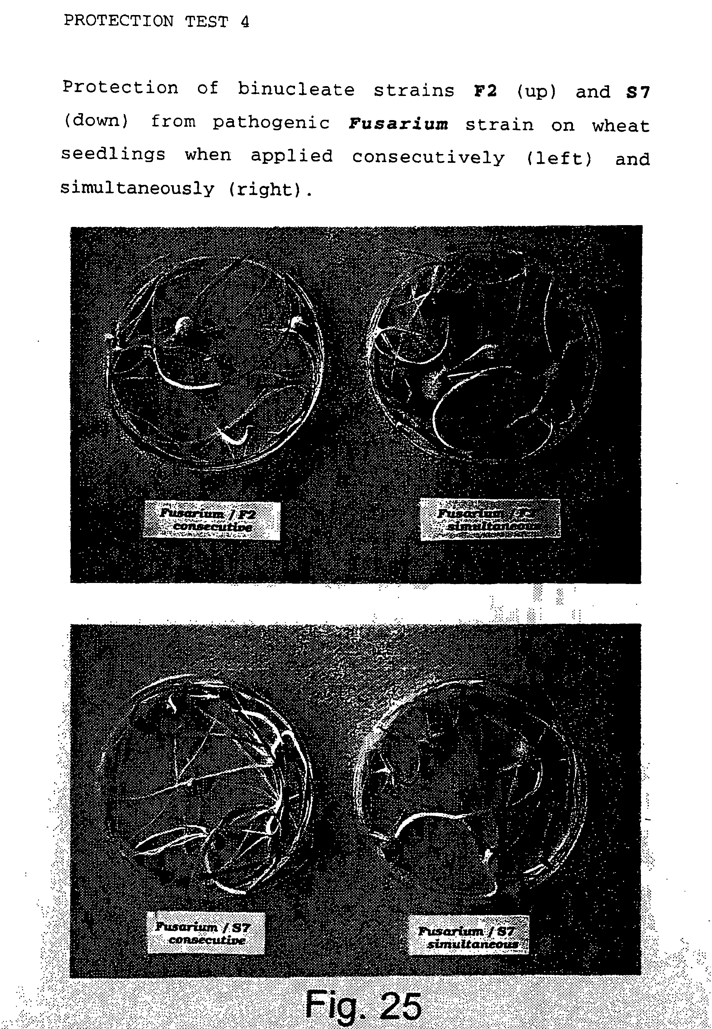

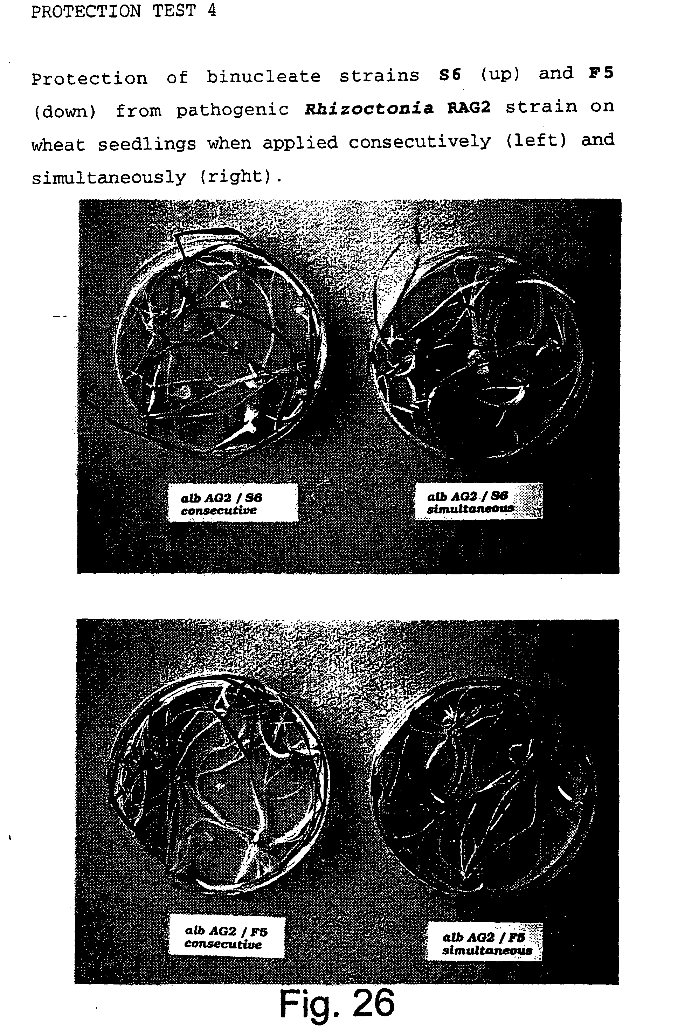

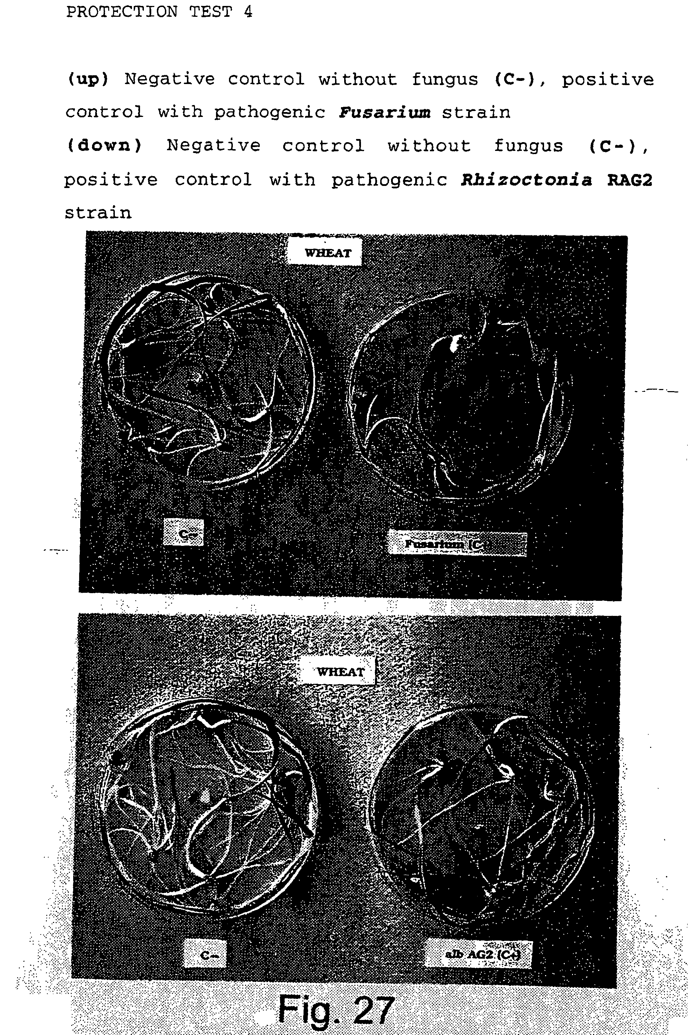

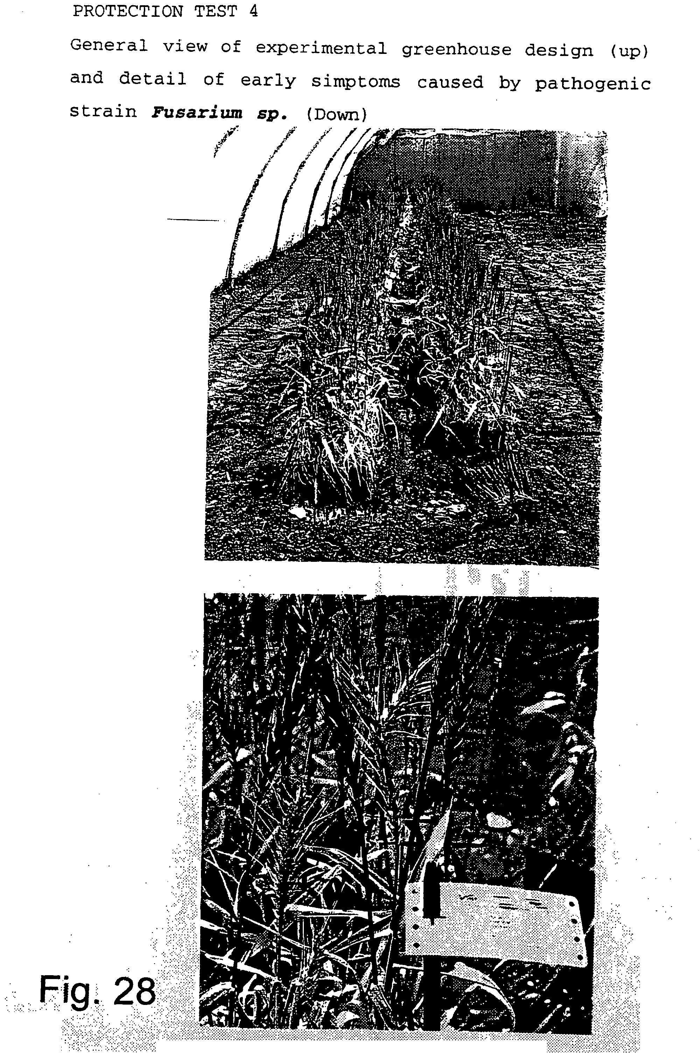

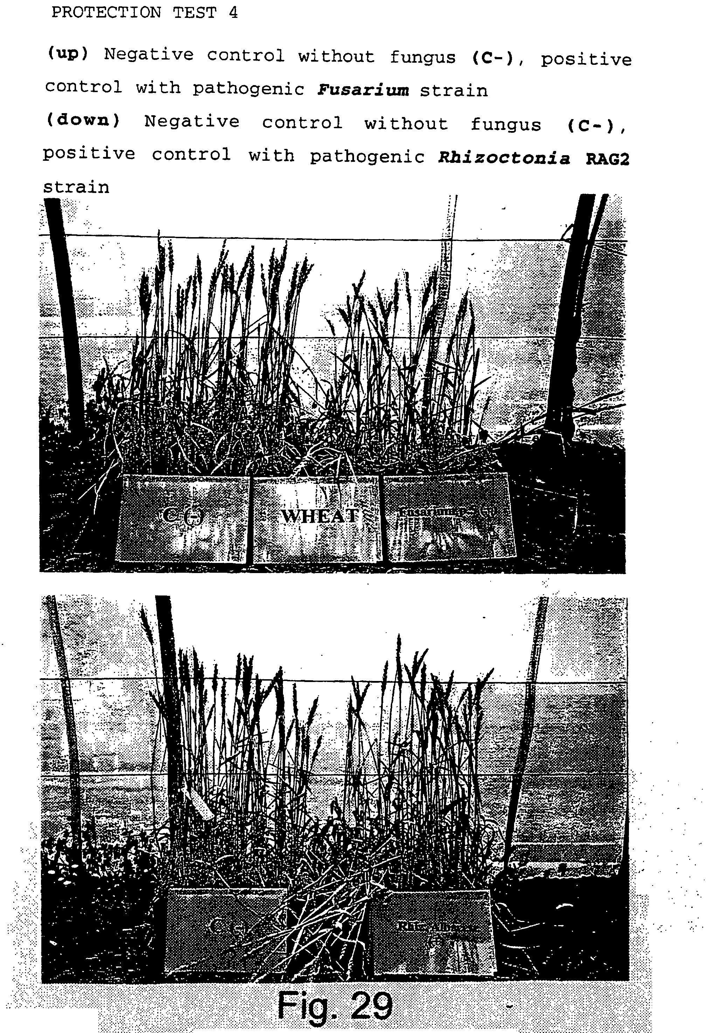

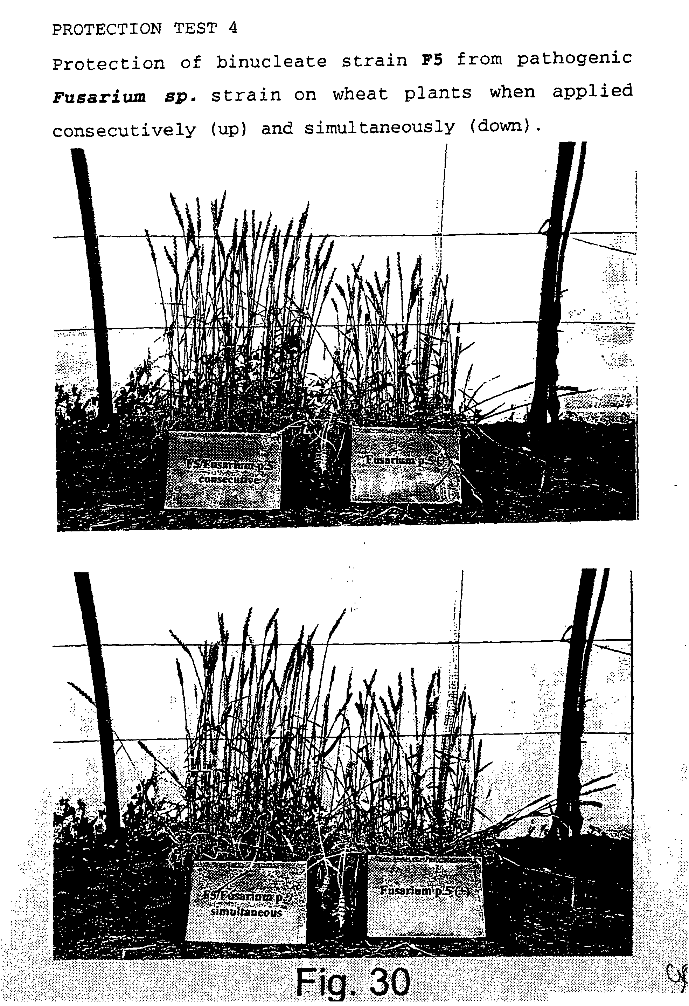

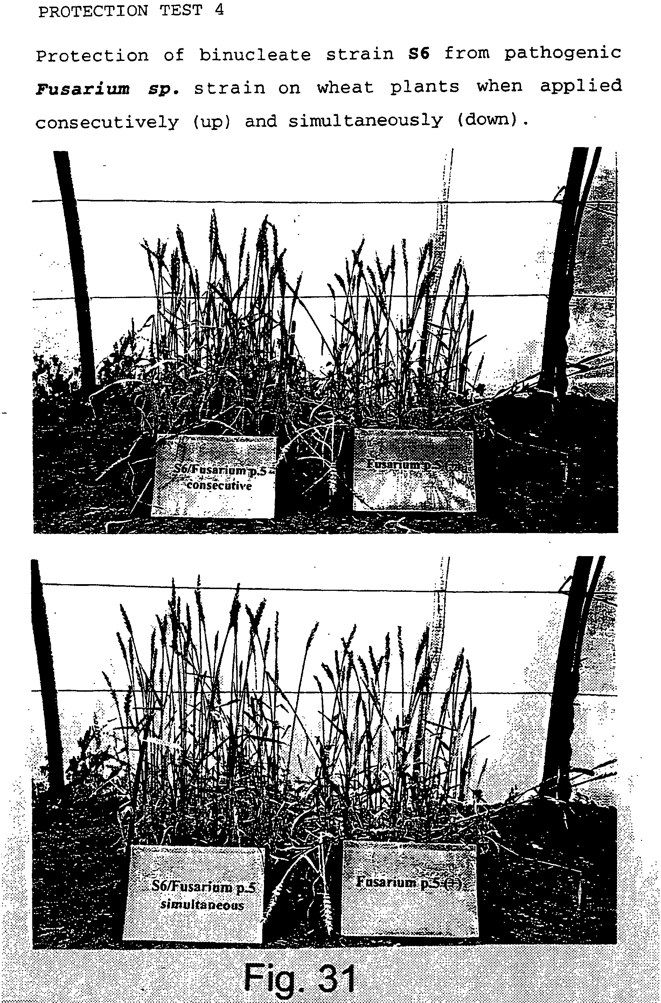

Figure 25 to 31. Protection test 4.

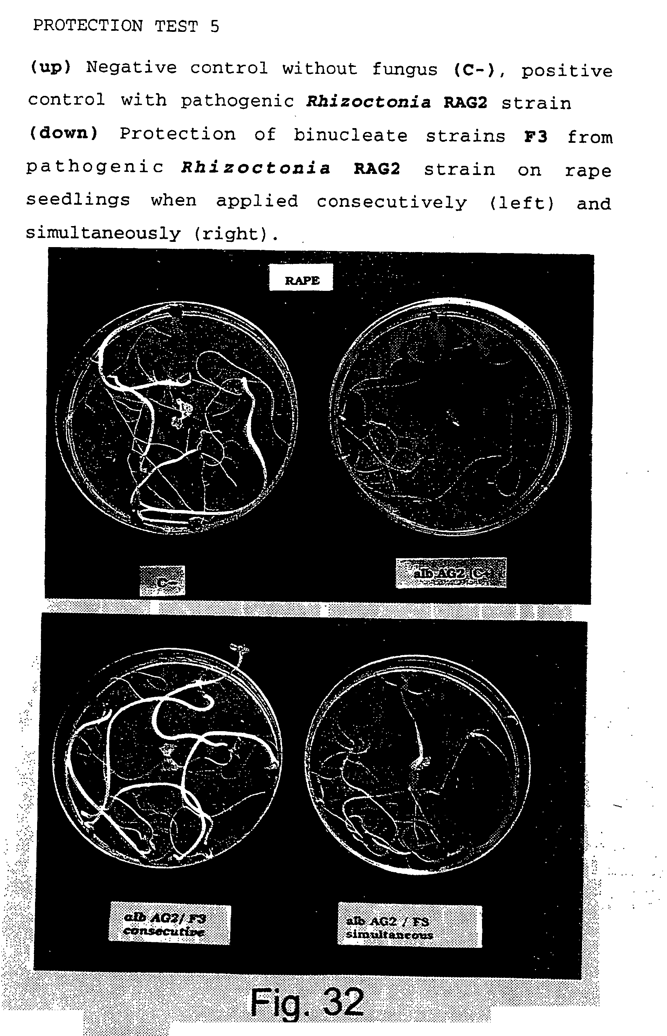

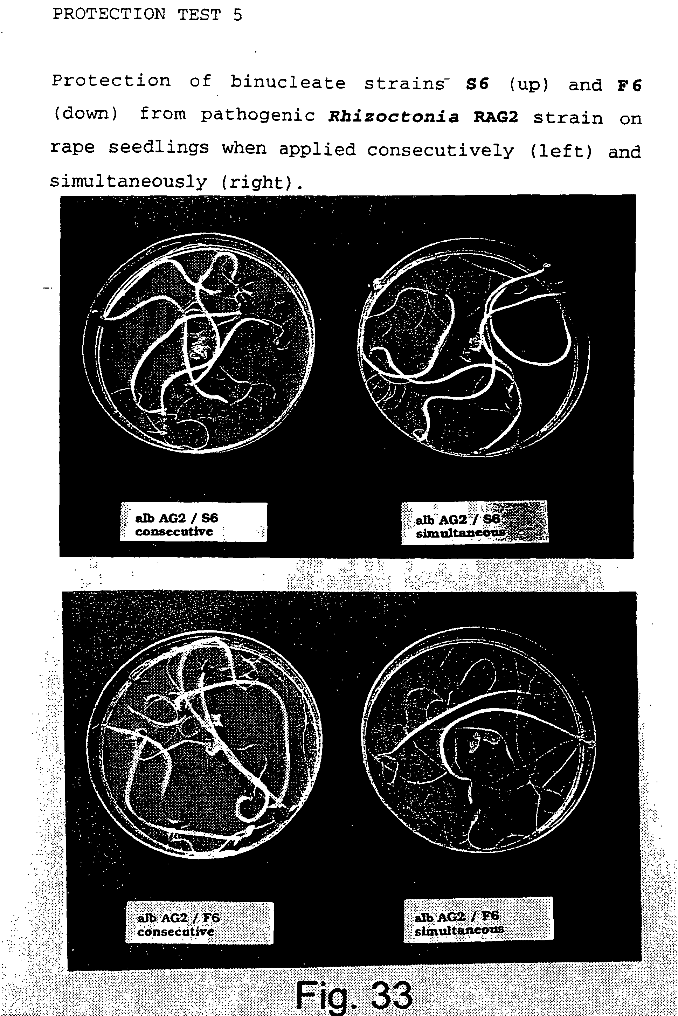

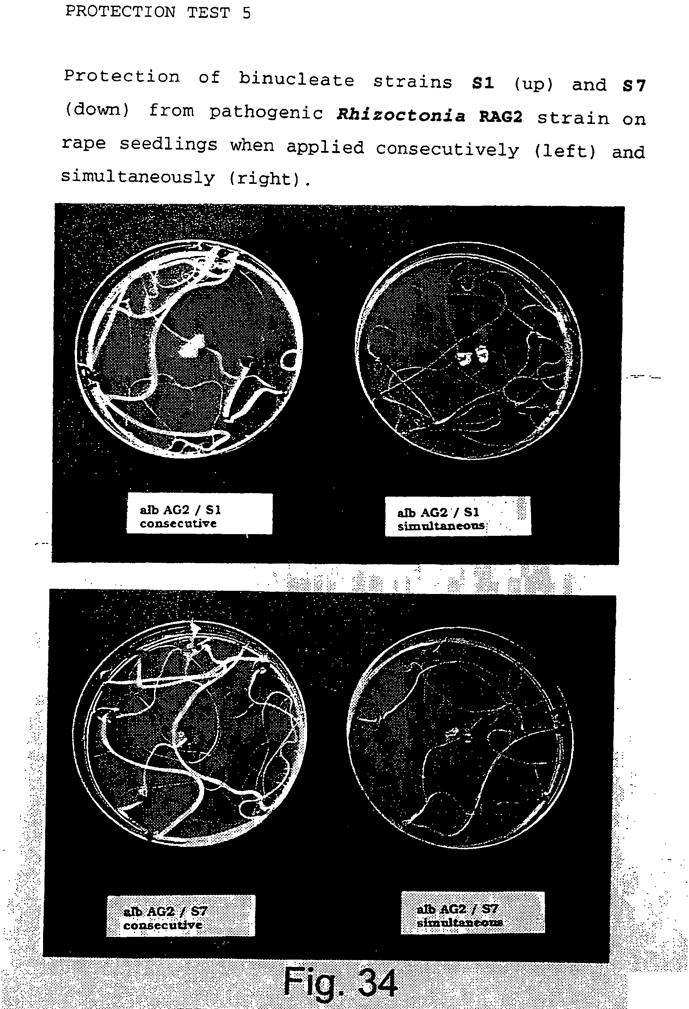

Figure 32 to 34. Protection test 5.

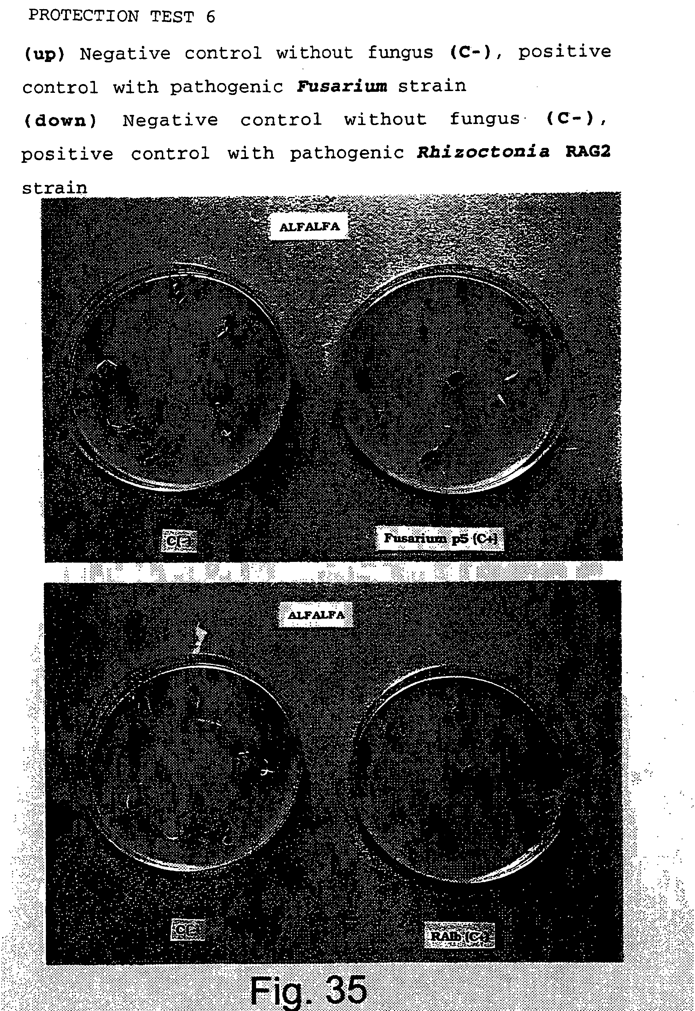

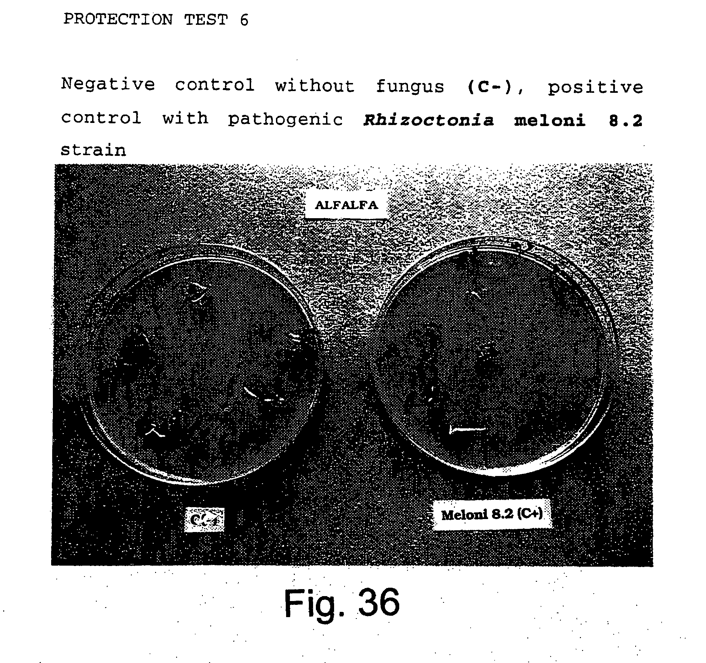

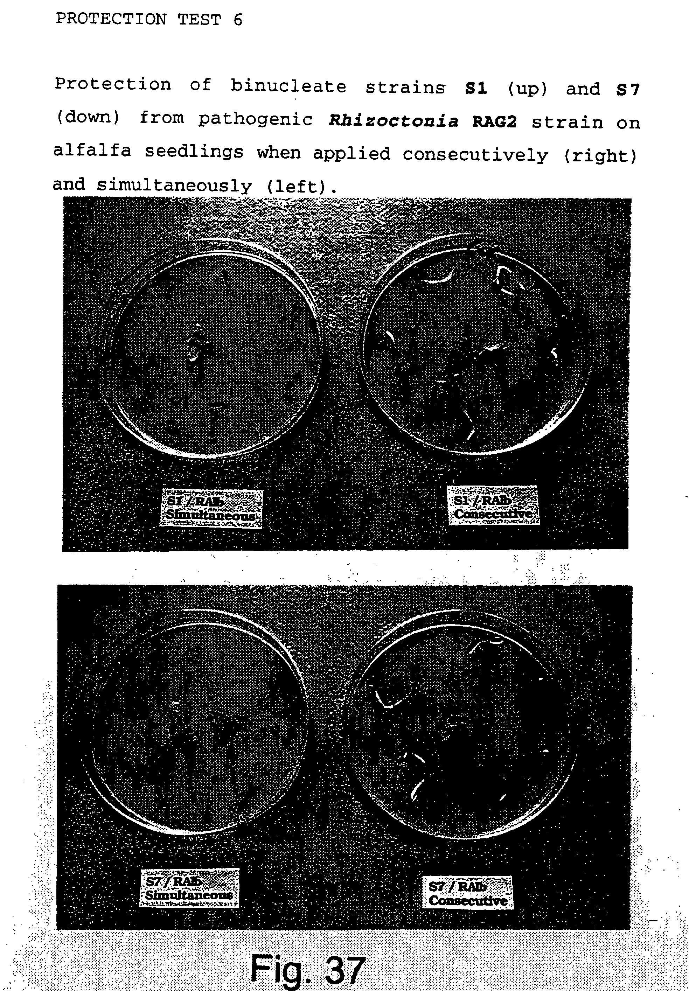

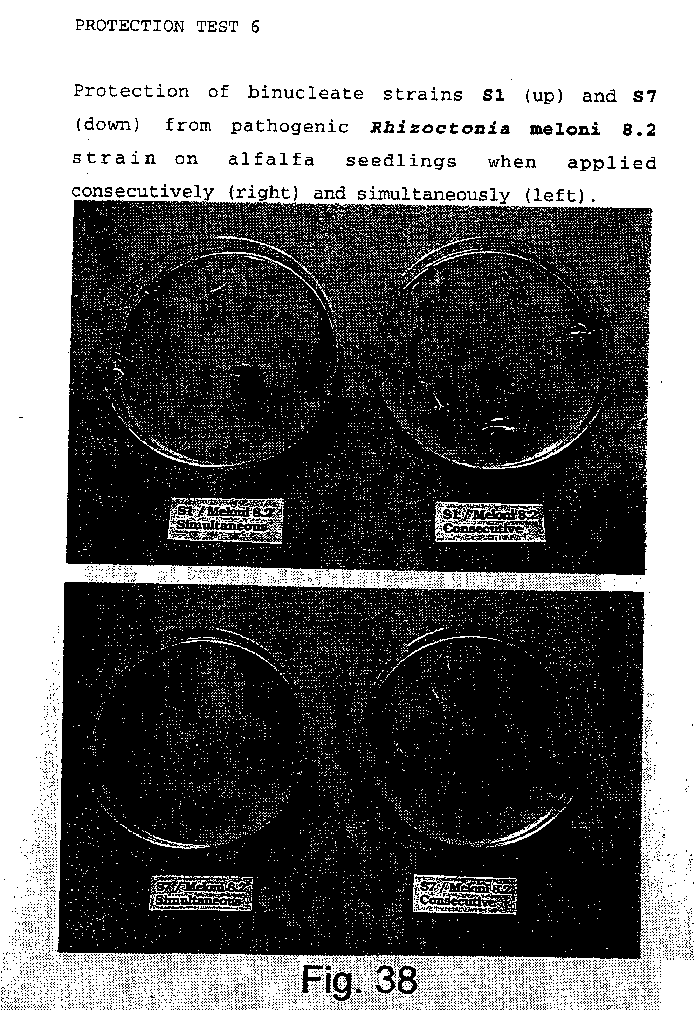

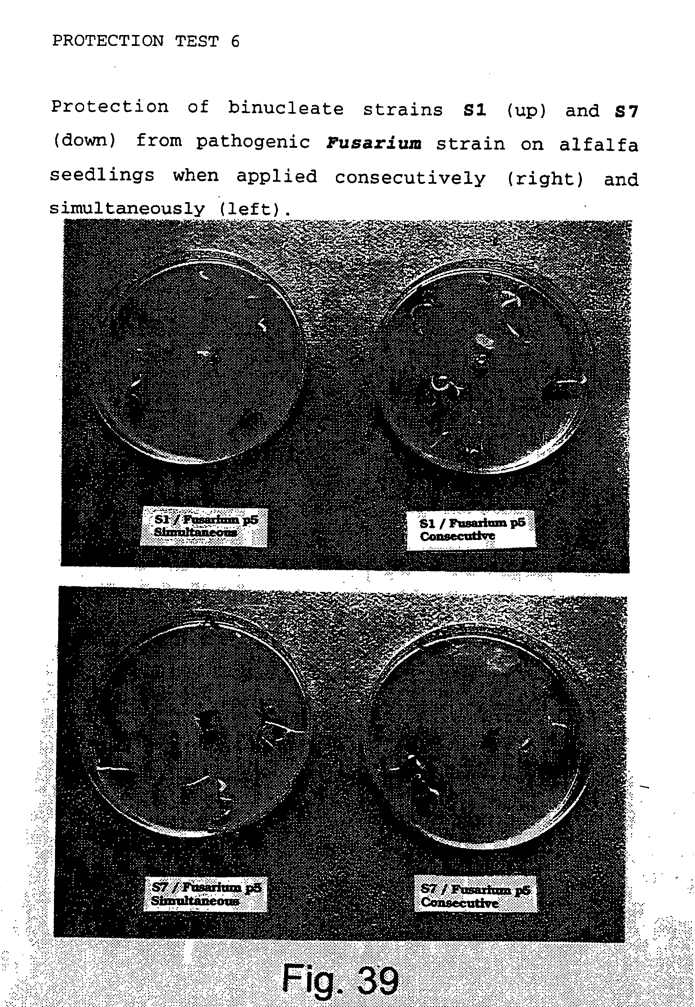

Figures 35 to 39. Protection test 6.

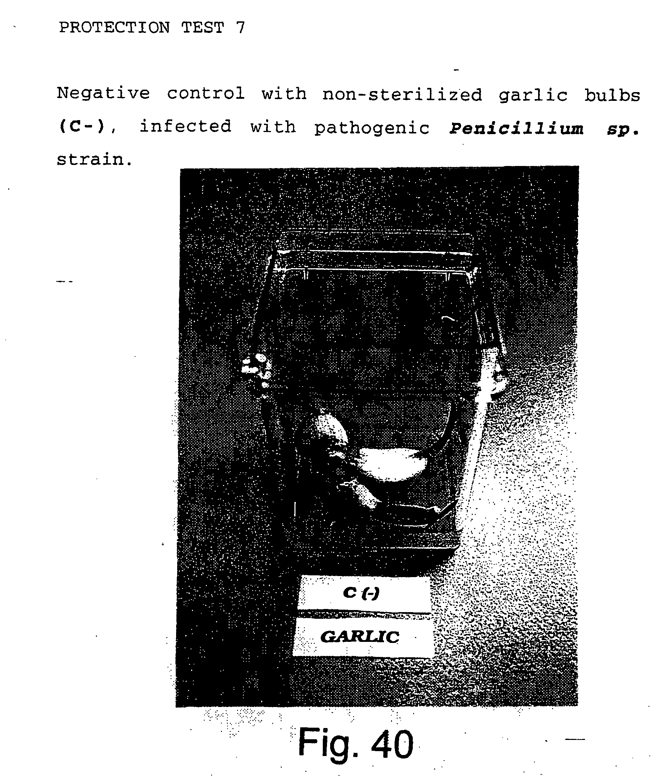

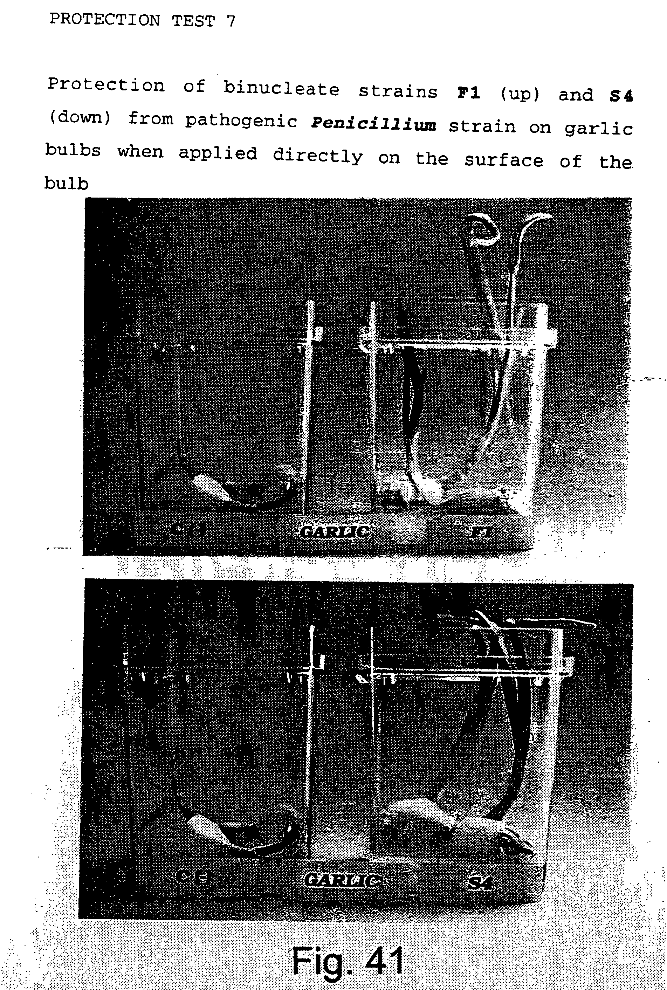

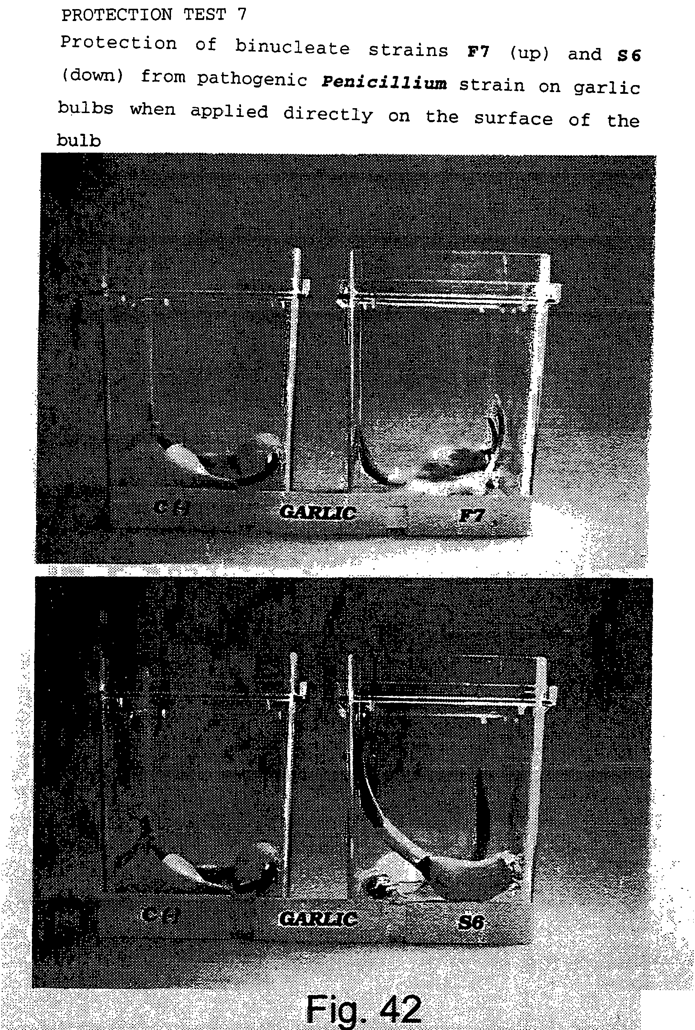

Figure 40 to 42. Protection test 7.

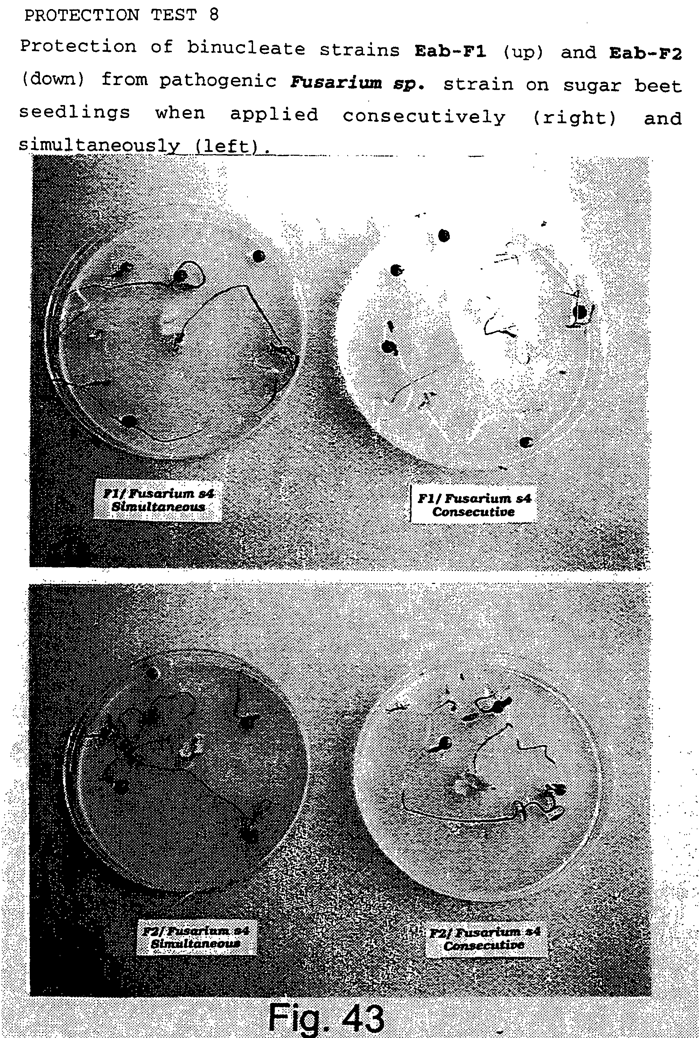

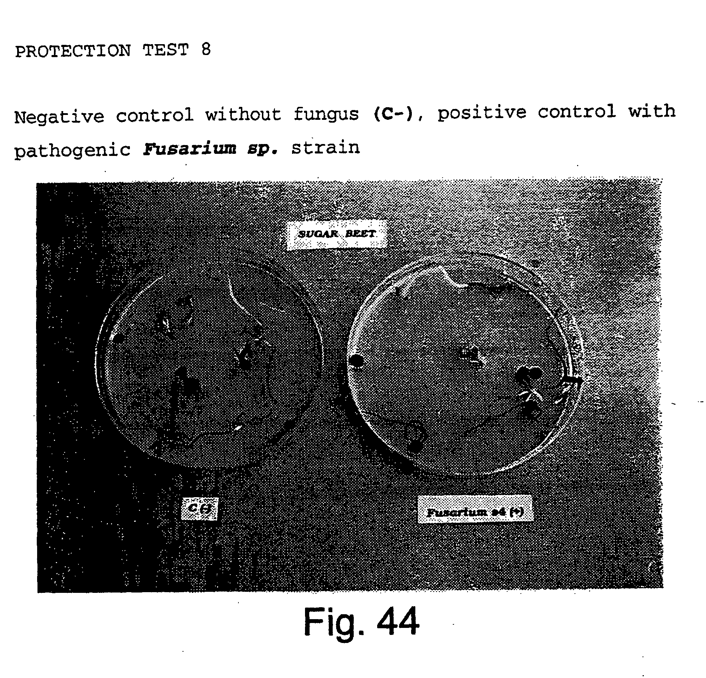

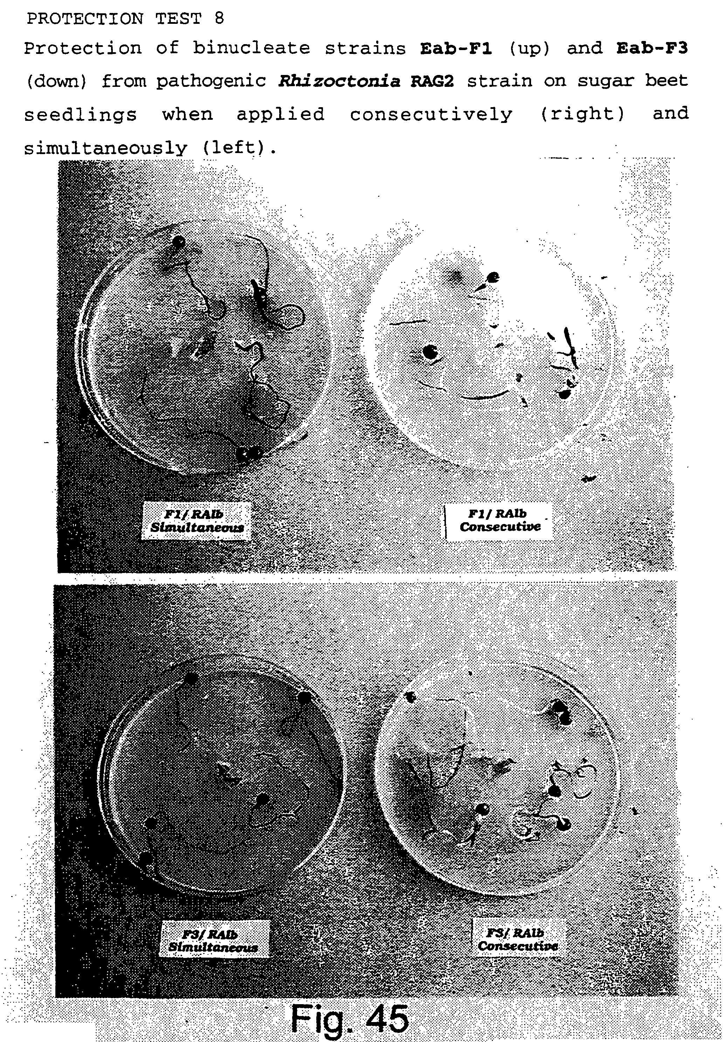

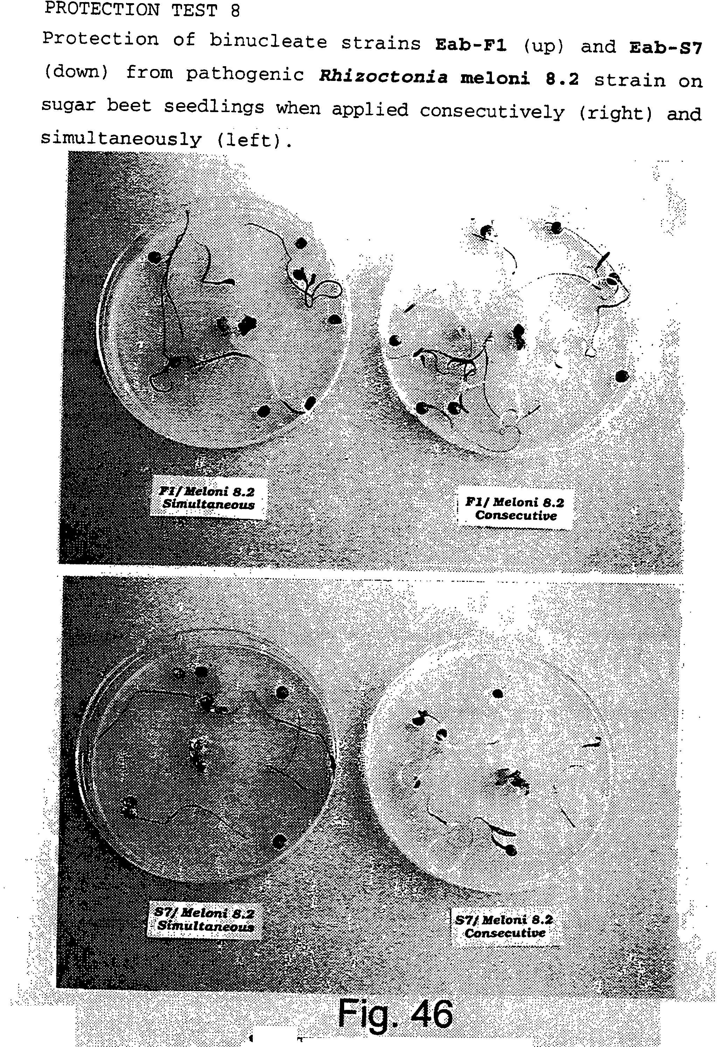

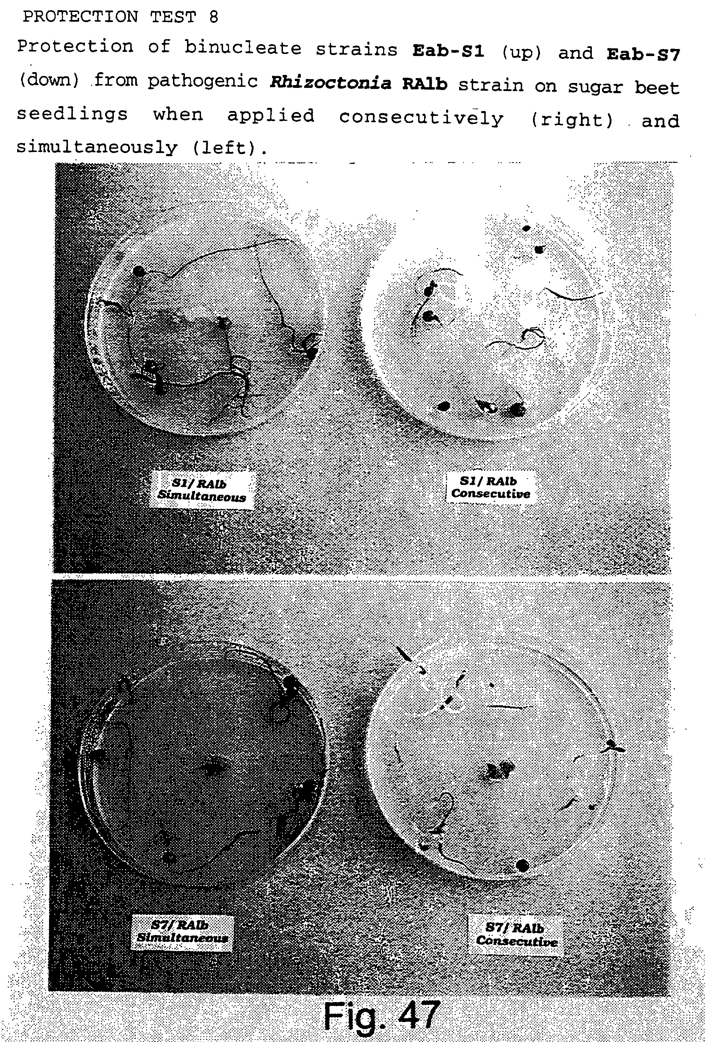

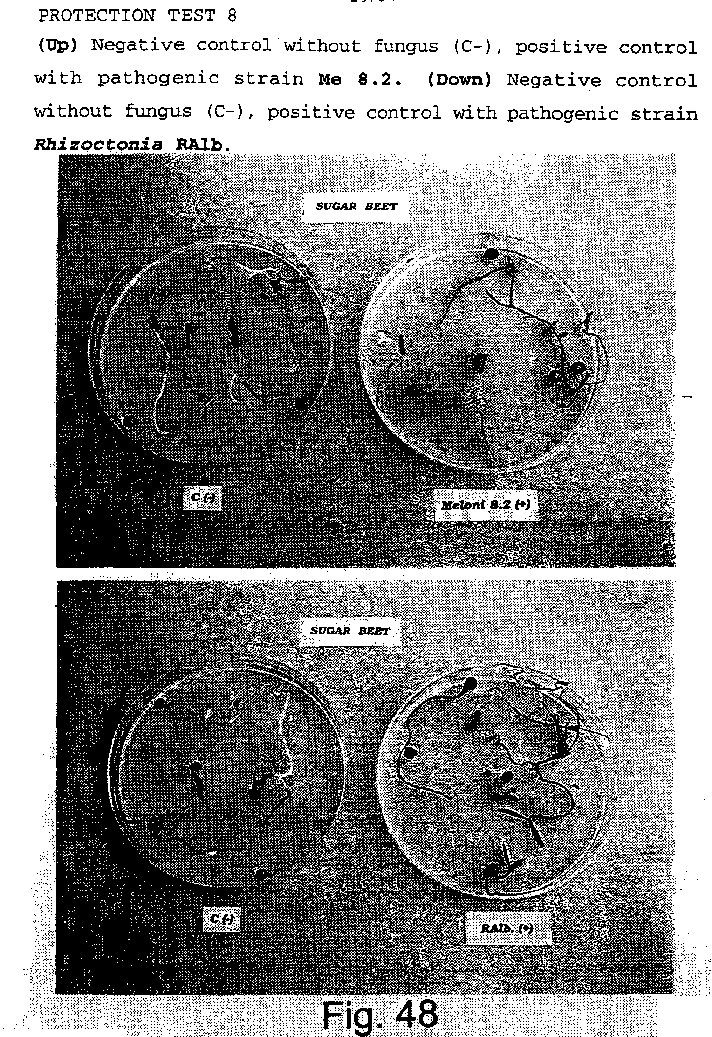

Figure 43 to 48. Protection test 8.

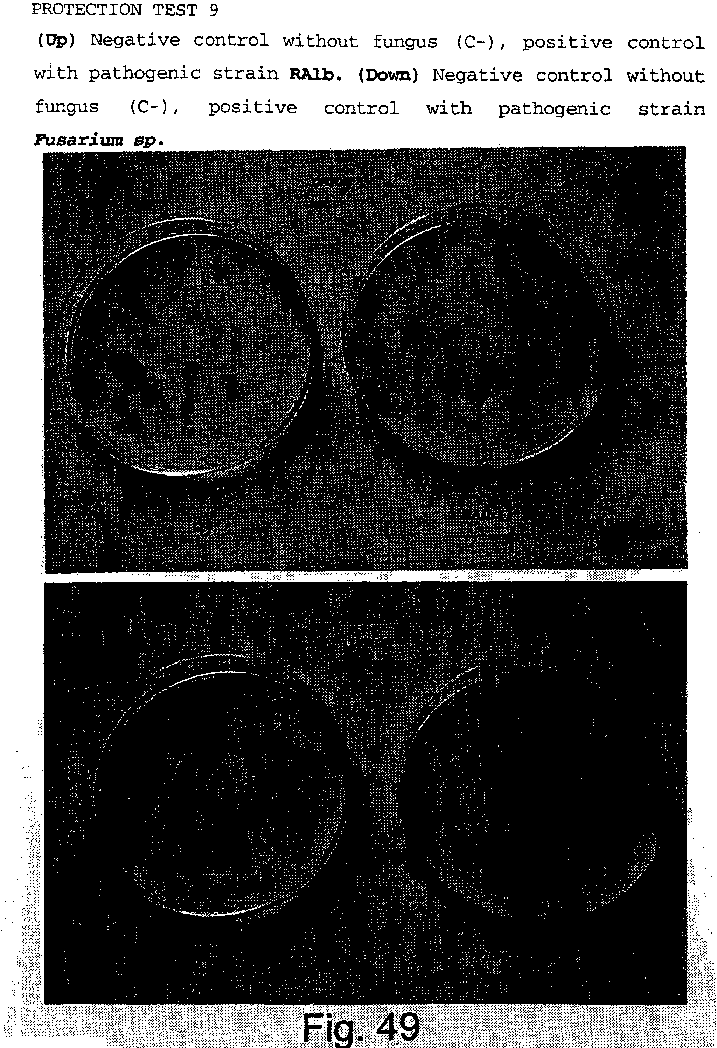

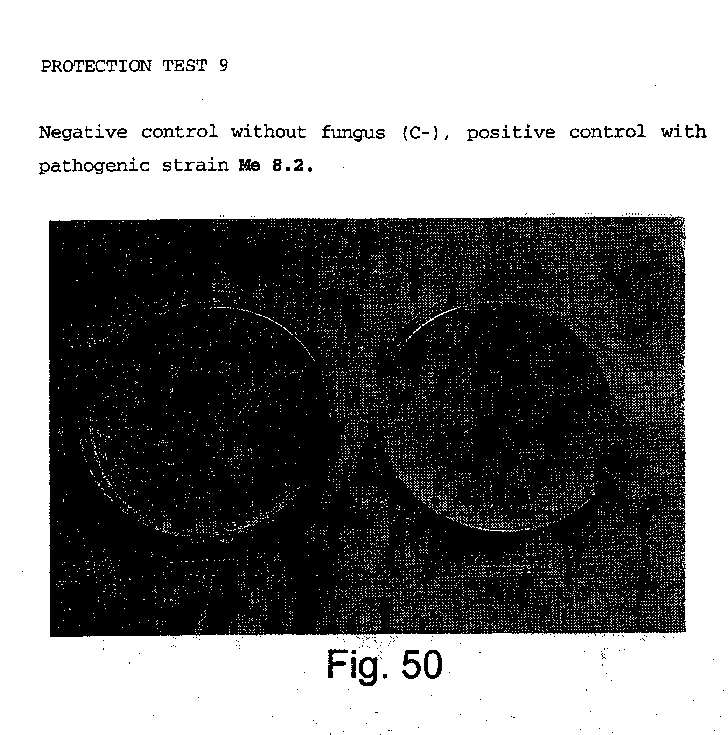

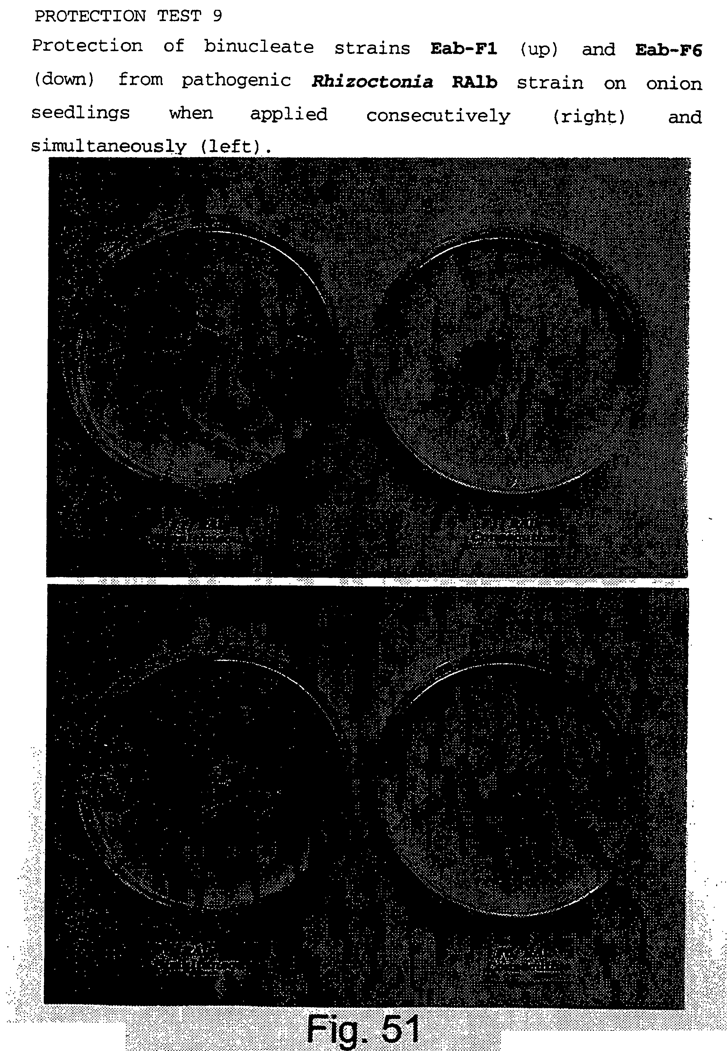

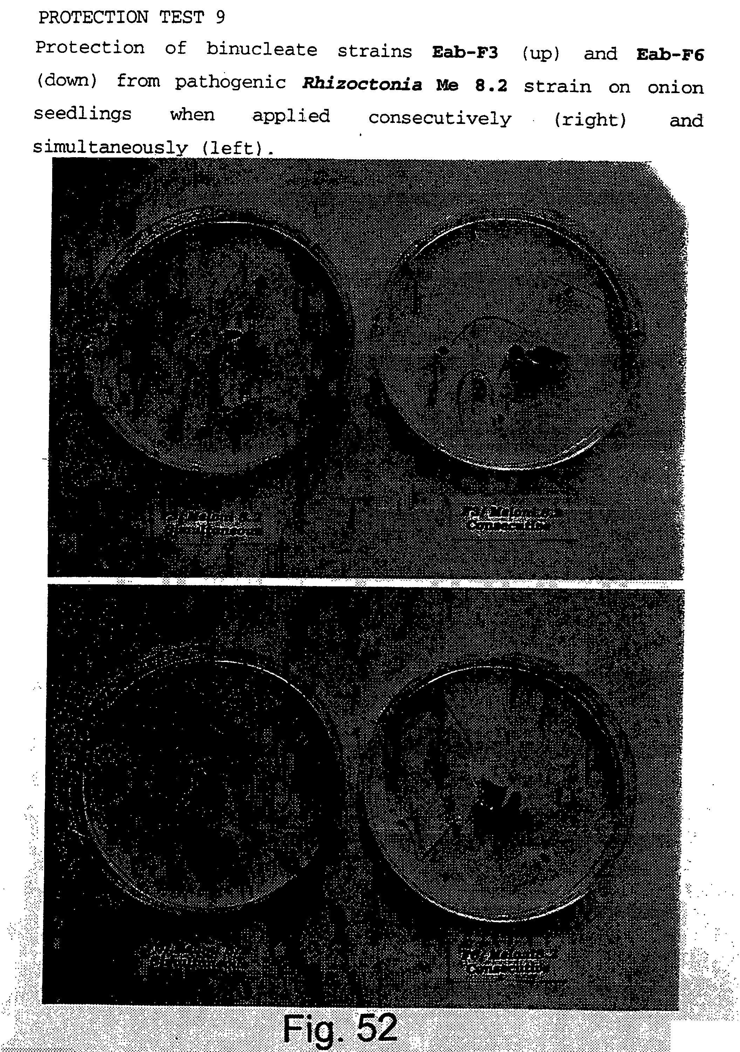

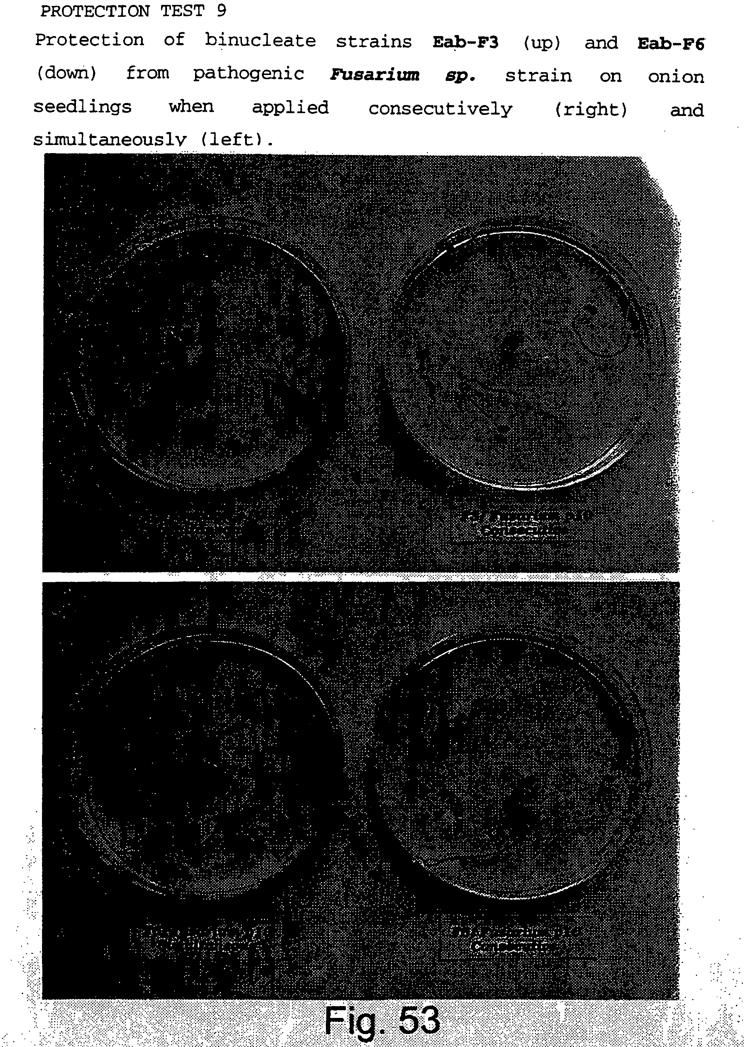

Figure 49 to 53. Protection test 9.

### Examples Of The Invention

We sequenced the ITS - 5.8S regions of 13 binucleate isolates of *Rhizoctonia* isolated from Albacete (South-East Spain), 9 binucleate isolates from CBS (Central Bureau Schimmelcultures, Baarn, Delft, Netherlands) collection, 3 multinucleate isolates from Albacete and multinucleate isolates belonging to AG 2. The later multinucleate isolates were included to determine the sequence variation in rDNA regions and to assess this variation as a possible tool for identifying groups into *Rhizoctonia* spp.

Samples of saffron, alfalfa and pine seedlings were collected at different locations in Albacete, South East of Spain. Isolation of *Rhizoctonia* spp. from these samples was performed by washing saffron roots, alfalfa stems and roots and whole pine seedlings with tap water to remove adhering soils particles and plating plant segments on 2% water agar amended with chloramphenicol (250 mg/ml). The cultures were characterised as *Rhizoctonica* by observing hyphal and colony morphology and vegetative features microscopically, such as hyphae with dolipore septa, basally constricted branching near the distal septum of cells, and absence of clamp connections and conidia. Cultures were maintained and stored at room temperature on potato-dextrose-agar [PDA. Oxoid LTD, U.K.].

The number of nuclei per hyphal cells was determined using a staining method described by Julian *et al.* Briefly, 3 mm2 agar plugs of inoculum were placed in petri dishes containing liquid complete medium [CM: 5 g malt extract (Merck, Darmstadt. Germany), 5 g yeast extract (Difco, Detroit, USA) and 5 g glucose anhydrous (Merck. Darmstadt. Germany) per litter] and incubated for 3 d at 230 C in the dark. The resulting mycelial colony was transferred to a microscope slide, excess medium was removed and a drop of 50 mg/ml Hoechst 33342 (Molecular Probes Europe, Leiden, The Netherlands) was added. After a 15 min incubation in the dark, the staining solution was removed and 50% glycerol was added. A coverslip was placed on sample and the number of nuclei was determined by fluorescence microscopy using an Olympus BHS microscope supplemented with a BH2-RFC reflected light fluorescence attachment (with dichroic mirrors BH2-DMU for UV excitation).

The isolates obtained are listed in the Table 1. All the isolates have been identified as belonging to the *Ceratobasidium* spp. complex. Other isolates included in this study are binucleate *Rhizoctonia* AG testers. All isolates have been described to present a teleomorph in the genus *Ceratobasidium*, except for AG 1 and AG N. for which a teleomorph is not known. Isolate 521 was obtained from ATCC (code ATCC 64643) and had previously been described as hypovirulent AG 4 and isolate Rh2815 was obtained from Colección Española de Cultivos Tipo (code CECT 2815) and was also described as AG 4.

Binucleate *Rhizoctonia* spp. isolates have been obtained from the CBS collection and are listed in Table 2.

**Table 1.**

| Original isolates described and sequenced for the first time in the invention as protective BNR, nuclear condition, host, size of ITS1, ITS2 and 5.8s rDNA gene, and EMBL accession number. | | | | | | |
|---|---|---|---|---|---|---|
| Isolate | Nuclear condition | Host | ITS 1 | ITS2 | Total | Accession No. |
| Eab-F1 | Binucleate | Saffron | 245 | 275 | 675 | AJ242875 |
| Eab-F2 | Binucleate | Saffron | 242 | 260 | 657 | AJ242876 |
| Eab-F3 | Binucleate | Saffron | 243 | 260 | 658 | AJ242877 |
| Eab-FS | Binucleate | Saffron | 238 | 261 | 654 | AJ242878 |
| Eab-F6 | Binucleate | Saffron | 246 | 251 | 652 | AJ242879 |
| Eab-F7 | Binucleate | Saffron | 252 | 254 | 661 | AJ242880 |
| Eab-S1 | Binucleate | Saffron | 230 | 280 | 665 | AJ242881 |
| Eab-S2 | Binucleate | Saffron | 232 | 254 | 641 | AJ242882 |
| Eab-S3 | Binucleate | Saffron | 232 | 260 | 647 | AJ242883 |
| Eab-S4 | Binucleate | Saffron | 226 | 254 | 635 | AJ242884 |
| Eab-S5 | Binucleate | Saffron | 236 | 269 | 660 | AJ242885 |
| Eab-S6 | Binucleate | Pine | 237 | 269 | 661 | AJ242886 |
| Eab-S7 | Multinucleate | Pine | 241 | 273 | 669 | AJ242887 |
| Eab-A1 | Multinucleate | Alfalfa | 274 | 298 | 727 | AJ242888 |
| Eab-A2 | Multinucleate | Alfalfa | 273 | 294 | 722 | AJ242889 |

**Table 2**

| Reference isolates belonging to the Binucleate Group obtained from different collections | | | | |
|---|---|---|---|---|
| Isolates | Nuclear Condition | Identification | Isolated in | Geographical Origin |
| 521 | Binucleate | Unknown | Soil | Israel |
| 2815 | Binucleate | Unknown | Vicia faba | Valencia, Spain |

**TABLE 3.**

| Anastomosis group, origin, size of ITS1, ITS2 and 5.8 s RDNA gene and EMBL accession number of tester isolates of *Rhizoctonia* spp. | | | | | | |
|---|---|---|---|---|---|---|
| Isolate | Anastomosis group | Isolated from | ITS 1 | ITS2 | Total | Accession No. |
| C-662 | AG A | Soil | 256 | 238 | 649 | AJ242890 |
| BN4 | AG A (CAG2) | Soil | 256 | 238 | 649 | AJ242891 |
| STR-2 | AG B(o) | *Ipomoea batatas* | 256 | 250 | 661 | AJ242892 |
| C-455 | AG Bb | *Oryza sativa* | 256 | 250 | 661 | AJ242893 |
| 70B | AG C | Soil | 257 | 243 | 655 | AJ242894 |
| C-610 | AGD | unknown | 25 8 | 243 | 656 | AJ242895 |
| Rhl55 | AG E | unknown | 25 8 | 243 | 656 | AJ242896 |
| C-653 | AG G | unknown | 252 | 252 | 659 | AJ242897 |
| AV-2 | AG 1 | *Artemesia* sp. | 251 | 255 | 661 | AJ242898 |
| 184 | AG J | unknown | 251 | 255 | 661 | AJ242899 |
| FA59209 | AG K | unknown | 261 | 285 | 701 | AJ242900 |
| 76146 | AG L | unknown | 259 | 278 | 692 | AJ242901 |
| TCI | AGN | unknown | 254 | 285 | 694 | AJ242902 |
| 76150 | AG P | unknown | 254 | 289 | 698 | AJ242903 |
| TC2 | AG R | unknown | 185 | 274 | 614 | AJ242904 |
| TC3 | AG S | unknown | 185 | 274 | 614 | AJ242905 |

These isolates were kindly provided by M. Mazzola, USDA Agricultural Research Service, Tree Fruit Research Laboratory, 1104 N. Western Avenue, Wenatchee. WA 98801. U.S.A.

Typical *Rhizoctonia* isolates of this invention have been deposited under the Budapest Treaty, as follows:

| isolate | deposit number | deposit date |
|---|---|---|
| *Rhizoctonia* (binucleate) Eab-F5 | *Rhizoctonia* sp. CECT 20320 | 30 June 1999 |
| *Rhizoctonia* (binucleate) Eab-F6 | *Rhizoctonia* sp. CECT 20321 | 30 June 1999 |
| *Rhizoctonia* (binucleate) Eab-S6 | *Rhizoctonia* sp. CECT 20322 | 30 June 1999 |
| *Rhizoctonia* (binucleate) Eab-S 1 | *Rhizoctonia* sp. CECT 20323 | 30 June 1999 |
| *Rhizoctonia* (binucleate) Eab-F2 | *Rhizoctonia* sp. CECT 20324 | 30 June 1999 |

The genomic DNA, asymmetric PCR and DNA sequencing procedures used in this study have been previously described. For DNA isolation, mycelia were crushed in liquid nitrogen, incubated at 650C in extraction buffer and treated with RNase. Asymmetric PCR amplification, used to synthesize ssDNA. was done with a 50:1 molar ratio between the two primers (11). The primers used for amplification of the ITS regions were ITS4 and ITS5 (White *et al*.) and ITSIF and ITS4B (Gardes *et al*.). An automated thermal cycler (Perking Elmer Cetus Corp. model 480, Norwalk, Connecticut) was used for the amplification reaction. The cycling parameters were initial denaturation (2.5 min at 94 °C) and 40 cycles of the following: denaturation. 15 s at 94 °C; annealing. 30 s at 55 °C when ITSIF/ITS4B were used as amplification primers (or 53 °C for-ITS4/ITS5); and extension, 1.5 min at 72 °C.

In sequencing of the ITS-5.8 S rDNA region. PCR experiments carried out on the rDNA-ITS region of 30 isolates of BNR reproducible amplified a single band. The amplification was terminated by a final extension for 10 min at 72 °C. PCR products were analyzed by electrophoresis in 1% agarose gels in TBE buffer, at constant voltage for two hours. Each PCR product was used for sequence determination after removing excess primers and nucleotides. Manual sequencing was performed using the Sanger's dideoxy method. All samples were sequenced at least twice in both directions. CLUSTALW alignment was used with Gap Open Penalty of 10.00 and Gap Extension Penalty of 0.05. The total length of the alignment obtained was 900 bp with 61 gaps. The length of the longest inferred gaps was 28 and 26 bp. The transition/transversion average was 1.764. calculated with DNAML from the PHYLIP package.

The nucleotide sequences determined are shown in Figure 1. They have been deposited in EMBL, and the given accession numbers are shown in the Tables.

The 5.8 S rDNA region was conserved among all the *Rhizoctonia* isolates examined and had a length of 155 bp. Among the isolates analysed, the sequence of ITS 2 was more divergent than the sequence of the ITS 1 region. Sequence homology among *Rhizoctonia* spp. isolates from Albacete varied from 90-99%. between isolates from Albacete and tester strains of binucleate anastomosis groups varied from 87-90 % and between Albacete isolates and multinucleate R. *solani* isolates varied from 68-88%.

For phylogenetic analysis. the sequence data were checked between complementary strands. and sequences were assembled using GCG Fragment Assembly System (Program Manual for the Wisconsin Package, version 8, Wisconsin). For the phylogenetic analysis we added sequences of multinucleate isolates from the different AGs of *Rhizoctonia solani* previously reported. These isolates were A-10 (AG 1), B60 (AG 2-2 IIIB), BC-10 (AG 2-2 IV). 1600 (AG 3)9 Pf-10 (AG 4 HG-1), Rh-165 (AG 4 HG-11), K31 (AG 5) HAMI-1 (AG 6), 1556 (AG 7), A68 (AG 8), V12M (AG 9) and TE2-4 (AG BI). Alignments of the ITS regions were performed using the multiple alignment program CLUSTALW (Thompson *et al*.) (IntelliGenetics, Inc., Mountain View. California), and are shown in the sequence listings. Only the sequences of the total ITS regions (including 5.8 S), without any nucleotide of the major ribosomal genes, were used for phylogenetic analysis.

Phylogenetic analysis of the aligned sequences was performed using the maximum parsimony analysis with the heuristic-search algorithm of the Phylogenetic Analysis Using Parsimony (PAUP) program 3.1.1. (Swofford *et al*.) with gaps treated as missing data. The heuristic search provides as optimal criteria maximum parsimony. The trees were rooted with the rDNA-ITS sequence of Trichoderma harzianum as outgroup. Data were resampled with 1000 bootstrap replicates by using the heuristic search of PAUP. The percentage of bootstrap replicates which yielded each grouping as a measure of statistical confidence was determined. Trees were confirmed from the distance matrix of Jukes & Cantor using the neighbor-joining method as it is in the program "Neighbor" from the PHYLIP package version 3.5. The Jukes & Cantor algorithm assumes that there are independent changes in all sites, with equal probability. The most parsimonious tree obtained by PAUP had a minimum length of 1212 steps, with consistency (Cl) and retention (RI) indices of 0.606 and 0.751 respectively, and is shown in the Figure. In the tree, horizontal lengths in the branches indicate the relative genetic distances between the isolates, corresponding to the number of nucleotide substitutions.

Phylogenetic analysis separated all the *Rhizoctonia* spp. isolates from the T. harzianum outgroup isolate and clustered *Rhizoctonia* spp. isolates into two different groups, corresponding to binucleate and multinucleate isolates. All Spanish isolates from Albacete except isolate S3 clustered differentiated from the binucleate tester isolates. The supposed AG 4 hypovirulent isolates 521 and Rh2815 clustered with the binucleate *Rhizoctonia* isolates. in the same group as the binucleate testers.

In this study, the first work up to date dealing with phylogeny of binucleate *Rhizoctonia*, the sequences of the ITS regions of 12 BNR isolates obtained in Spain. 16 BNR tester isolates, 2 previously identified as AG 4 hypovirulent isolates and 3 multinucleate isolates obtained in Spain have been determined and compared with known sequences of multinucleate R. *solani* strains obtained by Kuninaga *et al*., The first concussion clearly drawn upon observation of the resulting phylogenetic tree is that there are two separated branches. one grouping the muitinucleate isolates and the other one including all the binucleate isolates, showing that multinucleate and binucleate isolates are genetically further from each other than multinucleate or binucleate isolates among themselves. This is supported by the fact that there is a cluster containing all the AGs of the multinucleate *Rhizoctonia*, which tend to be considered genetically isolated, whereas when a sufficiently high number of isolates is included in a study of this type, not only anastomosis groups. but also subgroups and ecological types are clearly separated.

The branch with binucleate isolates contains all the tester strains and the 12 BNR isolates from Spain. Surprisingly, in this branch were also included the supposedly multinucleate AG 4 hypovirulent strains 521 and Rh2815. Interestingly, in Boysen *et al*. these two isolates clustered together and apart from the seven AG 4 isolates studied and the AG 1 isolate used as an outgroup in the phylogenetic study. At that moment, the explanation given was that these two isolates clustered separately from the others based on pathogenicity, since all the other seven AG 4 and the one AG 1 isolates were highly virulent towards 5 different host plants (radish, cotton, onion, bean and carrot) and isolates 521 and Rh2815 were hypovirulent. It has also been shown that by using rDNA-ITS sequencing there is a clear grouping of the isolates according to pathogenicity and host range. Since the consistency of the tree was very high and the two branches clearly correlated with the number of nuclei of the isolates. it pointed to the possibility that strains 521 and Rh2815 had been misidentified. In fact. morphological criteria, such as cultural appearance, cannot be used to differentiate multinucleate from binucleate *Rhizoctonia*, since hyphal diameter is too similar and the formation of sclerotia or

In the phylogenetic tree shown in this work, the molecular variation among R. *solani* isolates is bigger than among BNR isolates; it can be observed that the horizontal length of the branches of the tree, that represent genetic distance, are quite different for the multinucleate and the binucleate cluster. In the multinucleate cluster the branches are much longer than for the binucleate cluster, and the numbers above the internodes, which represent the bootstrap percentage from 1000 bootstrap replicates, are in general lower. This indicates that the ITS region of the binucleate isolates is much more similar among AGs than the same region of multinucleate isolates, and knowing that the ITS region is a good indicator of genetic evolution and relatedness, it can be concluded that binucleate isolates are more closely related among themselves than the multinucleate isolates.

For future work, from the sequences of Figure 1, it is possible to pick out sequences suited for construction of PCR primers, as follows: Pathogenicity tests were performed with the strains isolated from the field in Albacete on the following plant species: radish (Raphanus sativus). cauliflower (*Brassica oleracea* var. *botrytis*), onion (*Allium* cepa), turf grasses: zoysia grass (*Zoysia tenuifolia*), St. Augustine grass (*Stenotaphrum secundatum*) and Bermuda grass (*Cynodon dactylon*). tomato (*Lycopersicum esculentum*), carrot (*Daucus carota*) and cucumber (*Cucumis sativum*). Seeds were surface-disinfected in 1% sodium hypochlorite for 10 min. rinsed with sterile distilled water and aseptically blotted between two layers of wet sterile paper into petri dishes. They were allowed to germinate for 4 days at 260 C in the dark. Isolates were grown on water agar for 2 days at 260 C. Five germinated seeds were then placed around the fungal colony. The plates were incubated at room temperature in the lab bench. and pathogenicity was assayed for the first time 7-10 days after the tests were set. and subsequent observations were made afterwards every two days. The *Rhizoctonia solani* AG 4 strain Me8-2 (Boysen *et al*., 1996) was used as positive control. since this strain is known to be very pathogenic to all plant species tested. A negative control of germinated seeds without fungus was included in each of the tests.

Crucifers (radish and cauliflower) are susceptible to all *Rhizoctonia* isolates tested. regardless of whether they were multinucleated or binucleate. The same was true for onion. Grass, tomato and carrot were susceptible to all multinucleated *Rhizoctoniae* (Me 8.2, aA1, aA2), but were not susceptible to any of the binucleate strains. therefore protection tests were done with these plant species. The strains randomly chosen to test protection from the pathogenic strain Me 8.2 were the binucleate strains aB and F2. Cucumber was susceptible to all strains tested, except for S7, therefore this strain was subsequently tested for protection from the pathogenic strain Me 8.2. The strain Me 8.2 showed significatively stronger pathogenicity than any other strains tested, and this was seen in shorter times needed to attack the plant, and complete killing of the seedling, whereas with other pathogenic strains the seedlings were damaged, but not as much affected as with isolate Me 8.2. In the pathogenicity tests was also observed that in some cases the seeds had not been completely surface sterilised, and in the negative control (no fungus) was observed growth of some fungi other than *Rhizoctonia*, yeast or bacteria. but when *Rhizoctonia* had colonised the seedlings, there was no growth of these contaminants.

The strains that did not show pathogenicity towards one or more plant species were tested for protection from the pathogenic strain Me 8.2. This was done by inoculating both the pathogenic strain and the supposedly protective strain. This was done in two ways, simultaneously (both strains inoculated at the same time) and successively (first the supposedly protective strain was allowed to colonise the plants surface for three days and then the pathogenic strain was inoculated). A negative control (no fungus), a positive control (the pathogenic strain Me 8.2), and the supposedly protective strain alone were included for each of the plant species in the tests. Protection was assayed for the first time 7 days after the tests were set, and subsequent observations were made every two days.

For grass, tomato and carrot, it was observed that the negative control (no fungus) presented contamination from other fungus. yeast and/or bacteria. whereas the control with protective strains B and F2 were clean. that is. *Rhizoctonia* did not allow any of the contaminants carried in the seed to grow. As expected, plants inoculated with protective strains B and F2 looked completely healthy, whereas plants inoculated with Me 8.2 were heavily injured. In the simultaneous test (that is. protective and pathogenic strains inoculated at the same time) there was no protection of the binucleate strains from the pathogenic Me 8.2. But in the successive test, in which the binucleate strains B and F2 were allowed to colonise the plant surface prior to adding the pathogenic strain, a very clear protective effect was observed. and the plants looked as healthy as the negative control and the control with the binucleate strains alone. Furthermore, it was also observed that the seedlings covered by the protective strains looked slightly bigger than the negative control, thus pointing to the possibility that there is an increased growth response induced by the non-pathogenic *Rhizoctonia* isolates. This has already been described by (Sneh *et al*., 1986). In cucumber, although some protection was seen, we could not observe a clear protective effect of strain S7, therefore we could not conclude that strain S7 acts as a protective strain in cucumber.

### Example 2: Detailed Investigations

Pathogenicity tests were performed to test whether the isolates candidates for protection against other fungal pathogens such as *Rhizoctonia solani* were themselves not pathogenic towards the plant species to be protected.

Seeds of each plant species to be tested were surface-disinfected in 1% sodium hypochlorite for 10 min, rinsed with sterile distilled water and aseptically blotted between two layers of wet sterile paper into petri dishes. They were allowed to germinate for 4 days at 26 °C in the dark. Isolates were grown in 9 cm diameter Petri dishes containing 2% water agar for 2 days at 26 °C. Five germinated seeds were then placed around the fungal colony. The plates were incubated at room temperature in the lab bench. and pathogenicity was assayed for the first time 7-10 days after the tests were set. and subsequent observations were made afterwards every two days. The *Rhizoctonia solani* AG 4 strain Me 8.2 (Boysen *et al*.) was always included as a positive control, since this strain is known to be very pathogenic to all plant species tested. A negative control of germinated seeds without fungus was included in each of the tests.

The strains that did not show pathogenicity towards one or more plant species were tested for protection from the pathogenic strain Me 8.2. This was done by inoculating both the pathogenic strain and the supposedly protective strain. This was done in two ways, simultaneously (both strains inoculated at the same time) and consecutively (first the supposedly protective strain was allowed to colonize the plants surface for three days and then the pathogenic strain was inoculated). A negative control (no fungus), a positive control (the pathogenic strain Me 8.2), and the supposedly protective strain alone were included for each of the plant species in the tests. Protection was assayed for the first time 7 days after the tests were set, and subsequent observations were made every two days. In some experiments, Eab-alphaB was also included. It is another experimental isolate employed for the purposes of comparison.

The following tests were carried out:
Protection test 1 Protection of grass. tomato and carrot seedlings with the binucleate *Rhizoctonia* isolates Eab-F2 and Eab-alphaB from the pathogenic *Rhizoctonia* Me 8.2 strain in simultaneous and consecutive tests in plates.
Protection test 2 Protection of pine using Eab-alphaB
Protection test 3 Protection of pine seedlings with the binucleate strains Eab-F2 and Eab-aB against the pathogenic strains Me 8.2 and Pin in simultaneous and consecutive tests under plate, flasks and greenhouse conditions.
Protection test 4 Protection of wheat seedlings and plants with binucleate *Rhizoctonia* strains against the pathogenic strains *Rhizoctonia* Me 8.2. *Rhizoctonia* RAlb and *Fusarium* sp. in simultaneous and consecutive tests in plates. greenhouse and field conditions
Protection test 5 Protection of rape seedlings and plants with binucleate *Rhizoctonia* strains against the pathogenic strains *Rhizoctonia* Me 8.2. *Rhizoctonia* RAlb, *Rhizoctonia* alphaB and Altermaria sp. in simultaneous and consecutive tests in plates and greenhouse conditions.
Protection test 6 Protection of alfalfa seedlings with the binucleate strains Eab-S1 and Eab-S7 against the pathogenic strains *Rhizoctonia* Me 8.2. *Rhizoctonia* RAlb and *Fusarium* sp. in simultaneous and consecutive tests under plate conditions.
Protection test 7 Protection of garlic bulbs with binucleate *Rhizoctonia* strains from pathogenic *Penicillium* sp. in direct inoculation assay at laboratory scale.
Protection test 8 Protection of sugar beet seedlings with the binucleate *Rhizoctonia* isolates Eab-F1, Eab-F2, Eab-F3, Eab-F5, Eab-S1 and Eab-S7 against the pathogenic strains *Rhizoctonia* Me 8.2, *Rhizoctonia* RAlb and *Fusarium* sp. in simultaneous and consecutive tests in plates.
Protection test 9 Protection of onion seedlings with the binucleate *Rhizoctonia* isolates Eab-F1, Eab-F3, Eab-F5 and Eab-F6 against the pathogenic strains *Rhizoctonia* Me 8.2, *Rhizoctonia* RAlb and *Fusarium* sp. in simultaneous and consecutive tests in plates.

All the tests have been performed in Petri dishes in the laboratory, except for the pine experiments, that have been done with pine seedlings growing on peat in a greenhouse in Albacete (Protection tests 2 and 3), and the wheat experiments, that have been performed in greenhouse as well as in field experiments (Protection test 4).

Data and graphs are included for providing a graphical view of the protection effects in the experiments. Data are referred in all the cases to the best protective strains concerning its behaviour in terms of protection. Thus, tables show the combination of those strains in each assay and the effects produced. expressed as coefficients using Butler's scale (1 to 5, being 5 the more pathogenic effect) for disease measurement. Finally, those data are expressed in bar histograms.

### Protection test 1

Protection of grass. tomato and carrot seedlings with the binucleate *Rhizoctonia* isolates Eab-F2 and Eab-alphaB from the pathogenic *Rhizoctonia* Me 8.2 strain in simultaneous and consecutive tests in plates.
- PLANT SPECIES: grass, tomato, carrot
- STRAINS TESTED: Eab-F2, Eab-alphaB
- TIMING: simultaneous, consecutive
- DATE: November 1997

Two protective isolates, Eab-F2 and Eab-alphaB, were used to assay protection effects in grass, tomato and carrot against the pathogenic *Rhizoctonia* isolate Me 8.2. The pathogenic strain and the supposedly protective strain were inoculated in two ways, simultaneously (both strains inoculated at the same time) and consecutively (first the supposedly protective strain was allowed to colonize the plants surface for three days and then the pathogenic strain was inoculated). A negative control (no fungus). a positive control (the pathogenic strain Me 8.2), and the supposedly protective strain alone were included for each of the plant species in the tests.

The tables shows the results of plate assays. Presence or absence of protection effects is indicated as estimation of infected vegetal surface (using Butler scale). Three numbers correspond to 3 counts: 1. 17/11/97, 2. 19/11/97, 3. 21/11/97. Date of simultaneous inoculation: 11/11/97: date of consecutive inoculation: 14/11/97

Grass, tomato and carrot protection test

| | C- (no fungus) | C+ Me 8.2 | Eab-F2 | Eab-alphaB | Eab-F2/ Me 8.2 Simult. | Eab-F2/ Me 8.2 consec. | Eab-alphaB/ Me 8.2 simult. | Eab-alphaB/ Me 8.2 consec. |
|---|---|---|---|---|---|---|---|---|
| Tomato | 0-0-0 | 4-4-5 | 0-0-0 | 0-0-0 | 4-4-5 | 0-0-0 | 4-4-5 | 0-0-0 |
| Carrot | 0-0-0 | 5-5-5 | 0-0-0 | 1-1-1 | 5-5-5 | 1-1-1 | 4-5-5 | 0-1-1 |
| Grass | 0-0-0 | 0-2-3 | 0-0-0 | 0-0-0 | 0-1-2 | 0-0-0 | 0-3-3 | 0-0-0 |

### Disease scale (BUTLER CODE) (referred to infected surface)

0. without detectable infection, 1. infection until 10 %., 2. infection 11-30 %, 3. infection 31-50 %, 4. infection 51-80 %, 5 more than 80 %

In all three plant species, grass, tomato and carrot. there was a very clear protection effect of the two binucleate strains tested, Eab-F2 and Eab-alphaB, from the pathogenic isolate Me 8.2 when the protective strain was inoculated and allowed to colonize the surface before the pathogenic strain was applied, that is. in the consecutive essay. In the simultaneous essay, the pathogenic strain Me 8.2 showed the same pathogenicity behaviour when applied together with the protective strain that when applied alone. That is probably because the pathogenic strain grows faster than the protective strain, therefore is the first one to colonize the plant surface.

It was also observed that in the positive control (no fungus) there were contaminations produced by other fungi, yeast and bacteria, whereas the plates inoculated only with the protective strain showed no growth of such contaminants.

### Protection test 2

- PLANT SPECIES: Pine
- STRAINS TESTED: Eab-alphaB
- DATE: April 1998

The initial material were trays containing each one 54 pots. In each pot there was a variable number of seeds, since more than one seed had been sawed per pot. At the moment of inoculation of the strains, seedlings had not emerged yet. The pathogenic strain used was Pin, a strain initially isolated from pine. The protective strain was Eab-alphaB.

We tried changing different parameters. such as inoculum concentration of the protective strain, the protective strain was added as a suspension in liquid medium or grown on sterile sand and adding different fungicide concentrations.

The seedlings had not emerged at the moment when we applied the protective strain. The observations after applying the strains were hindered by the fact that the substrate used to grow the pine seedlings had a very high sand content, and the humidity compacted the sand, creating a hard layer that did not allow emergence of the seedlings. Therefore it was not possible to draw any conclusions from this experiment, and it was repeated with seedlings that were already emerged (see Protection Test 3)

### Protection test 3

Protection of pine seedlings with the binucleate strains Eab-F2 and Eab-aB against the pathogenic strains Me 8.2 and Pin in simultaneous and consecutive tests under plate, flasks and greenhouse conditions.
- PLANT SPECIES: Pine
- STRAINS TESTED: Eab-F2, Eab-aB
- DATE: May 1998

PLATES AND FLASKS. We have tested 2 binucleate *Rhizoctonia* protective strains (Eab-F2 and Eab-aB) against two pathogenic *Rhizoctonia* strains, Me 8.2 and Pin. The strain Me 8.2 has been chosen as a pathogenic control, due to the fact that this pathogenic strain has been shown to have a broad range of hosts (including pine). Pin strain has been isolated as pathogen on pine in the field. Protective strains were inoculated in culture flasks and petri dishes (assays were duplicate under these two systems) with solid media (water agar: 15 g Bacto Agar, 11 distilled water), containing one (in the case of flasks) or two (petri dishes) pine seedling each one. Pine seeds were previously sterilized and germinated according to the following protocol: introduce seeds 36 h on distilled water at 5 °C; then, wash the seeds 5 min. with a solution containing 3 drops of Tween 80 on 100 ml of distilled water; wash again with distilled water (at least three washes); introduce seeds 15 min on a solution containing hydrogen peroxide 30%; wash (three times at least) with distilled water; put 15-20 seeds on a petri dish containing water agar (15 g Bacto Agar, 11 distilled water) and incubate them inverted at 21 °C on the dark about 14 days. The pathogenic strains were applied at two moments with respect to the protective strains, simultaneously or consecutively, 7 days after simultaneous inoculation in order to determine whether some kind of advantage in terms of accession and colonization of the host plant could lead to an increasing protection effect.

GREENHOUSE. The initial plant material were pine seedlings that were already emerged in greenhouse trays containing each one 54 pots. In each spot there was a variable number of seedlings, since more than one seed had been sawed per pot. At the moment of inoculation of the fungus, the seedlings were about 2 cm above the soil surface. We tested two supposedly protective strains. Eab-F2 and Eab-aB, two supposedly pathogenic strains, Me 8.2 and Pin, and two ways of applying the protective strain. directly in liquid suspension in the soil. or the strain previously grown in sterile peat. We studied protection at two different moments: simultaneous, by applying the protective and the pathogenic strain at the same moment, and consecutive, by allowing the protective strain to colonize the plant surface and applying the pathogenic strain three weeks after the protective strain. As an additional test. we also treated some trays with fungicide. The first observations were done 6 weeks after the application of the pathogenic strains, and subsequent observations were done also 9, 12 and 24 weeks after. There were a total of 18 trays, and each of the trays was treated in a different way:
1. negative control, no treatment
2. protective strain Eab-aB in liquid suspension
3. protective strain Eab-F2 in liquid suspension
4. protective strain Eab-aB in peat
5. protective strain Eab-F2 in peat
6. pathogenic strain Me 8.2
7. pathogenic strain Pin
8. negative control, the same media of the fungal suspension
9. simultaneous test with the protective Eab-aB and the pathogenic Me 8.2
10. simultaneous test with the protective Eab-aB and the pathogenic Pin
11. simultaneous test with the protective Eab-F2 and the pathogenic Me 8.2
12. simultaneous test with the protective Eab-F2 and the pathogenic Pin
13. consecutive test with the protective Eab-aB and the pathogenic Me 8.2
14. consecutive test with the protective Eab-aB and the pathogenic Pin
15. consecutive test with the protective Eab-F2 and the pathogenic Me 8.2
16. consecutive test with the protective Eab-F2 and the pathogenic Pin
2.1. fungicide
2.2. fungicide

PLATES. Due to the nature and design of plate and flask protection tests in pine seedlings, results are expressed as visual estimation of photographs.

GREENHOUSE. The countings of the surviving pine seedlings, performed 24 weeks after inoculation of the pathogenic strains, were as follows:

| | | |
|---|---|---|
| 1. | negative control. no treatment | 122 |
| 2. | protective Eab-alphaB in liquid suspension | 150 |
| 3. | protective Eab-F2 in liquid suspension | 120 |
| 8. | negative control, the same media of the fungal suspension | 94 |
| 7. | pathogenic strain Pin | 9 |
| 10. | simultaneous with protective Eab-alphaB and pathogenic Pin | 5 |
| 12. | simultaneous with protective Eab-F2 and pathogenic Pin | 43 |
| 14. | consecutive with protective Eab-alphaB and pathogenic Pin | 119 |
| 16. | consecutive with protective Eab-F2 and pathogenic Pin | 104 |
| 2.1. | fungicide | 102 |
| 2.2. | fungicide | 92 |

Applying statistics. the results can be interpreted as follows:

PLATES. Results from both flasks and plates tests have shown a strong correspondence between laboratory and greenhouse results. In this sense, a clear protection effect can be observed by the two protective strains assayed (Eab-F2 and Eab-aB) against pin and Me 8.2 strains. As observed at greenhouse scale (see comments below), this protection effect is increased when consecutive inoculation of the pathogenic strain is made.

GREENHOUSE. We have tested two protective strains, Eab-F2 and Eab-aB, and two pathogenic strains, Me 8.2 and Pin. The pathogenic strains were added at the same time than the protective strain (simultaneous test) and 3 weeks after the protective strain was added (consecutive test).

It was observed that:
- the pathogenic strain Pin was strongly pathogenic (see "Pin" at the photographs), whereas the strain Me 8.2, which is a very severe pathogen in other plant species, was not pathogenic towards pines.
- the protective strains inoculated alone were not pathogenic at all towards the pine seedlings (see "Eab-aB and Eab-F2")
- there was no difference in applying the protective strain in liquid suspension or in peat
- there was no protection effect of Eab-aB against Pin when they were applied at the same time (simultaneous test), but there was some protection effect of F2 against Pin at the simultaneous test.
- there was a very clearly observed protection effect of Eab-aB and Eab-F2 against Pin if they were inoculated some weeks before the pathogenic strain (consecutive test), therefore allowed to colonize the substrate and carry out their protection effect. This protection effect was very high, and the number of living seedling was of the same range as for the negative controls (no fungus) or the protective strain alone.

### Protection test 4

Protection of wheat seedlings and plants with binucleate *Rhizoctonia* strains against the pathogenic strains *Rhizoctonia* Me 8.2, *Rhizoctonia* RAlb and *Fusarium* sp. in simultaneous and consecutive tests in plates. greenhouse and field conditions
PLANT SPECIES wheat
STRAINS TESTED
PROTECTIVES (PLATES): 2815, 521, Eab-F1, Eab-F2, Eab-F3, Eab-F5, Eab-F6, Eab-F7,
Eab-S1, Eab-S2. ab-S3, Eab-S4, Eab-S5, Eab-S6, Eab-S7. (GREENHOUSE): Eab-F5. Eab-S6.
(FIELD): Eab-F5, Eab-S6.
PATHOGENS (PLATES): *Rhizoctonia* Me 8.2, *Rhizoctonia* RAlb, *Rhizoctonia* aB, *Fusarium,* Acremonium.
(GREENHOUSE): *Fusarium, Rhizoctonia* RAlb.
(FIELD): *Fusarium, Rhizoctonia* RAlb.
TIMING PLATES: simultaneous, consecutive
GREENHOUSE: simultaneous, consecutive seedling stage, consecutive plant stage
FIELD: simultaneous, consecutive seedling stage, consecutive plant stage.
DATE January-April 1999

### 4a. PLATES

We have tested 15 binucleate *Rhizoctonia* protective strains (described in the introduction) against five pathogenic fungi; three of them were *Rhizoctonia* strains. including *Rhizoctonia* Me 8.s as a positive control, one *Rhizoctonia* RAlb strain isolated from wheat debris in Albacete and a third *Rhizoctonia*, aB, isolated from alfalfa in Albacete. The other two pathogens assayed *(Fusarium* and Acremonium strains) were also isolated from wheat samplings in Albacete. Assays were carried out in petri dishes containing about 20 ml of water-agar (15 g Bacto Agar, 11 distilled water) and performed at room temperature. Seeds were previously surface sterilized (ethanol 70% 2'; sodium hypochlorite 5% with Tween 0.005% 15' and at least five washes in distilled water) and germinated in culture chamber at 28°C in the dark.

Pathogenic strains were applied at two moments with respect to the protective fungi. in order to determine whether some kind of advantage in terms of colonization of the host by the protective strain could lead to an increasing protection effect. Thus. in some cases binucleate *Rhizoctonias* were inoculated simultaneously with the pathogen, and in others. pathogenic strains were inoculated 3 days after the protective ones.

The table shows the results of plate assays. Presence or absence of protection effects are indicated as estimation of infected vegetal surface (using Butler scale). Three numbers correspond to 3 counts: 1. 29/01/99, 2. 01/02/99, 3. 03/02/99. Date of simultaneous inoculation: 20/01/99: date of consecutive inoculation: 23/01/99

Wheat protection test

| | Me 8.2 Simult. | Me 8.2 Conse c. | RAlb Simult. | RAlb. Consec. | Alpha B Simult. | Alpha B Conse cutive | Fus. Simult. | Fus. Consec. | Acrem. Simult. | Acrem. Consec. |
|---|---|---|---|---|---|---|---|---|---|---|
| None | 3-3-3 | | 1-2-3 | | 0-0-0 | | 1-3-3 | | 0-0-0 | |
| 2815 | 0-0-0 | 0-0-0 | 0-0-1 | 1-1-1 | 0-0-0 | 0-0-0 | 0-0-0 | 0-0-0 | 1-1-1 | 0-1-1 |
| 521 | 0-0-0 | 0-0-0 | 1-1-2 | 1-2-3 | 0-0-1 | 0-0-0 | 0-0-0 | 0-0-0 | 0-0-0 | 0-0-0 |
| Eab-F1 | 1-2-2 | 0-0-0 | 1-2-3 | 1-1-2 | 0-0-0 | 0-1-1 | 0-2-2 | 0-0-0 | 0-0-0 | 0-0-0 |
| Eab-F2 | 0-0-1 | 0-2-2 | 2-2-3 | 0-0-0 | 0-0-0 | 0-0-0 | 1-3-3 | 0-0-0 | 0-0-0 | 1-1-1 |
| Eab-F3 | 1-1-2 | 0-0-0 | 1-1-1 | 0-1-1 | 0-0-0 | 0-1-1 | 1-2-3 | 0-0-0 | 0-0-0 | 0-0-0 |
| Eab-F5 | 0-0-0 | 0-0-1 | 0-1-2 | 0-0-1 | 0-0-0 | 0-0-0 | 1-2-3 | 0-0-0 | 0-0-0 | 0-0-0 |
| Eab-F6 | 1-1-1 | 0-0-0 | 1-2-3 | 0-1-2 | 0-0-0 | 0-0-0 | 1-2-3 | 0-0-0 | 0-0-0 | 0-0-0 |
| Eab-F7 | 1-1-1 | 0-0-0 | 1-2-3 | 1-1-2 | 1-1-1 | 0-0-0 | 1-1-1 | 0-0-0 | 0-0-0 | 0-1-1 |
| Eab-S1 | 0-0-0 | 1-2-2 | 1-2-2 | 1-2-3 | 0-0-0 | 0-0-0 | 0-0-0 | 0-0-0 | 0-0-0 | 0-0-0 |
| Eab-S2 | 0-0-0 | 0-1-1 | 1-2-3 | 1-1-2 | 0-0-0 | 0-0-0 | 1-1-2 | 0-0-0 | 0-0-0 | 0-0-0 |
| Eab-S3 | 1-2-3 | 0-1-1 | 1-2-2 | 2-3-3 | 0-0-0 | 0-0-0 | 1-1-2 | 0-0-0 | 0-0-0 | 0-0-0 |
| Eab-S4 | 0-0-0 | 0-0-0 | 0-1-3 | 1-1-1 | 0-0-0 | 0-0-0 | 1-2-2 | 0-0-0 | 0-0-0 | 0-0-0 |
| Eab-S5 | 0-0-0 | 0-1-1 | 0-1-3 | 0-1-2 | 0-0-0 | 0-0-0 | 1-2-3 | 0-0-0 | 0-0-0 | 0-0-0 |
| Eab-S6 | 0-0-0 | 0-0-0 | 0-0-0 | 0-0-0 | 0-0-0 | 0-0-0 | 0-0-0 | 0-0-0 | 0-0-0 | 0-0-0 |
| Eab-S7 | 1-1-2 | 0-1-2 | 1-2-3 | 1-2-3 | 0-1-1 | 0-0-0 | 1-2-3 | 0-0-0 | 0-0-0 | 0-0-0 |
| A1 | 2-3-3 | 1-3-3 | 2-3-3 | 2-2-3 | 1-1-1 | 2-3-3 | 2-3-4 | 2-3-3 | 2-3-3 | 2-3-3 |
| A2 | 2-3-3 | 2-2-3 | 1-2-3 | 2-3-4 | 1-1-1 | 2-3-3 | 2-3-3 | 2-3-3 | 2-3-3 | 2-3-3 |

In general terms, protection effects are increased when consecutive inoculation of first the protective strain and then the pathogenic strain is done. Thus, when pathogenic strain is inoculated time after, protective fungi have the advantage in colonizing the host plant. increasing significantly the protection.

Plate assays shows that the degree and effectiveness of the protection depends on the type of pathogenic strain assayed, as well as the protective strain tested. In this way. it has been shown that protection of wheat from pathogens is clearly more effective if *Fusarium* and *Rhizoctonia* Ralb are inoculated as pathogens. Plants inoculated with pathogenic *Rhizoctonia*. Me 8.2 strain, (used as a positive control since this isolate is known to be highly pathogenic) were less protected and this little protection effect was only seen with consecutive inoculation.

Finally, strains Eab-S6 and Eab-F5 have been proven to be the most interesting protective strains at laboratory assay. Those two strains showed the highest rates of protection against the pathogens tested and were selected to perform greenhouse and field assays. In addition, we decided to select *Fusarium* and *Rhizoctonia* RAlb as the most suitable pathogenic fungi to be tested in greenhouse and field together with the protective fungi above mentioned because they are isolated from the same location where greenhouse and field tests were going to be carried out.

### 4b. GREENHOUSE

The two protective strains selected, S6 and F5 have been shown to have highest protection properties against two selected pathogenic strains. *Fusarium* and *Rhizoctonia* RAlb. Greenhouse assay was carried out in 48-pot trays disposed over a cement layer and grouped in two separated blocks (sterilized vs non-sterilized peat), distant 2 m from each others. with a separation between trays inside each block of at least 50 cm in order to prevent crossed contaminations. Three wheat seeds were disposed in each pot to reduce the existence of non-germinating ones; after early emergence of the seedlings, some of them were removed and one seedling per pot was left. The trays (32 study cases) were inoculated at three moments: simultaneous inoculation of the protective and pathogenic strains 20 days after sowing; consecutive, adding the pathogen at seedling stage (14 days after protective strain inoculation) and consecutive at mature plant-stage, adding the pathogen 30 days after protective strain inoculation. Factors such as presence or absence of fungicide (fungicide treatment was a combination of Metil-Toclofos and Tiram. effective against *Fusarium*-like and *Rhizoctonia* diseases), as well as the use of sterilized or unsterilized peat were introduced in order to evaluate the effect of such variables on the protection. An scheme showing the several statistical cases and interactions considered is provided below.

| | | | | | |
|---|---|---|---|---|---|
| 1 | control | simultaneous | control | no | no |
| 2 | control | plant | *Rhizoctonia* | simultaneous | no |
| 3 | control | simultaneous | *Fusarium* | no | simultaneous |
| 4 | control | plant | *Rhizoctonia* | no | simultaneous |
| 5 | *Rhizoctonia* | plantlet | control | simultaneous | no |
| 6 | *Rhizoctonia* | simultaneous | *Fusarium* | no | no |
| 7 | *Rhizoctonia* | plantlet | control | no | simultaneous |
| 8 | *Rhizoctonia* | plantlet | *Rhizoctonia* | simultaneous | simultaneous |
| 9 | *Rhizoctonia* | simultaneous | control | no | simultaneous |
| 10 | *Rhizoctonia* | simultaneous | *Fusarium* | simultaneous | simultaneous |
| 11 | control | plant | control | no | no |
| 12 | control | plant | control | simultaneous | simultaneous |
| 13 | *Rhizoctonia* | plantlet | *Rhizoctonia* | no | no |
| 14 | control | plantlet | control | no | no |
| 15 | *Rhizoctonia* | plant | control | simultaneous | no |
| 16 | control | simultaneous | control | no | no |
| 17 | *Rhizoctonia* | simultaneous | control | simultaneous | no |
| 18 | *Rhizoctonia* | simultaneous | control | simultaneous | no |
| 19 | *Rhizoctonia* | plant | *Fusarium* | no | no |
| 20 | control | simultaneous | *Rhizoctonia* | simultaneous | no |
| 21 | control | simultaneous | control | simultaneous | simultaneous |
| 22 | *Rhizoctonia* | plant | control | no | simultaneous |
| 23 | *Rhizoctonia* | simultaneous | *Rhizoctonia* | simultaneous | simultaneous |
| 24 | *Rhizoctonia* | simultaneous | control | no | simultaneous |
| 25 | control | plantlet | *Fusarium* | simultaneous | no |
| 26 | control | plantlet | control | simultaneous | simultaneous |
| 27 | *Rhizoctonia* | simultaneous | *Rhizoctonia* | no | no |
| 28 | control | simultaneous | *Rhizoctonia* | no | simultaneous |
| 29 | control | simultaneous | control | simultaneous | simultaneous |
| 30 | control | plantlet | *Fusarium* | no | simultaneous |
| 31 | *Rhizocronia* | plant | *Fusarium* | simultaneous | simultaneous |
| 32 | control | simultaneous | *Fusarium* | simultaneous | no |

Greenhouse tests will be considered as finished when wheat plants will be completely mature and ready to harvest. At the moment, measurement of crop efficiency is not yet finished and results are based on comparative visual estimations (those are shown as several figures at the end).

| | | | |
|---|---|---|---|
| *Rhizoctonia* S6 | simultaneous | *Fusarium* | control |
| control | simultaneous | control | *Fusarium* |
| *Rhizoctonia* F5 | simultaneous | *Rhizoctonia* AG2 | *Fusarium* |
| control | plant | control | control |
| control | plantlet | *Fusarium* | control |
| *Rhizoctonia* S6 | simultaneous | control | *Fusarium* |
| *Rhizoctonia* F5 | simultaneous | control | control |
| *Rhizoctonia* F5 | plantlet | control | control |
| *Rhizoctonia* S6 | plant | *Rhizoctonia* AG2 | control |
| control | simultaneous | *Rhizoctonia* AG2 | control |
| control | plant | control | *Fusarium* |
| control | simultaneous | control | control |
| *Rhizoctonia* F5 | plant | *Fusarium* | *Fusarium* |
| control | simultaneous | *Fusarium* | *Fusarium* |
| *Rhizoctonia* S6 | plantlet | control | *Fusarium* |
| control | plantlet | *Rhizoctonia* AG2 | *Fusarium* |

Protection against the two pathogenic strains used, *Fusarium* sp and *Rhizoctonia* Ralb (Albacete strain) were observed (visual estimation). This protection effect was specially patent against *Fusarium* sp., where both protective strains Eab-S6 and Eab-F5 where shown to be remarkably efficient in protecting and preventing *Fusarium* disease. Symptoms of *Fusarium* attack appeared by middle of May (five months after inoculation) and consisted on a progressive drying (the so-called "añublo de espigas") of the spike just before pollination, becoming sterile many of them. Finally, correlation between visual estimates and crop efficiency (determined by statistical methods) is expected; This would provide an effective method to quantify protection.

### 4c. FIELD

The same protective and pathogenic strains used in greenhouse were performed in field conditions. Strains were inoculated in 10 x 1.7 m plots at the same three moments as in greenhouse. Presence or absence of fungicide (same combined treatment used) were introduced as additional variables. A scheme showing the statistical cases and interactions considered is provided below.

At the moment, we have only available results from laboratory and greenhouse designs, since field test are currently developing.

### Protection test 5

Protection of rape seedlings and plants with binucleate *Rhizoctonia* strains against the pathogenic strains *Rhizoctonia* Me 8.2, *Rhizoctonia* RAlb, *Rhizoctonia* alphaB and Altermaria sp. in simultaneous and consecutive tests in plates and greenhouse conditions.
PLANT SPECIES rape
STRAINS TESTED
PROTECTIVES (PLATES): 2815. 521, Eab-F1, Eab-F3, Eab-F6. Eab-S1, Eab-S4. Eab-S6, Eab-S7,
(GREENHOUSE): Eab-F6, Eab-S6.
PATHOGENS (PLATES): *Rhizoctonia* Me 8.2 strain, *Rhizoctonia* RAlb strain, *Rhizoctonia* ???strain, Alternaria
(GREENHOUSE):Alternaria. RAlb.
TIMING
PLATES: simultaneous, consecutive
GREENHOUSE: simultaneous, consecutive seedling stage. consecutive plant stage
DATE January-April 1999

### 5a. PLATES

9 protective strains were used to assay protection effects in rape seedlings against pathogenic fungi. In addition, 3 pathogenic fungi were used in the protection assay; two of them were *Rhizoctonia* strains, including *Rhizoctonia* Me 8.2 (as a pathogenic control) and one *Rhizoctonia* RAlb isolated from Albacete. The last pathogen assayed (an Alternaria sp. strain) was also isolated from rape samplings in Albacete. Assays were carried out in petri dishes containing about 20 ml of water-agar (15 g Bacto Agar. 11 distilled water) and performed at room temperature. Seeds were previously surface sterilized (ethanol 70% 2'; sodium hypochlorite 5% with Tween 0.005 % 15' and at least five washes in distilled water) and germinated in culture chamber at 28°C in the dark.

Pathogenic strains were applied at two moments with respect to the protective fungi in order to determinate whether some kind of advantage in terms of colonization of the host by the protective strain could lead to an increasing protection effect. Thus. in some cases binucleate *Rhizoctonias* were inoculated simultaneously with the pathogen, and in others, pathogenic strains were inoculated 2 days after the protective ones.

Table shows the results of plate assays. Presence or absence of protective effects is indicated as estimation of infected vegetal surface (using Butler scale). Three numbers correspond to 3 counts realized on: 1. 29/01/99, 2. 01/02/99, 3. 03/02/99. Date of simultaneous inoculation: 20/01/99: date of consecutive inoculation: 22/01/99

Rape protection test

| | Me 8.2 Consec. | Me 8.2 Simult. | AlphaB Consec. | AlphaB Simult. | Altern. Consec. | Altern. Simult. | RAlb Consec. | RAlb Simult. |
|---|---|---|---|---|---|---|---|---|
| None | 4-5-5 | | 2-3-5 | | 1-1-3 | | 3-5-5 | |
| 2815 | 0-0-0 | 2-3-3 | 0-1-1 | 0-0-0 | 0-2-2 | 0-0-0 | 0-0-0 | 2-2-3 |
| 521 | 1-2-2 | 3-4-5 | 0-0-0 | 0-0-0 | 0-0-0 | 0-0-1 | 0-1-1 | 1-4-5 |
| Eab-F1 | 0-0-0 | 5-5-5 | 0-0-1 | 1-2-3 | 0-0-1 | 0-0-0 | 0-0-0 | 1-3-3 |
| Eab-F3 | 1-1-2 | 3-5-5 | 1-1-2 | 1-2-3 | 0-1-1 | 0-0-0 | 0-0-0 | 3-4-5 |
| Eab-F6 | 0-0-0 | 3-4-4 | 0-0-0 | 1-2-3 | 0-0-0 | 0-0-0 | 0-0-0 | 1-3-3 |
| Eab-S1 | 0-0-0 | 4-5-5 | 0-0-0 | 0-1-2 | 0-0-0 | 0-0-0 | 0-0-0 | 3-4-5 |
| Eab-S4 | 0-1-1 | 3-5-5 | 0-1-1 | 1-2-2 | 0-0-1 | 0-0-1 | 0-0-0 | 1-3-3 |
| Eab-S6 | 0-0-1 | 0-1-2 | 1-1-2 | 1-2-2 | 0-1-2 | 0-0-1 | 0-0-0 | 0-0-0 |
| Eab-S7 | 0-0-1 | 3-5-5 | 0-0-0 | 2-3-3 | 0-0-0 | 0-0-1 | 0-0-0 | 1-4-4 |
| A1 | 2-4-5 | 3-4-5 | 2-4-4 | 1-4-4 | 2-4-5 | 1-3-4 | 1-4-4 | 2-4-4 |
| A2 | 3-4-4 | 1-4-5 | 1-4-4 | 2-3-4 | 1-4-5 | 2-3-4 | 2-4-5 | 2-3-4 |

After finishing the plate assays, the best two protective strains were selected in order to test them at greenhouse scale. We have observed a remarkably protection effect by binucleate *Rhizoctonia* strains against the selected pathogens in rape.

*Rhizoctonia* Me 8.2 strain. *Rhizoctonia* RAlb and Alternaria sp. were demonstrated to be pathogens to rape and protection against them was observed in laboratory. This was specially patent for those plates with consecutive inoculation moment. where protection effects were well observed since the firsts stages of the assay.

Finally, the two protective strains chosen were Eab-S6 and Eab-F6 (they result always protective against all pathogens tested in consecutive inoculation and, in some cases, even at simultaneous moment), and were assayed in greenhouse against *Rhizoctonia* RAlb and Alternaria strain as selected pathogens (these last were selected because of the origin of the strain, being isolated from rape plants in the study area).

### 5b. GREENHOUSE

The two protective strains selected. Eab-S6 and Eab-F6 have been shown to have highest protection against two selected pathogens (Alternaria and *Rhizoctonia* RAlb). Greenhouse assay was carried out in 48-pot trays disposed over a cement layer and grouped in two separated blocks (sterilized vs non-sterilized peat), distant 2 m from each others. with a separation between trays inside each block of at least 50 cm in order to prevent crossed contaminations. The trays (32 study cases) were inoculated at three moments: simultaneous inoculation of the protective strains and pathogens 7 days after sowing; consecutive. adding the pathogen at seedling stage (9 days after simultaneous inoculation) and consecutive at mature plant stage, adding the pathogen 21 days after simultaneous inoculation). Factors such as presence or absence of fungicide., as well as the use of sterilized or unsterilized peat as substrate were introduced in order to evaluate the effect of such variables on the protection effects. Temperature inside the greenhouse and irrigation system were also controlled and periodically recorded. A scheme showing the several statistical cases and interactions considered for further statistic studies is provided below.

| | | | | | |
|---|---|---|---|---|---|
| 1 | control | simultaneous | control | no | no |
| 2 | control | plant | *Rhizoctonia* | simultaneous | no |
| 3 | control | simultaneous | *Fusarium* | no | simultaneous |
| 4 | control | plant | *Rhizoctonia* | no | simultaneous |
| 5 | *Rhizoctonia* | plantlet | control | simultaneous | no |
| 6 | *Rhizoctonia* | simultaneous | *Fusarium* | no | no |
| 7 | *Rhizoctonia* | plantlet | control | no | simultaneous |
| 8 | *Rhizoctonia* | plantlet | *Rhizoctonia* | simultaneous | simultaneous |
| 9 | *Rhizoctonia* | simultaneous | control | no | simultaneous |
| 10 | *Rhizoctonia* | simultaneous | *Fusarium* | simultaneous | simultaneous |
| 11 | control | plant | control | no | no |
| 12 | control | plant | control | simultaneous | simultaneous |
| 13 | *Rhizoctonia* | plantlet | *Rhizoctonia* | no | no |
| 14 | control | plantlet | control | no | no |
| 15 | *Rhizoctonia* | plant | control | simultaneous | no |
| 16 | control | simultaneous | control | no | no |
| 17 | *Rhizoctonia* | simultaneous | control | simultaneous | no |
| 18 | *Rhizoctonia* | simultaneous | control | simultaneous | no |
| 19 | *Rhizoctonia* | plant | *Fusarium* | no | no |
| 20 | control | simultaneous | *Rhizoctonia* | simultaneous | no |
| 21 | control | simultaneous | control | simultaneous | simultaneous |
| 22 | *Rhizoctonia* | plant | control | no | simultaneous |
| 23 | *Rhizoctonia* | simultaneous | *Rhizoctonia* | simultaneous | simultaneous |
| 24 | *Rhizoctonia* | simultaneous | control | no | simultaneous |
| 25 | control | plantlet | *Fusarium* | simultaneous | no |
| 26 | control | plantlet | control | simultaneous | simultaneous |
| 27 | *Rhizoctonia* | simultaneous | *Rhizoctonia* | no | no |
| 28 | control | simultaneous | *Rhizoctonia* | no | simultaneous |
| 29 | control | simultaneous | control | simultaneous | simultaneous |
| 30 | control | plantlet | *Fusarium* | no | simultaneous |
| 31 | *Rhizoctonia* | plant | *Fusarium* | simultaneous | simultaneous |
| 32 | control | simultaneous | *Fusarium* | simultaneous | no |

Greenhouse assays are actually developing and results have been referred just to laboratory tests. No field assays were disposed for rape because of the weather conditions by this period of the year.

### Protection test 6

Protection of alfalfa seedlings with the binucleate strains Eab-S1 and Eab-S7 against the pathogenic strains *Rhizoctonia* Me 8.2, *Rhizoctonia* RAlb and *Fusarium* sp. in simultaneous and consecutive tests under plate conditions.
- PLANT SPECIES: alfalfa
- STRAINS TESTED: Eab-S1, Eab-S7
- TIMING: simultaneous, consecutive
- DATE: May 1999
Two protective binucleate *Rhizoctonia* strains (Eab-S1 and Eab-S7) were used to assay protection effect in alfalfa seedlings against selected pathogenic fungi. In this sense. 3 pathogenic fungal strains were assayed in the experimental design: two of them were *Rhizoctonia* strains, including *Rhizoctonia* Me8.2 (as a pathogenic control) and *Rhizoctonia* RAlb strain isolated from Albacete. The third pathogen assayed (*Fusarium* strain) was isolated from alfalfa debris in the same province. Assays were carried out at laboratory scale in petri dishes containing about 20 ml of water-agar (15 g Bacto Agar. 11 distilled water) and performed at room temperature. Seeds were previously surface sterilized (ethanol 70% 2'; sodium hypochlorite 5% with Tween 0.005% 15' and at least five washes in distilled water) and pre-germinated in culture chamber at 28°C in the dark. The pathogenic strains were applied at two moments with respect to the protective strains, simultaneously or 6 days after in order to determine whether some kind of advantage in terms of accession and colonization of the host plant could lead to an increasing protection effect.

Tables shows the results of plate assays. Presence or absence of protection effects is indicated as estimation of infected vegetal surface (using Butler scale). Three numbers correspond to 3 counts: 1. 06/05/99, 2. 10/05/99, 3. 13/05/99. Date of simultaneous inoculation: 27/04/99: date of consecutive inoculation: 03/05/99

Alfalfa protection test

| 1* | Me 8.2 simult. | Me 8.2 consec. | RAlb simult. | RAlb consec. | Fus. simult. | Fus. consec. |
|---|---|---|---|---|---|---|
| None | 1-2-4 | | 2-3-5 | | 1-1-3 | |
| Eab-S1 | 0-1-2 | 0-0-0 | 1-3-4 | 0-0-0 | 1-2-2 | 0-1-1 |
| Eab-S7 | 2-3-4 | 1-1-1 | 2-4-4 | 0-0-0 | 1-1-2 | 0-0-0 |

| 2* | Me 8.2 simult. | Me 8.2 consec. | RAlb simult. | RAlb consec. | Fus. simult. | Fus. consec. |
|---|---|---|---|---|---|---|
| None | 1-3-5 | | 2-5-5 | | 1-2-3 | |
| Eab-S1 | 1-2-2 | 0-0-0 | 2-3-4 | 0-0-0 | 0-0-1 | 0-0-0 |
| Eab-S7 | 3-3-4 | 0-1-1 | 2-4-5 | 0-0-0 | 1-1-1 | 0-0-2 |

| | | | | | | |
|---|---|---|---|---|---|---|
| *1 and 2 means duplicate experiments | | | | | | |

Plant and protective strains controls

| | | | |
|---|---|---|---|
| PLANT (-) | 0 | 0 | 0 |
| Eab-S1 | 0 | 0 | 0 |
| Eab-S7 | 1 | 2 | 2 |

After finishing the plate assays, it can be observed that protection effect is produced by the two protective strains (Eab-S 1 and Eab-S7) used against the three pathogens assayed. In general terms. protection is increased when consecutive inoculation of first the protective strains and then the pathogenic strain is made. Thus. when pathogenic strain is inoculated time after, protective fungi seems to have the advantage in terms of competition for colonization sites in the tissues of the host plant, increasing significantly the protection. This phenomenon is especially patent when both *Rhizoctonia* Me 8.2 and *Rhizoctonia* RAlb are present as pathogens. In such cases, protection effect is always increased when consecutive inoculation of the protective strain is made.

### Protection test 7

Protection of garlic bulbs with binucleate *Rhizoctonia* strains from pathogenic *Penicillium* sp. in direct inoculation assay at laboratory scale.
- PLANT SPECIES: garlic
- STRAINS TESTED: Eab-F1, Eab-F7. Eab-S4. Eab-S6
- TIMING: simultaneous direct inoculation
- DATE: May 1999

We have tested 4 binucleate *Rhizoctonia* protective strains (above mentioned) against one pathogenic *Penicillium* sp. strain. We have chosen this fungal strain due to the fact that this pathogenic fungus has been usually reported as a garlic pathogen and furthermore. it was always present in all the garlic bulbs used for this study. causing conspicuous damages. specially in roots. Due to the nature of the pathogen. we decided to apply protective strains with a direct inoculation method. Thus, protective strains were firstly incubated in liquid culture (CM medium: malt extract 5 g, yeast extract 5 g, Glucose 5 g.. 11 distilled water) and after 5 days, fungal biomass was recovered and then. inoculated in culture flasks with solid media (water agar: 15 g Bacto Agar, 11 distilled water) directly over non-sterilized garlic bulbs naturally infected with *Penicillium* sp.

Table shows the results of flasks assay. Presence or absence of protection effect is indicated as estimation of infected vegetal surface (using Butler scale). Two numbers correspond to 2 counts: 1. 10/05/99, 2. 14/05/99. Next to the scale number, a sign + between brackets means increment of biomass. Date of inoculation: 07/05/99.

Garlic protection test

| | Eab-S4 | Eab-S6 | Eab-F1 | Eab-F7 |
|---|---|---|---|---|
| 1 | 0(++) | 0 (+) | 0(++) | 0 |
| 2 | 0(++) | 0(+) | 0(++) | 0 |

After finishing the flasks assays, it can be observed some protection effect against the pathogen. In this sense, direct inoculation of protective strain seems to prevent and limit *Penicillium* effects. Though infection by *Penicillium* is usually located and restricted at the base of the bulb colonizing the young roots, we have observed that infection spreads under wet and warm conditions (as in the case of flask cultures) invading the seedlings and even blocking sometimes germination of the bulbs. In general terms, all the protective *Rhizocronias* tested, prevented the spread of *Penicillium* sp. and in some cases (Eab-F1 and Eab-S7), increasing of vegetal biomass was clearly observed with the presence of protective strains.

### Protection test 8

Protection of sugar beet seedlings with the binucleate *Rhizoctonia* isolates Eab-F1, Eab-F2, Eab-F3. Eab-F5, Eab-S1 and Eab-S7 against the pathogenic strains *Rhizoctonia* Me 8.2, *Rhizoctonia* RAlb and *Fusarium* sp. in simultaneous and consecutive tests in plates.
- PLANT SPECIES: sugar beet
- STRAINS TESTED: Eab-F1, Eab-F2. Eab-F3, Eab-F5, Eab-S1 and Eab-S7
- TIMING: simultaneous, consecutive
- DATE: May-June 1999

6 protective isolates were used to assay protection effects in sugar beet seedlings against selected pathogenic fungi. In this sense, 3 pathogenic fungal strains were used in experimental design; two of them were *Rhizoctonia* strains. including *Rhizoctonia* Me 8.2 (as a pathogenic control) and one *Rhizoctonia* RAlb strain isolated from Albacete. The third pathogen assayed (*Fusarium* sp. strain) was isolated from sugar beet debris in the same locality. Assays were carried out at laboratory scale in petri dishes containing about 20 ml of water-agar (15 g Bacto Agar, 11 distilled water) and performed at room temperature. Seeds were previously surface sterilized (ethanol 70% 2': sodium hypochlorite 5% with Tween 0.005% 15' and at least five washes in distilled water) and pre-germinated in culture chamber at 28 °C in the dark. The pathogenic strains were applied at two moments with respect to the protective strains. simultaneously or 8 days after simultaneous inoculation in order to evaluate the effects on the protection of these two moments.

Tables shows the results of plate assays. Presence or absence of protection effects are indicated as estimation of infected vegetal surface (using Butler scale). Three numbers correspond to 3 counts: 1. 01/06/99. 2. 03/06/99. 3. 06/06/99. Date of simultaneous inoculation: 20/05/99: date of consecutive inoculation: 28/05/99

Sugar beet protection test

| | Me 8.2 simult. | Me 8.2 consec. | RAlb simult. | RAlb consec. | Fus. simult. | Fus. consec. |
|---|---|---|---|---|---|---|
| None | 4-4-5 | | 3-3-4 | | 1-2-3 | |
| Eab-F1 | 4-5-5 | 0-1-1 | 5-5-5 | 0-0-0 | 1-3-3 | 0-0-0 |
| Eab-F2 | 5-5-5 | 2-4-4 | 5-5-5 | 0-1-1 | 3-4-4 | 1-1-1 |
| Eab-F3 | 2-3-5 | 4-4-4 | 5-5-5 | 0-0-0 | 3-4-4 | 2-3-3 |
| Eab-F5 | 4-5-5 | 3-4-4 | 5-5-5 | 4-5-5 | 4-5-5 | 4-4-4 |
| Eab-S1 | 2-3-4 | 3-4-4 | 4-5-5 | 0-0-0 | 2-2-3 | 0-0-0 |
| Eab-S7 | 3-4-5 | 0-0-0 | 5-5-5 | 0-0-0 | 2-3-3 | 1-1-1 |

In general terms, protection effects are increased when consecutive inoculation of first the protective strain and then the pathogenic strain is done. Thus. when pathogenic strain is inoculated time after, protective fungi have the advantage in colonizing the host plant tissues. increasing significantly the protection.

Plate assays shows that the degree and effectiveness of the protection effect depends on the type of pathogenic strain assayed. as well as the protective strain tested. In this way, it has been shown that protection of sugar beet from pathogens is clearly more effective if *Rhizoctonia* Ralb is inoculated as pathogen (excepting for the Eab-F5 strain). Plants inoculated with pathogenic *Rhizoctonia*. Me 8.2 strain. were in general terms less protected (only strains Eab-F1 and Eab-S7 showed a clear protection effect) and this little effect was always seen with consecutive inoculation of the pathogen. On the other hand, plants inoculated with *Fusarium* sp. strain were protected by 4 of the 6 strains (Eab-F1, Eab-F2. Eab-S2 and Eab-S7) but, as in the case of Me 8.2 strain, only in the plates where consecutive inoculation was done.

### Protection test 9

Protection of onion seedlings with the binucleate *Rhizoctonia* isolates Eab-F1, Eab-F3, Eab-F5 and Eab-F6 against the pathogenic strains *Rhizoctonia* Me 8.2, *Rhizoctonia* RAlb and *Fusarium* sp. in simultaneous and consecutive tests in plates.
- PLANT SPECIES: onion
- STRAINS TESTED: Eab-F1, Eab-F3. Eab-F5, Eab-F6
- TIMING: simultaneous. consecutive
- DATE: June 1999

4 protective isolates were used to assay protection effects in onion seedlings against selected pathogenic fungi. In this sense. 3 pathogenic fungal strains were used in experimental design: two of them were *Rhizoctonia* strains, including *Rhizoctonia* Me 8.2 (as a pathogenic control) and one *Rhizocronia* RAlb strain isolated from Albacete. The third pathogen assayed (*Fusarium* sp. strain) was isolated from onion debris in the same locality. Assays were carried out at laboratory scale in petri dishes containing about 20 ml of water-agar (15 g Bacto Agar, 11 distilled water) and performed at room temperature. Onion seeds were previously sterilized and pre-germinated according the following protocol: introduce seeds on a solution of H2O2 30% 1h; then wash (3-4 times at least) with sterile water; dry seeds and put them on petri dishes (40-50 seeds per dish) and incubate inverted at 27 _C in the dark for two days. The pathogenic strains were applied at two moments with respect to the protective strains. simultaneously or 5 days after simultaneous inoculation in order to evaluate the effects on the protection of these two moments.

Tables shows the results of plate assays. Presence or absence of protection effects are indicated as estimation of infected vegetal surface (using Butler scale). Three numbers correspond to 3 counts: 1. 15/06/99. 2. 17/06/99. 3. 19/06/99. Date of simultaneous inoculation: 09/06/99: date of consecutive inoculation: 14/06/99

specially for Eab-F6 strain Onion protection test

| | Me 8.2 simult. | Me 8.2 consec. | RAlb simult. | RAlb consec. | Fus. simult. | Fus. consec. |
|---|---|---|---|---|---|---|
| None | 3-4-5 | | 3-4-5 | | 2-4-5 | |
| Eab-F1 | 0-0-0 | 0-0-1 | 0-1-1 | 0-0-0 | 0-0-0 | 0-0-1 |
| Eab-F3 | 0-0-1 | 0-0-0 | 0-1-1 | 0-0-1 | 0-0-0 | 0-0-0 |
| Eab-F5 | 0-1-2 | 0-0-0 | 0-0-1 | 0-0-0 | 0-0-0 | 0-0-0 |
| Eab-F6 | 0-0-1 | 0-0-0 | 0-0-0 | 0-0-0 | 0-0-0 | 0-0-0 |

Plant and protective strains controls

| | | | |
|---|---|---|---|
| PLANT (-) | 0 | 0 | 0 |
| Eab-F1 | 0 | 1 | 1 |
| Eab-F3 | 0 | 0 | 1 |
| Eab-F5 | 0 | 0 | 0 |
| Eab-F6 | 0 | 0 | 0 |

In general terms, protection effects are observed for all the strains assayed in both consecutive and simultaneous inoculation moments, although protection is more effective when consecutive inoculation is made. Regarding the protective strains. all the binucleate *Rhizoctonias* showed a clear protection effect, specially for Eab-F6 strain.

Laboratory scale plate assays resume.

| | WHEAT PATHOGENS | | | | | | ALFALFA PATHOGENS | | | | | |
|---|---|---|---|---|---|---|---|---|---|---|---|---|
| S t r a i n s | Me 8.2 | | Fus. p5 | | RAlb | | Me 8.2 | | Ralb | | Fus. p5 | |
| | S | C | S | C | S | C | S | C | S | C | S | C |
| Eab -S1 | ++ | + | ++ | ++ | ++ | ++ | + | ++ | - | ++ | + | ++ |
| Eab -S6 | ++ | ++ | + | ++ | ++ | ++ | | | | | | |
| Eab - F2 | + | + | - | ++ | - | ++ | | | | | | |
| Eab -F5 | ++ | + | - | ++ | + | ++ | | | | | | |
| Eab - F6 | + | ++ | + | ++ | - | + | | | | | | |
| Eab -S4 | ++ | ++ | - | ++ | - | + | | | | | | |
| Eab -S7 | + | + | - | ++ | - | - | - | + | - | ++ | + | ++ |
| Eab-F1 | - | ++ | - | ++ | - | - | | | | | | |
| Eab -aB | | | | | | | | | | | | |
| Eab -F7 | + | ++ | + | ++ | - | - | | | | | | |
| (-): No protection S: Simultaneous inoculation | | | | | | | | | | | | |
| (+): Protection C: Consecutive inoculation | | | | | | | | | | | | |
| (++): Good protection ID: Direct inoculation | | | | | | | | | | | | |

| | RAPE PATHOGENS | | | | | | GA RLI C | CARROT PATHOGENS | | | |
|---|---|---|---|---|---|---|---|---|---|---|---|
| S t r a i n s | Me 8.2 | | Altern. p13 | | RAlb | | *Peni cilli um* | Me 8.2 | | RAlb | |
| | S | C | S | C | S | C | I.D. | S | C | S | C |
| Eab-S1 | - | ++ | + | ++ | - | + | | | | | |
| Eab - S6 | + | + | ++ | + | + | ++ | ++ | + | + | - | ++ |
| Eab - F2 | | | | | | | | - | + | | |
| Eab -F5 | | | | | | | | | | | |
| Eab-F6 | - | ++ | + | + | + | ++ | | | | | |
| Eab-S4 | - | + | + | + | - | ++ | ++ | | | | |
| Eab-S7 | - | + | + | ++ | - | ++ | | | | | |
| Eab-F1 | - | ++ | ++ | ++ | - | ++ | ++ | | | | |
| Eab -aB | | | | | | | | - | + | + | + |
| Eab - F7 | | | | | | | + | | | | |
| (-): No protection S: Simultaneous inoculation | | | | | | | | | | | |
| (+): Protection C: Consecutive inoculation | | | | | | | | | | | |
| (++): Good protection ID: Direct inoculation | | | | | | | | | | | |

| | TOMATO PATHOG ENS | | GRASS PATHOG ENS | | ONION PATHOGENS | | | | | | PINE PATHOGENS | | | |
|---|---|---|---|---|---|---|---|---|---|---|---|---|---|---|
| S t r a i n s | Me 8.2 | | ME 8.2 | | Me 8.2 | | Fus. p10 | | RAlb | | pin | | Me 8.2 | |
| | S | C | S | C | S | C | S | C | S | C | S | C | S | C |
| Eab -S1 | | | | | | | | | | | | | | |
| Eab -S6 | | | | | | | | | | | | | | |
| Eab - F2 | - | ++ | + | ++ | | | | | | | - | ++ | + | ++ |
| Eab -F5 | | | | | + | ++ | ++ | ++ | + | ++ | | | | |
| Eab - F6 | | | | | + | ++ | ++ | ++ | ++ | ++ | | | | |
| Eab -S4 | | | | | | | | | | | | | | |
| Eab -S7 | | | | | | | | | | | | | | |
| Eab -F1 | | | | | ++ | + | ++ | + | + | ++ | | | | |
| Eab -aB | - | ++ | - | ++ | | | | | | | + | ++ | + | ++ |
| Eab -F3 | | | | | + | ++ | ++ | ++ | + | + | | | | |
| Eab - F7 | | | | | | | | | | | | | | |
| (-): No protection S: Simultaneous inoculation | | | | | | | | | | | | | | |
| (+): Protection C: Consecutive inoculation | | | | | | | | | | | | | | |
| (++): Good protection ID: Direct inoculation | | | | | | | | | | | | | | |

### REFERENCES

Boysen. M., Borja, M., del Moral, C., Salazar, O. and Rubio. V. (1996) Identification at strain level of *Rhizoctonia solani* AG4 isolates by direct sequence of asymmetric PCR products of the ITS regions Curr. Genet.. 29. 174-181.

Cubeta. M. A., Echandi, E., Abernethy, T. and Vilgalys. R. (1991) Characterization of anastomosis groups of binucleate *Rhizoctonia* species using restriction analysis of an amplified ribosomal RNA gene Phytopathology, 81, 1395-1400.

Duncan. S., Barton. J. E. and O'Brien, P. A. (1993) Analysis of variation in isolates of *Rhizoctonia solani* by random amplified polymorphic DNA assay Mycol. Res., 97, 1075-1082.

Felsenstein, J. (1993) PHYLIP manual version 3.5. Washington. University of Washington.

Gardes. M.. and Bruns, T. D. (1993) ITS primers with enhanced specificity for basidiomycetes - application to the identification of mycorrhizae and rusts Molec. Ecol. 2:113-118

Harris, A. R., Schisler. D. A., Neate, S., and Ryder, M. H. 1993. Suppression of damping off caused by *Rhizoctonia solani* and growth promotion in bedding plants by binucleate *Rhizoctonia* spp. Soil. Biol. Biochem. 25:263-268.

Herr, L. J. 1995. Biological control of *Rhizoctonia solani* by binucleate *Rhizoctonia* spp. and hypovirulent R. *solani* agents. Crop Protection 14:179-186.

Jabaji-Hare, S. H., Meller. Y.. Gill. S. and Charest. P. M. (1990) Investigation of genetic relatedness among anastomosis groups of *Rhizoctonia solani* using cloned DNA probes Can. J. Plant Pathol., 12, 393-404.

Julián, M. C., Dullemans, A. M.. Silfhout, C.. and Keijer, J. 1997. Nuclear behavior in homokaryotic and heterokaryotic fruiting of *Thanatephorus cucumeris* (*Rhizoctonia solani*) anastomosis group 1, subgroup IC. Mycologia 89:361-374.

Kataria, H. R. and Gisi, U. (1989) Recovery from soil and sensitivity to fungicide of *Rhizoctonia solani* Mycol. Res.. 92, 458-462.

Keijer, J., Houterman, P. M., Dullemans, A. M. and Korsman, M. G. (1996) Heterogeneity in electrophoretic karyotype within and between anastomosis groups of *Rhizoctonia solani* Mycol. Res., 100, 789-797.

Kimura. M. (1980) A simple method for estimating evolutionary rates through comparative studies of nucleotide sequences. J. Mol. Evol. 16. 111-120.

Kuninaga, S. and Yokosawa, R. (1980) A comparison of DNA base compositions among anastomosis groups in *Rhizoctonia solani* Kühn Ann. Phytopath. Soc. Japan, 46, 150-158.

Kuninaga, S. and Yokosawa, R. (1982) DNA base sequence homology in *Rhizoctonia solani* Kühn II. Genetic relatedness within anastomosis group 2 Ann. Phytopath. Soc. Japan, 48, 668-673.

Kuninaga. S. and Yokosawa. R. (1982) DNA base sequence homology in *Rhizoctonia solani* Kühn. I. Genetic relatedness within anastomosis group 1 Annu. Phytopath. Soc. Japan, 48, 659-667.

Kuninaga, S. and Yokosawa, R. (1984) DNA base sequence homology in *Rhizoctonia solani* Kühn. IV. Genetic relatedness within AG-4 Annals. Phytopathol. Soc. Japan. 50, 322-330.

Kuninaga, S. and Yokosawa. R. (1985) DNA base sequence homology in *Rhizoctonia solani* Kühn. V. Genetic relatedness within AG-6 Annu. Phytopathol. Soc. Japan. 50, 346-352.

Kuninaga, S. and Yokosawa. R. (1985) DNA base sequence homology in *Rhizoctonia solani* Kühn. VI. Genetic relatedness among seven anastomosis groups Annals Phytopathological Society of Japan, 51, 127-132.

Kuninaga, S. and Yokosawa. R. (1985) DNA base sequence homology in *Rhizoctonia solani* Kühn. VII. Genetic relatedness between AG-BI and other anastomosis groups Annu. Phytopathol. Soc. Japan. 51, 133-138.

Poromarto, S. H., Nelson. B. D., and Freeman. T. P. 1998. Association of binucleate *Rhizoctonia* with soybean and mechanism of biocontrol of *Rhizoctonia solani.* Phytopathology 88:1056-1067

Saitou, N. and M.. Nei. (1987) The neighbour-joining method: a new method for reconstructing phylogenetic trees Molecular Biology and Evolution. 4. 406-425.

Sanger, F., Nicklen. S. and Coulson, A. R. (1977) DNA sequencing with chain-termination inhibitors Proc. Natl. Acad. Sci. USA, 74. 5463-5467.

Sneh, B., Zeidan, M., Ichielevich-Auster, M.. Barash, I. and Koltin, Y. (1986) Increased growth responses induced by a nonpathogenic *Rhizoctonia solani* Can. J. Bot.. 64, 2372-2378.

Sneh, B., Jabaji-Hare, S., Neate. S., and Dijst, G.. eds. 1996. *Rhizoctonia* Species: Taxonomy, Molecular Biology, Ecology, Pathology and Disease Control. Kluwer Academic Publishers, Dordrecht, The Netherlands.

Sneh, B. 1998. Use of non-pathogenic or hypovirulent strains to protect plants against closely related fungal pathogens, Biotechnol. Adv. 16:1-23.

Sneh, B., and Ichielevich-Auster, M. 1998. Induced resistance of cucumber seedlings caused by some non-pathogenic *Rhizoctonia* (np-R) isolates. Phytoparasitica 26:27-38.

Swofford, D. L. (1991) PAUP: Phylogenetic Analysis Using Parsimony, version 3.1.1. Champaign, IL., Illinois Natural History Survey.

Thompson, J. D., Higgins, D. G. and Gibson, T. J. (1994) CLUSTAL W: improving the sensitivity of progressive multiple sequence alignment through sequence weighting, positions-specific gap penalties and weight matrix choice Nucl. Acids Res.. 22, 4673-4680.

Vilgalys, R. and Gonzalez. D. (1990) Ribosomal DNA restriction fragment length polymorphisms in *Rhizoctonia solani* Phytopathology, 80, 151-158.

White, T. J., Bruns, T. D., Lee, S., and Taylor, J. W. (1990) Amplification and direct sequencing of fungal ribosomal RNA for phylogenetics pages 315-322 in: PCR protocols: A guide to Methods and Applications. M. A. Innis. D. H. Gelfand. J. J. Sninsky, T. J. White, eds. Academic Press. San Diego.

## Claims

1. A method for the protection of plants from pathogenic fungi which comprises biocontrol by the use of a binucleate *Rhizoctonia* strain selected by molecular detection of an ITS ribosomal sequence comprising at least one of SEQ ID NO: 7, SEQ ID NO: 8, SEQ ID NO: 9, SEQ ID NO: 10, SEQ ID NO: 11, SEQ ID NO: 12, SEQ ID NO: 13, and SEQ ID NO: 14.

2. A method according to claim 1, where the ITS ribosomal sequence comprises SEQ ID: 9.

3. A method according to claim 1 where the plant is selected from tomato, pepper, cucumber, lettuce, radish, parsley and other herbs, bean, potato, sugar beet, carrot, garlic, onions, alfalfa, grass, wheat, rape, pine and other trees, as well as flowers.

4. A method according to claim 1, where the plant is a field crop, container-grown crop, water bed crop, vegetable or fruit crop, ornamental crop, nursery crop, garden crop, forest crop, or greenhouse crop.

5. A method according to claim 1 wherein the binucleate *Rhizoctonia* strain is selected using the ITS 1 data.

6. A method according to claim 5, wherein the strain has an ITS1 sequence which is at least 90% homologous with one of SEQ ID NO:15, SEQ ID NO:16, SEQ ID NO:17, SEQ ID NO:18, SEQ ID NO:19, SEQ ID NO:20, SEQ ID NO:21, SEQ ID NO:22, SEQ ID NO:23, SEQ ID NO:24 or SEQ ID NO:25.

7. A method according to claim 6, wherein the strain is selected from *Rhizoctonia* sp. CECT 20320, *Rhizoctonia* sp. CECT 20321, *Rhizoctonia* sp. CECT 20322, *Rhizoctonia* sp. CECT 20323, *Rhizoctonia* sp. CECT 20324, *Rhizoctonia* sp. ATCC 64643, and *Rhizoctonia* sp. CECT 2815.

8. A binucleate *Rhizoctonia* strain which has an ITS1 sequence which includes a fragment of at least 25 nucleic acid bases which is present in any of one of SEQ ID NO:15, SEQ ID NO:16, SEQ ID NO:17, SEQ ID NO:18, SEQ ID NO:19, SEQ ID NO:20, SEQ ID NO:21, SEQ ID NO:22, SEQ ID NO:23, SEQ ID NO:24, SEQ ID NO:25, SEQ ID NO:26, SEQ ID NO:27, or SEQ ID NO:28.

9. A concentrate for use in plant protection, containing viable material of a binucleate *Rhizoctonia* strain according to claim 8.

10. A method for the protection of plants from pathogenic fungi which comprises biocontrol by the use of a binucleate *Rhizactonia* strain according to claim 8.

11. A primer for use in identifying binucleate *Rhizoctonia* strains of use in biocontrol, the target sequence for the primer being selected from SEQ ID NO: 7, SEQ ID NO: 8, SEQ ID NO: 9, SEQ ID NO: 10, SEQ ID NO: 11, SEQ ID NO: 12, SEQ ID NO: 13, and SEQ ID NO: 14.

## Patentansprüche

1. Verfahren zum Schutz von Pflanzen vor pathogenen Fungi, das die Biokontrolle durch die Verwendung eines binukleären *Rhizoctonia*-Stammes umfasst, der mittels Molekülnachweis einer ribosomalen ITS-Sequenz ausgewählt ist, umfassend mindestens eine von SEQ ID NO: 7, SEQ ID NO: 8, SEQ ID NO: 9, SEQ ID NO: 10, SEQ ID NO: 11, SEQ ID NO: 12, SEQ ID NO: 13, und SEQ ID NO: 14.

2. Verfahren nach Anspruch 1, worin die ribosomale ITS-Sequenz SEQ ID NO: 9 umfasst.

3. Verfahren nach Anspruch 1, worin die Pflanze aus Tomaten, Paprika, Gurken, Kopfsalat, Radieschen, Petersilie und anderen Kräutern, Bohnen, Kartoffeln, Zuckerrüben, Karotten, Knoblauch, Zwiebeln, Alfalfa, Gras, Weizen, Raps, Kiefern und anderen Bäumen wie auch Blumen ausgewählt ist.

4. Verfahren nach Anspruch 1, worin die Pflanze eine Feldkultur, Containerkultur, Hydrokultur, Gemüse- oder Obstkultur, Zierpflanzenkultur, Anzuchtkultur, Gartenkultur, Waldkultur oder Gewächshauskultur ist.

5. Verfahren nach Anspruch 1, worin der binukleäre *Rhizoctonia*-Stamm unter Verwendung der ITS1-Daten ausgewählt wird.

6. Verfahren nach Anspruch 5, worin der Stamm eine ITSI-Sequenz aufweist, die mit einer von SEQ ID NO: 15, SEQ ID NO: 16, SEQ ID NO: 17, SEQ ID NO: 18, SEQ ID NO: 19, SEQ ID NO: 20, SEQ ID NO: 21, SEQ ID NO: 22, SEQ ID NO: 23, SEQ ID NO: 24 oder SEQ ID NO: 25 mindestens 90% homolog ist.

7. Verfahren nach Anspruch 6, worin der Stamm aus *Rhizoctonia* sp. CECT 20320, *Rhizoctonia* sp. CECT 20321, *Rhizoctonia* sp. CECT 20322, *Rhizoctonia* sp. CECT 20323, *Rhizoctonia* sp. CECT 20324, *Rhizoctonia* sp. ATCC 64643 und *Rhizoctonia* sp. CECT 2815 ausgewählt ist.

8. Binukleärer *Rhizoctonia*-Stamm, der eine ITSI-Sequenz aufweist, die ein Fragment von mindestens 25 Nukleinsäurebasen einschließt, das in jedweder einer von SEQ ID NO: 15, SEQ ID NO: 16, SEQ ID NO: 17, SEQ ID NO: 18, SEQ ID NO: 19, SEQ ID NO: 20, SEQ ID NO: 21, SEQ ID NO: 22, SEQ ID NO: 23, SEQ ID NO: 24, SEQ ID NO: 25, SEQ ID NO: 26, SEQ ID NO: 27 oder SEQ ID NO: 28 vorhanden ist.

9. Konzentrat zur Verwendung beim Pflanzenschutz, enthaltend lebensfähiges Material von einem binukleären *Rhizoctonia*-Stamm nach Anspruch 8.

10. Verfahren zum Schutz von Pflanzen vor pathogenen Fungi, das durch die Verwendung eines binukleären *Rhizoctonia*-Stammes nach Anspruch 8 Biokontrolle umfasst.

11. Primer zur Verwendung bei der Identifikation binukleärer *Rhizoctonia*-Stämme zur Verwendung bei der Biokontrolle, wobei die Zielsequenz für den Primer aus SEQ ID NO: 7, SEQ ID NO: 8, SEQ ID NO: 9, SEQ ID NO: 10, SEQ ID NO: 11, SEQ ID NO: 12, SEQ ID NO: 13 und SEQ ID NO: 14 ausgewählt ist.

## Revendications

1. Méthode de protection de végétaux contre des champignons pathogènes qui comprend le biocontrôle par l'utilisation d'une souche de *Rhizoctonia* binucléé, sélectionnée par la détection moléculaire d'une séquence ribosomique ITS comprenant au moins l'une de la SEQ ID NO: 7, de la SEQ ID NO: 8, de la SEQ ID NO: 9, de la SEQ ID NO: 10, de la SEQ ID NO: 11, de la SEQ ID NO: 12, de la SEQ ID NO: 13 et de la SEQ ID NO: 14.

2. Méthode selon la revendication 1, où la séquence ribosomique ITS comprend la SEQ ID NO: 9.

3. Méthode selon la revendication 1, où le végétal est sélectionné parmi la tomate, le poivron, le concombre, la laitue, le radis, le persil et d'autres herbes, le haricot, la pomme de terre, la betterave sucrière, la carotte, l'ail, les oignons, la luzerne, l'herbe, le blé, le colza, le pin et d'autres arbres ainsi que des fleurs.

4. Méthode selon la revendication 1, où le végétal est une culture en champ, une culture cultivée en conteneur, une culture inondée, une culture de légume ou de fruit, une culture d'ornement, une culture en pépinière, une culture de jardin, une culture forestière ou une culture en serre.

5. Méthode selon la revendication 1, dans laquelle la souche de *Rhizoctonia* binucléé est sélectionnée en utilisant les données ITS 1.

6. Méthode selon la revendication 5, dans laquelle la souche a une séquence ITS 1 qui est homologue à au moins 90% avec l'une de la SEQ ID NO: 15, de la SEQ ID NO: 16, de la SEQ ID NO: 17, de la SEQ ID NO: 18, de la SEQ ID NO: 19, de la SEQ ID NO: 20, de la SEQ ID NO: 21, de la SEQ ID NO: 22, de la SEQ ID NO: 23, de la SEQ ID NO: 24 ou de la SEQ ID NO: 25

7. Méthode selon la revendication 6, dans laquelle la souche est sélectionnée parmi *Rhizoctonia* sp. CECT 20320, *Rhizoctonia* sp. CECT 20321, *Rhizoctonia* sp. CECT 20322, *Rhizoctonia* sp. CECT 20323, *Rhizoctonia* sp. CECT 20324, *Rhizoctonia* sp. ATCC 64643 et *Rhizoctonia* sp. CECT 2815.

8. Souche de *Rhizoctonia* binucléé qui a une séquence ITS1 qui comprend un fragment d'au moins 25 bases d'acide nucléique qui est présent dans l'une quelconque des SEQ ID NO: 15, SEQ ID NO: 16, SEQ ID NO: 17, SEQ ID NO: 18, SEQ ID NO: 19, SEQ ID NO: 20, SEQ ID NO: 21, SEQ ID NO: 22, SEQ ID NO: 23, SEQ ID NO: 24, SEQ ID NO: 25, SEQ ID NO: 26, SEQ ID NO: 27 ou SEQ ID NO: 28.

9. Concentré à utiliser dans la protection de végétaux, contenant une matière viable d'une souche de *Rhizoctonia* binucléé selon la revendication 8.

10. Méthode de protection de végétaux contre des champignons pathogènes qui comprend le biocontrôle par l'utilisation d'une souche de *Rhizoctonia* binucléé selon la revendication 8.

11. Amorce à utiliser pour identifier des souches de *Rhizoctonia* binucléé utiles dans le biocontrôle, la séquence cible de l'amorce étant sélectionnée parmi la SEQ ID NO: 7, la SEQ ID NO: 8, la SEQ ID NO: 9, la SEQ ID NO: 10, la SEQ ID NO: 11, la SEQ ID NO: 12, la SEQ ID NO: 13 et la SEQ ID NO: 14.
